(19) Europäisches Patentamt
European Patent Office
Office européen des brevets

(11) EP 4 632 836 A1

(12) EUROPEAN PATENT APPLICATION

(43) Date of publication:
**15.10.2025 Bulletin 2025/42**

(21) Application number: **25167185.5**

(22) Date of filing: **28.03.2025**

(51) International Patent Classification (IPC):
***H01M 4/137** (2010.01)* ***H01M 4/60** (2006.01)*
***H01M 4/62** (2006.01)* ***H01M 10/0525** (2010.01)*
***H01M 10/054** (2010.01)*

(52) Cooperative Patent Classification (CPC):
**H01M 4/60; H01M 4/137; H01M 4/608; H01M 4/625; H01M 10/0525; H01M 10/054**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2024 EP 24167910**
**29.03.2024 PCT/US2024/022179**

(71) Applicant: **Massachusetts Institute of Technology Cambridge, MA 02139 (US)**

(72) Inventors:
- **DINCA, Mircea**
  **Belmont, Massachusetts 02478 (US)**
- **CHEN, Tianyang**
  **Palo Alto, California 02139 (US)**
- **WANG, Jiande**
  **Cambridge, Massachusetts 02142 (US)**

(74) Representative: **Hoffmann Eitle Patent- und Rechtsanwälte PartmbB Arabellastraße 30 81925 München (DE)**

# (54) BATTERIES FOR OPERATION ACROSS TEMPERATURES AND RELATED METHODS

(57) Electrochemical cells (e.g., batteries) that operate across extreme temperatures (e.g., greater than or equal to 50 °C and/or less than or equal to 0 °C), and related methods, are generally described.

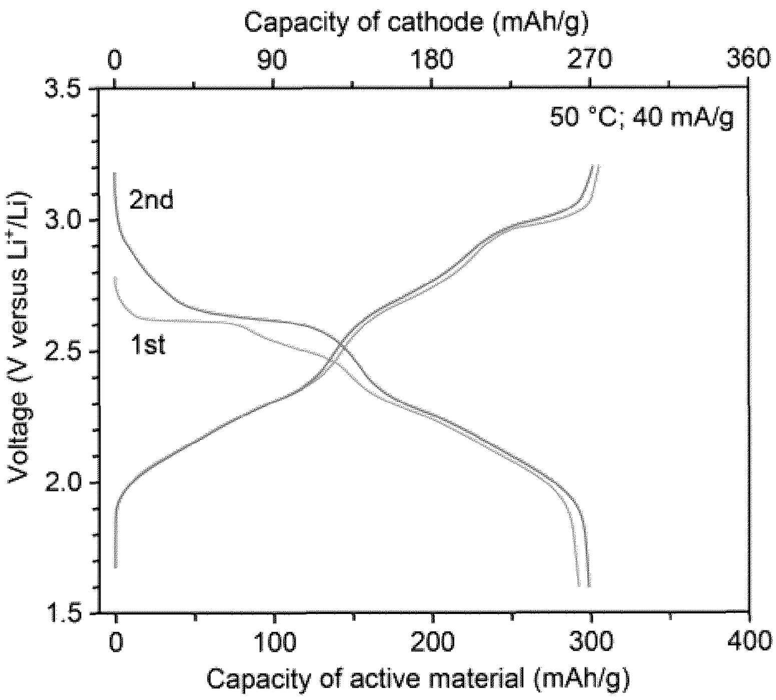


*FIG. 4*

EP 4 632 836 A1

## Description

### RELATED APPLICATIONS

This application claims priority to International Patent Application No. PCT/US2024/022179, filed March 29, 2024, and entitled "Batteries for Operation Across Temperatures and Related Methods," and European Patent Application No. 24167910.9, filed March 29, 2024, and entitled "Batteries for Operation Across Temperatures and Related Methods," each of which is incorporated herein by reference in its entirety for all purposes.

### TECHNICAL FIELD

Batteries that operate across extreme temperatures, and related methods, are generally described.

### BACKGROUND

Lithium-ion batteries (LIBs), at the forefront of rechargeable energy storage technologies, have shown great potential in a large spectrum of consumer and infrastructure applications. For instance, LIBs have dominated the markets of portable consumer electronics and electric vehicles (EVs) as the core energy storage component. Although a wide range of applications function at or near room temperature, demand for LIBs to endure and perform reliably in extreme thermal conditions (e.g., above 50 °C and below 0 °C) is increasing. For example, LIBs for EVs need to deliver consistent performance in both sub-zero (e.g., -20 °C) and hot desert (e.g., 50 °C) conditions. Moreover, specialized applications, such as subsurface exploration and space missions, require stable energy storage under even more extreme conditions. However, conventional cathode materials face challenges under such extreme thermal conditions. For example, layered transition metal oxides degrade due to metal dissolution and oxygen evolution above 60°C, while $LiFePO_4$ (LFP) exhibits sluggish charge transport and $Li^+$ diffusion at sub-zero temperatures. Redox-active organic electrode materials (OEMs) present an alternative due to their compositional diversity and tunability. While conventional OEMs have shown potential as LIB cathodes, studies have primarily focused on advanced electrolytes, with limited attention to charge transport and $Li^+$ diffusion in OEMs. Moreover, OEM-based LIBs with stable high-temperature performance (> 60 °C) remain unexplored due to the dissolution of active materials in high-content cathodes (> 70 wt.%).

Accordingly, improved articles, systems, and methods related to batteries that operate in extreme thermal conditions are needed.

### SUMMARY

Electrochemical cells (e.g., batteries) that operate across extreme temperatures (e.g., greater than or equal to 50 °C and/or less than or equal to 0 °C), and related methods, are generally described.

According to some embodiments, a battery is described, the battery comprising an electrode comprising an electrochemically active material comprising a *bis*-tetraamino-benzoquinone molecule and/or a dimer, tautomer, oligomer, polymer, and/or derivative thereof. In some embodiments, the battery is configured to operate at a temperature of an environment of the battery greater than or equal to 50 °C. In certain embodiments, at the temperature of the environment of the battery, the battery has a discharge capacity greater than or equal to 200 mAh per gram of the electrode when current density is set at a value of at least 50 mA per gram of the electrochemically active material in the electrode.

In certain embodiments, a battery is described, the battery comprising an electrode comprising an electrochemically active material comprising a bis-tetraamino-benzoquinone molecule and/or a dimer, tautomer, oligomer, polymer, and/or derivative thereof. In some embodiments, the battery is configured to operate at a temperature of an environment of the battery greater than or equal to 50 °C. In certain embodiments, at the temperature of the environment of the battery, the battery is capable of being cycled at least 100 times such that a discharge capacity of the battery decreases by less than or equal to 30% after the battery is cycled the at least 100 times.

According to some embodiments, a method of operating a battery is described. In certain embodiments, the method comprises discharging the battery, wherein the battery comprises an electrode comprising an electrochemically active material comprising a bis-tetraamino-benzoquinone molecule and/or a dimer, tautomer, oligomer, polymer, and/or derivative thereof. In some embodiments, the discharging occurs at a temperature of an environment of the battery greater than or equal to 50 °C. In certain embodiments, at the temperature of the environment of the battery, the battery has a discharge capacity greater than or equal to 200 mAh per gram of the electrode when current density is set at a value of at least 50 mA per gram of the electrochemically active material in the electrode.

Other advantages and novel features of the present disclosure will become apparent from the following detailed description of various non-limiting embodiments of the disclosure when considered in conjunction with the accompanying figures. In cases where the present specification and a document incorporated by reference include conflicting and/or

inconsistent disclosure, the present specification shall control.

## BRIEF DESCRIPTION OF THE DRAWINGS

Non-limiting embodiments of the present disclosure will be described by way of example with reference to the accompanying figures, which are schematic and are not intended to be drawn to scale unless otherwise indicated. In the figures, each identical or nearly identical component illustrated is typically represented by a single numeral. For purposes of clarity, not every component is labeled in every figure, nor is every component of each embodiment of the disclosure shown where illustration is not necessary to allow those of ordinary skill in the art to understand the disclosure. In the figures:

FIG. 1 shows a cross-sectional schematic diagram of an electrochemical cell, in accordance with certain embodiments.
FIG. 2A shows an exemplary chemical structure of a *bis*-tetraamino-benzoquinone molecule, in accordance with certain embodiments.
FIG. 2B shows an exemplary chemical structure of derivatives of a *bis*-tetraamino-benzoquinone molecule, in accordance with certain embodiments.
FIG. 3 shows a schematic diagram of a two-dimensional layered crystal structure of a *bis*-tetraamino-benzoquinone molecule with close interlayer spacing of 3.14 Å, in accordance with certain embodiments.
FIG. 4 shows a charge-discharge voltage profile of a *bis*-tetraamino-benzoquinone-lithium (Li) cell at 50 °C and a current density of 40 mA/g, in accordance with certain embodiments.
FIG. 5 shows a constant current cycling study of a *bis*-tetraamino-benzoquinone-Li cell at 50 °C and a current density of 40 mA/g, in accordance with certain embodiments.
FIG. 6 shows a constant current cycling study of two *bis*-tetraamino-benzoquinone-Li cells at 50 °C and a current density of 200 mA/g, in accordance with certain embodiments.
FIG. 7 shows a constant current cycling study of a *bis*-tetraamino-benzoquinone-Li cell at 80°C and a current density of 200 mA/g, in accordance with certain embodiments.
FIG. 8 shows a constant current cycling study of a *bis*-tetraamino-benzoquinone-Li cell at a current density of 200 mA/g wherein the external temperature was raised to from 60°C to 70 °C after ~360 cycles, in accordance with certain embodiments.
FIG. 9 shows a constant current cycling study of a *bis*-tetraamino-benzoquinone-Li cell at 70 °C and a current density of 25 mA/g, in accordance with certain embodiments.
FIG. 10 shows a constant current cycling study of two *bis*-tetraamino-benzoquinone-Li cells at a current density of 200 mA/g wherein the external temperature underwent sequential changes, in accordance with certain embodiments.
FIG. 11 shows a constant current cycling study of two *bis*-tetraamino-benzoquinone-Li cells at 0 °C and a current density of 200 mA/g, in accordance with certain embodiments.
FIG. 12 shows a constant current cycling study of two *bis*-tetraamino-benzoquinone-Li cells at -10 °C and a current density of 200 mA/g, in accordance with certain embodiments.
FIG. 13 shows a constant current cycling study of a *bis*-tetraamino-benzoquinone-Li cell at -20 °C and a current density of 25 mA/g, in accordance with certain embodiments.
FIG. 14 shows a constant current cycling study of a *bis*-tetraamino-benzoquinone-Li cell at -20 °C and a current density of 200 mA/g, in accordance with certain embodiments.
FIG. 15A shows a comparison of capacity losses per day based on continuous cycling studies for cells containing a *bis*-tetraamino-benzoquinone-containing cathode and cells containing conventional inorganic material cathodes, in accordance with certain embodiments.
FIG. 15B shows a comparison of energy densities under a variety of temperatures for cells containing a *bis*-tetraamino-benzoquinone-containing cathode and cells containing conventional inorganic material cathodes, in accordance with certain embodiments.
FIG. 16 shows a charge-discharge voltage profile of a *bis*-tetraamino-benzoquinone-Li cell at five different temperatures and a current density of 25 mA/g, in accordance with certain embodiments.
FIG. 17 shows the active material utilization of a *bis*-tetraamino-benzoquinone-Li cell at five different temperatures at different current densities, in accordance with certain embodiments.
FIG. 18 shows the rate performance of a *bis*-tetraamino-benzoquinone-Li cell at five different temperatures, in accordance with certain embodiments.
FIG. 19 shows the cycling performance of a *bis*-tetraamino-benzoquinone-Li cell at five different temperatures, in accordance with certain embodiments.
FIG. 20 shows a charge-discharge voltage profile comparison of *bis*-tetraamino-benzoquinone-Li cells using a *bis*-tetraamino-benzoquinone-based cathode with either 5% carbon black (CB) or 20% CB, in accordance with certain

embodiments.

FIG. 21 shows the rate performance of a *bis*-tetraamino-benzoquinone-Li cell using a *bis*-tetraamino-benzoquinone-based cathode with 20% CB, in accordance with certain embodiments.

FIG. 22 shows the cycling performance of *bis*-tetraamino-benzoquinone-Li cells using a *bis*-tetraamino-benzoquinone-based cathode with either 5% CB or 20% CB, in accordance with certain embodiments.

FIG. 23 shows the cycling performance of a *bis*-tetraamino-benzoquinone-Li cell in 1 M lithium bis(trifluoromethane) sulfonimide (LiTFSI) tetraglyme electrolyte at 70 °C and a current density of 200 mA/g, in accordance with certain embodiments.

FIG. 24A shows a molecular structure and electrochemical lithiation reaction of bis-tetraaminobenzoquinone (TAQ), in accordance with certain embodiments.

FIG. 24B shows *in-operando* powder X-ray diffraction (PXRD) measurements of a TAQ||Li cell during the first two discharging/charging cycles under a current density of 0.05 A/g, in accordance with certain embodiments.

FIG. 24C shows photographs of TAQ electrodes at the pristine state (top) and discharged state (bottom) that have been soaked in an electrolyte under different temperatures for 24 hours, in accordance with certain embodiments.

FIG. 24D shows temperature dependence of the electrical conductivity of TAQ, $Li_1$TAQ, $Li_2$TAQ, and $Li_3$TAQ, in accordance with certain embodiments.

FIG. 25 shows long-term cycling stability of TAQ||Li cells at 0.2 A $g^{-1}$ under different temperatures, in accordance with certain embodiments.

FIG. 26A shows design strategies and comparisons between molecular structures of TAQ and conventional organic electrode materials, in accordance with certain embodiments.

FIG. 26B shows solubility of TAQ and $Li_4$TAQ compared to conventional organic electrode materials, in accordance with certain embodiments.

FIG. 26C shows the cycling performance of a TAQ electrode in different electrolytes, in accordance with certain embodiments.

FIG. 26D shows a charge-discharge voltage profile of TAQ compared to conventional organic cathode materials in a tetraglyme electrolyte under 70°C, in accordance with certain embodiments.

FIG. 26E shows the cycling stability of TAQ at 100 °C in a 1M LiTFSI tetraglyme electrolyte, in accordance with certain embodiments.

FIG. 27A shows the rate performance of TAQ||Li cells at 25°C and -20°C with different CB contents, in accordance with certain embodiments.

FIG. 27B shows the contribution of $Li^+$ diffusion and electrical conductivity limitations to the overall capacity of TAQ||Li cells at various current densities, in accordance with certain embodiments.

FIG. 27C shows a galvanostatic intermittent titration technique (GITT) Li-ion diffusion coefficient analysis, in accordance with certain embodiments.

FIG. 28A shows a GITT potential response during charge, in accordance with certain embodiments.

FIG. 28B shows a GITT potential response during discharge, in accordance with certain embodiments.

FIG. 29A shows experimental and calculated PXRD patterns of TAQ, in accordance with certain embodiments.

FIG. 29B shows a scanning electron microscopy (SEM) image of TAQ, in accordance with certain embodiments.

FIG. 29C shows a cryogenic-electron microscopy (cryo-EM) image of TAQ crystals, in accordance with certain embodiments.

FIGS. 30A-30D show high-magnification cryo-EM images of TAQ, in accordance with certain embodiments.

FIG. 31 shows photographs of TAQ electrodes soaked at different temperatures ranging from -20 °C to 70 °C for 30 days, in accordance with certain embodiments.

FIG. 32 shows PXRD pattens of TAQ and electrochemically lithiated TAQ from $Li_1$-TAQ to $Li_3$-TAQ, in accordance with certain embodiments.

FIG. 33 shows the variable temperature electrical conductivity of TAQ and lithiated TAQ materials, in accordance with certain embodiments.

## DETAILED DESCRIPTION

Described herein are electrochemically active materials having advantageous properties, electrodes, and electrochemical cells (e.g., batteries) that operate across a range of extreme temperatures (e.g., greater than or equal to 50 °C and/or less than or equal to 0 °C) with surprisingly desirable performance, and related methods. In one aspect, an electrochemically active material can primarily or entirely include an organic material that has abundant redox-active sites making the electrochemically active material a suitable high-capacity material. For example, the electrochemically active material can include a substantially low amount (e.g., less than or equal to 1 wt.% versus a total weight of the electrochemically active material) of metal atoms (e.g., nickel, cobalt, manganese, and the like). As compared to conventional organic electrochemically active materials, the electrochemically active materials described herein exhibit

enhanced charge transport, ion transport, and/or charge storage.

The electrochemically active material may, in certain embodiments, comprise a fused aromatic system. For example, in some embodiments, the electrochemically active material is or comprises a *bis*-tetraaminobenzoquinone molecule and/or a dimer, tautomer, oligomer, polymer, and/or derivative thereof. In some embodiments, the fused rings in the backbone of the fused aromatic system are advantageously co-planar and $\pi$-conjugated, which provides high structural stability while also allowing for intermolecular $\pi$-$\pi$ stacking interactions. In accordance with certain embodiments, the fused aromatic system comprises a high density of heteroatomic functionalities (e.g., imines, quinones, and the like) that serve both as redox-active sites and as hydrogen bonding donors and/or acceptors. The in-plane electronic conjugation, inter-plane $\pi$-$\pi$ stacking, and strong intra-plane hydrogen bonding interactions advantageously provide a highly insoluble organic solid with high bulk electrical conductivity (e.g., greater than or equal to $10^{-6}$ S/cm). As described herein in greater detail, the high bulk electrical conductivity unexpectedly facilities low charge-transfer resistance across a surprising range of temperatures including, in one set of embodiments, above a threshold temperature and even at what can be considered extreme temperatures (e.g., greater than or equal to 50 °C and/or less than or equal to 0 °C). In certain embodiments, the strong intermolecular hydrogen bonding and closely-packed two-dimensional inter-layer $\pi$-$\pi$ interactions unexpectedly facilitate high ion (e.g., $Li^+$ ion, $Na^+$ ion) diffusivity at extreme temperatures (greater than or equal to 50 °C and/or less than or equal to 0 °C).

Another aspect of this disclosure includes an electrode which can (but need not) include an electrochemically active material described herein. In another aspect, this disclosure provides an electrochemical cell (e.g., a battery) which can include such an electrode (e.g., as a cathode and/or as an anode; a cathode in one set of embodiments). Batteries of this disclosure can be primary or secondary (e.g., rechargeable), such as a sodium-ion or lithium-ion battery.

As noted above, the battery can be configured to operate at a range of temperatures, including threshold or even extreme temperatures. In some embodiments, the battery is configured to operate at high temperatures. For example, in certain embodiments, the battery is configured to operate at a temperature of an environment of the battery greater than or equal to 50 °C. In accordance with some embodiments, the battery is configured to operate at low temperatures. In some embodiments, for example, the battery is configured to operate at a temperature of an environment of the battery less than or equal to 0 °C. According to some embodiments, the battery is advantageously configured to operate over a wide range of temperatures including extremely high temperatures, extremely low temperatures, and ambient (e.g., room temperature) temperatures. For example, in some embodiments, the battery is configured to operate at a temperature of an environment of the battery greater than or equal to -50 °C and less than or equal to 100 °C. As described in greater detail herein, the battery may have unexpected, desirable, and advantageous properties over the wide range of temperatures.

In some embodiments, the battery may exhibit desirable discharge capacities (and/or charge capacities) per gram of the electrode (e.g., cathode) at a temperature of an environment of the battery greater than or equal to 50 °C and/or at a temperature of an environment of the battery less than or equal to 0 °C when current density is set to a certain value per gram of the electrochemically active material in the electrode (e.g., cathode). For example, in certain non-limiting embodiments, the battery has a discharge capacity (and/or a charge capacity) greater than or equal to 200 mAh per gram of the electrode (e.g., cathode) at a temperature of an environment of the battery greater than or equal to 50 °C and/or at a temperature of an environment of the battery less than or equal to 0 °C when current density is set at a value of at least 50 mA per gram of the electrochemically active material in the electrode (e.g., cathode). In some non-limiting embodiments, the battery has a discharge capacity (and/or charge capacity) greater than or equal to 150 mAh per gram of the electrode (e.g., cathode) at a temperature of an environment of the battery greater than or equal to 50 °C and/or at a temperature of an environment of the battery less than or equal to 0 °C when current density is set at a value of at least 200 mA per gram of the electrochemically active material in the electrode (e.g., cathode).

The battery may, in some embodiments, advantageously be cycled (e.g., discharged and charged) at a temperature of an environment of the battery greater than or equal to 50 °C and/or at a temperature of an environment of the battery less than or equal to 0 °C without a substantial drop in discharge capacity (and/or charge capacity) per gram of the electrode (e.g., cathode) when current density is set at a certain value per gram of the electrochemically active material in the electrode (e.g., cathode). For example, in some non-limiting embodiments, the discharge capacity (and/or charge capacity) of the battery per gram of the electrode (e.g., cathode) decreases by less than or equal to 30% after cycling the battery at least 100 times at a temperature of an environment of the battery greater than or equal to 50 °C and/or at a temperature of an environment of the battery less than or equal to 0 °C when current density is set at 50 mA per gram of the electrochemically active material in the electrode (e.g., cathode).

In some embodiments, the battery has a desirable energy density per kilogram of the electrode (e.g., cathode) at a temperature of the environment of the battery greater than or equal to -50°C and less than or equal to 100 °C. In some embodiments, the energy density of the battery per kilogram of the electrode (e.g., cathode) at a temperature of the environment of the battery greater than or equal to -50 °C and less than or equal to 100 °C is advantageously at least 10% higher than the energy density per kilogram of an electrode of a conventional battery that does not comprise the electrochemically active material but is otherwise equivalent and measured under substantially similar conditions. In certain non-limiting embodiments, the battery has an energy density greater than or equal to 700 Wh per kilogram of the

electrode (e.g., cathode) at a temperature of the environment of the battery greater than or equal to -50 °C and less than or equal to 100 °C.

In some embodiments, an electrochemically active material is described. In certain embodiments, the electrochemically active material can be used as an electrode and/or electrode material, which itself can be configured for use in an electrochemical cell (e.g., a battery). According to some embodiments, the electrochemically active material comprises abundant redox-active sites making the electrochemically active material suitable as a high-capacity material, as the redox-active sites rapidly transport electric and/or ionic charges throughout the bulk of the electrochemically active material (e.g., the bulk of an electrode that comprises the electrochemically active material).

In some embodiments, the electrochemically active material primarily or entirely comprises an organic material. The organic electrochemically active material advantageously offers structural tunability and synthetic feasibility for diverse designs of various electrode materials that utilize earth-abundant elements. Conventional organic materials have poor intrinsic electrical conductivity, limited electronic delocalization, and/or high solubility in electrolytes, therefore providing inferior electrochemical performances. Organic electrochemically active materials as described herein, however, may be an insoluble organic solid that exhibits enhanced charge transport, ion transport, and/or charge storage as compared to conventional organic materials.

The electrochemically active material may comprise a relatively limited quantity of metal atoms. For example, in some embodiments, the electrochemically active material comprises at most a trace amount of transition metals (e.g., nickel (Ni) and/or cobalt (Co)). In some embodiments, the electrochemically active material comprises one or more transition metals (e.g., Ni and/or Co) in a total amount less than or equal to 5 weight percent (wt.%), less than or equal to 2 wt.%, less than or equal to 1 wt.%, less than or equal to 0.5 wt.%, less than or equal to 0.2 wt.%, less than or equal to 0.1 wt.%, less than or equal to 0.05 wt.%, less than or equal to 0.02 wt.%, less than or equal to 0.01 wt.%, or less, based on a total weight of the electrochemically active material. In certain embodiments, the electrochemically active material comprises one or more transition metals (e.g., Ni and/or Co) in a total amount greater than or equal to 0.001 wt.%, greater than or equal to 0.01 wt.%, greater than or equal to 0.02 wt.%, greater than or equal to 0.05 wt.%, greater than or equal to 0.1 wt.%, greater than or equal to 0.2 wt.%, greater than or equal to 0.5 wt.%, greater than or equal to 1 wt.%, or greater than or equal to 2 wt.% based on a total weight of the electrochemically active material. Combinations of the above recited ranges are possible (e.g., the electrochemically active material comprises one or more transition metals in a total amount less than or equal to 5 wt.% and greater than or equal to 0.001 wt.% based on a total weight of the electrochemically active material, the electrochemically active material comprises one or more transition metals in a total amount less than or equal to 0.2 wt.% and greater than or equal to 0.1 wt.% based on a total weight of the electrochemically active material). Other ranges are also possible.

The electrochemically active material may have any of a variety of suitable electrical conductivities. In certain embodiments, for example, the electrochemically active material has an electrical conductivity greater than or equal to $10^{-6}$ S/cm, greater than or equal to $10^{-5}$ S/cm, greater than or equal to $10^{-4}$ S/cm, greater than or equal to $10^{-3}$ S/cm, or greater than or equal to $10^{-2}$ S/cm. In some embodiments, the electrochemically active material has an electrical conductivity less than or equal to $10^{-1}$ S/cm, less than or equal to $10^{-2}$ S/cm, less than or equal to $10^{-3}$ S/cm, less than or equal to $10^{-4}$ S/cm, or less than or equal to $10^{-5}$ S/cm. Combinations of the above recited ranges are possible (e.g., the electrochemically active material has an electrical conductivity greater than or equal to $10^{-6}$ S/cm and less than or equal to $10^{-1}$ S/cm, the electrochemically active material has an electrical conductivity greater than or equal to $10^{-4}$ S/cm and less than or equal to $10^{-2}$ S/cm). Other ranges are also possible.

In certain embodiments, the electrical conductivity of the electrochemically active material is measured using an electrical conductivity meter.

According to some embodiments, the electrochemically active material may have any of the electrical conductivities in the preceding paragraph when measured at a temperature greater than or equal to -50 °C and less than or equal to 100 °C.

The electrochemically active material may have any of a variety of suitable ion (e.g. $Li^+$ ion, $Na^+$ ion) diffusion coefficients. In some embodiments, for example, the electrochemically active material has an ion diffusion coefficient greater than or equal to $10^{-12}$ $cm^2/s$, greater than or equal to $10^{-11}$ $cm^2/s$, greater than or equal to $10^{-10}$ $cm^2/s$, or greater than or equal to $10^{-9}$ $cm^2/s$. In certain embodiments, the electrochemically active material has an ion diffusion coefficient less than or equal to $10^{-8}$ $cm^2/s$, less than or equal to $10^{-9}$ $cm^2/s$, less than or equal to $10^{-10}$ $cm^2/s$, or less than or equal to $10^{-11}$ $cm^2/s$. Combinations of the above recited ranges are also possible (e.g., the electrochemically active material has an ion diffusion coefficient greater than or equal to $10^{-12}$ $cm^2/s$ and less than or equal to $10^{-8}$ $cm^2/s$, the electrochemically active material has an ion diffusion coefficient greater than or equal to $10^{-10}$ $cm^2/s$ and less than or equal to $10^{-9}$ $cm^2/s$). Other ranges are also possible.

In certain embodiments, the ion diffusion coefficient of the electrochemically active material is measured by a galvanostatic intermittent titration technique (GITT).

According to some embodiments, the electrochemically active material may have any of the ion diffusion coefficients in the preceding paragraph when measured at a temperature greater than or equal to -50 °C and less than or

equal to 100 °C.

According to some embodiments, the electrochemically active material can be used as an electrode and/or electrode material. In certain embodiments, for example, the electrochemically active material itself, and/or the electrochemically active material in conjunction with one or more other materials with which it can be compounded, synthesized, or otherwise combined, provides the requisite level of cohesiveness, structural self-support, electronic and/or ionic conductivity, and/or other features recognized as useful for use as an electrode and/or electrode material. In some embodiments, the electrode and/or electrode material is configured for use in an electrochemical cell (e.g., a battery). For example, in certain embodiments, the electrode and/or electrode material has requisite properties for connection to a circuit (which can connect to another electrode in the electrochemical cell), interface with an electrolyte (e.g., a liquid and/or solid electrolyte) without damage and/or degradation, and/or the like.

According to certain embodiments, the electrochemically active material comprises a fused aromatic system. As used herein, the term "fused aromatic system" refers to two or more cyclic (e.g., monocyclic, bicyclic, tricyclic, etc.) aromatic rings that share connecting bonds, and/or a plurality of two or more cyclic (e.g., monocyclic, bicyclic, tricyclic, etc.) aromatic rings that share connecting bonds. In some embodiments, for example, the fused aromatic system comprises one or more fused aromatic molecules comprising at least two aromatic rings that share connecting bonds. In certain embodiments, the fused aromatic system possesses dense redox-active sites in the aromatic backbone with extended conjugation. Without wishing to be bound by theory, the fused aromatic system may, in some embodiments, have a continuously $\pi$-conjugated backbone that ensures high electrical conductivity, thereby facilitating low-charge transfer resistance, even at extreme temperatures (e.g., high temperatures greater than or equal to 50 °C, low temperatures less than or equal to 0 °C). In some non-limiting embodiments, the fused aromatic system comprises a *bis*-tetraamino-benzoquinone molecule and/or a dimer, tautomer, oligomer, polymer, and/or derivative thereof, as described herein in greater detail.

In certain embodiments, the electrochemically active material is a solid material that is insoluble in both organic and/or aqueous media through strong intermolecular hydrogen bonding and/or donor-acceptor $\pi$-$\pi$ interactions. Advantageously, the fused aromatic system may, in some embodiments, exhibit excellent charge-storage capacities and ion (e.g., lithium ion, sodium ion) diffusivities in various electrolytes (e.g., organic electrolytes, aqueous electrolytes, and/or solid electrolytes), even at extreme temperatures (e.g., high temperatures greater than or equal to 50 °C, low temperatures less than or equal to 0 °C). Without wishing to be bound by theory, the advantageous properties of the fused aromatic system may be associated with electronic delocalization and facile ion transport, which may be facilitated by the dense presence of redox-active groups in the aromatic backbone and/or an alternating arrangement of electron donor and electron acceptor aromatic rings in the fused aromatic system.

According to some embodiments, the fused aromatic system comprises carbon atoms and/or hydrogen atoms. In certain embodiments, the fused aromatic system comprises one or more heteroatoms replacing a carbon atom. Examples of suitable heteroatoms include, but are not limited to, nitrogen (N), oxygen (O), sulfur (S), and/or selenium (Se).

The fused aromatic system may have any of a variety of suitable ratios of carbon atoms to heteroatoms (e.g., N atoms, O atoms, S atoms, Se atoms, etc.). Without wishing to be bound by theory, a relatively low ratio of carbon atoms to heteroatoms (e.g., less than 2) advantageously provides a system with more redox-active sites as compared to a system with a high ratio of carbon atoms to heteroatoms (e.g., greater than 2) that is otherwise equivalent, thereby providing sufficient transport pathways for electric and/or ionic charges through the bulk of the material. In certain embodiments, for example, the fused aromatic system comprises a relatively high number of redox-active sites, including, but not limited to, carbonyl groups, amine groups, and/or imine groups. The presence of heteroatoms in the fused aromatic system may also advantageously provide an alternating arrangement of electron donor and electron acceptor aromatic rings, therefore facilitating the transport of electric and/or ionic charges through the bulk of the material.

In some embodiments, the ratio of carbon atoms to heteroatoms in the fused aromatic system is greater than 1, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.8, or greater than or equal to 1.9. In certain embodiments, the ratio of carbon atoms to heteroatoms in the fused aromatic system is less than 2, less than or equal or equal to 1.9, less than or equal to 1.8, less than or equal to 1.7, less than or equal to 1.6, less than or equal to 1.5, less than or equal to 1.4, less than or equal to 1.3, less than or equal to 1.2, or less than or equal to 1.1. Combinations of the above recited ranges are also possible (e.g., the ratio of carbon atoms to heteroatoms in the fused aromatic system is greater than 1 and less than 2, the ratio of carbon atoms to heteroatoms in the fused aromatic system is greater than or equal to 1.2 and less than or equal to 1.4). Other ranges are also possible.

In certain embodiments, the ratio of carbon atoms to heteroatoms in the fused aromatic system is determined by structural and/or elemental analyses.

In certain embodiments, at least a portion of the fused aromatic system may be interconnected via one or more hydrogen bonding interactions. In some embodiments, for example, at least a portion of the *bis*-tetraamino-benzoquinone molecules and/or the dimers, tautomers, oligomers, polymers, and/or derivatives thereof interact with each other in a planar and/or two-dimensional configuration via hydrogen bonding. According to some embodiments, the hydrogen

bonding interactions are between one or more hydrogen atoms and one more oxygen atoms (e.g., of a carbonyl group) and/or one or more nitrogen atoms (e.g., of an amine group and/or imine group). Without wishing to be bound by theory, interconnection of the fused aromatic system via hydrogen bonding interactions may advantageously facilitate electronic charge delocalization and diffusion of ionic charges through the fused aromatic system, in accordance with certain embodiments. For example, in certain non-limiting embodiments, the fused aromatic system may form a plurality of planar and/or two-dimensional layers that are hydrogen bonded, and one or more ions may intercalate between the planar and/or 2D layers via one or more ion diffusion pathways. In some embodiments, interconnection of the fused aromatic system via hydrogen bonding advantageously results in a solid material that is insoluble in organic and aqueous media, thereby providing a material suitable for use in electrodes.

The fused aromatic system may have any of a variety of suitable hydrogen bonding interactions. In some embodiments, for example, the fused aromatic system comprises greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9 hydrogen bonds per mole of carbon atoms in the fused aromatic system. In certain embodiments, the fused aromatic system comprises less than or equal to 1, less than or equal to 0.9, less than or equal to 0.8, less than or equal to 0.7, less than or equal to 0.6, less than or equal to 0.5, less than or equal to 0.4, less than or equal to 0.3, or less than or equal to 0.2 hydrogen bonds per mole of carbon atoms in the fused aromatic system. Combinations of the above recited ranges are also possible (e.g., the number of hydrogen bonding interactions in the fused aromatic system is between greater than or equal to 0.1 and less than or equal to 1 hydrogen bonds per mole of carbon atoms in the fused aromatic system, the number of hydrogen bonding interactions in the fused aromatic system is between greater than or equal to 0.5 and less than or equal to 0.6 hydrogen bonds per mole of carbon atoms in the fused aromatic system). Other ranges are also possible.

In certain embodiments, the number of hydrogen bonding interactions in the fused aromatic system is determined by structural and/or elemental analysis.

The fused aromatic system may have any of a variety of suitable $\pi$-$\pi$ interactions (e.g., donor-acceptor $\pi$-$\pi$ interactions). For example, in certain embodiments, at least a portion of the fused aromatic system is configured in a stacked and/or three-dimensional configuration via one or more $\pi$-$\pi$ interactions. Without wishing to be bound by theory, interconnection of the fused aromatic system via $\pi$-$\pi$ interactions may advantageously facilitate electronic charge delocalization and diffusion of ionic charges through the fused aromatic system, in accordance with certain embodiments. For example, in certain non-limiting embodiments, the fused aromatic system may form a plurality of stacked and/or three-dimensional layers that are interconnected via $\pi$-$\pi$ interactions, and one or more ions may intercalate between the stacked and/or 3D layers via one or more ion diffusion pathways. In some embodiments, interconnection of the fused aromatic system via $\pi$-$\pi$ interactions advantageously results in a solid material that is insoluble in organic and aqueous media, thereby providing a suitable material for use in electrodes.

In some embodiments, the average interlayer distance between the portion of the fused aromatic system configured in a stacked and/or three-dimensional configuration via one or more $\pi$-$\pi$ interactions is greater than or equal to 2 Å, greater than or equal to 2.5 Å, greater than or equal to 3 Å, or greater than or equal to 3.5 Å. In certain embodiments, the average interlayer distance between the portion of the fused aromatic system configured in a stacked and/or three-dimensional configuration via one or more $\pi$-$\pi$ interactions is less than or equal to 4 Å, less than or equal to 3.5 Å, less than or equal to 3 Å, or less than or equal to 2.5 Å. Combinations of the above recited ranges are also possible (e.g., the average interlayer distance between the portion of the fused aromatic system configured in a stacked and/or three-dimensional configuration via one or more $\pi$-$\pi$ interactions is greater than or equal to 2 Å and less than or equal to 4 Å, the average interlayer distance between the portion of the fused aromatic system configured in a stacked and/or three-dimensional configuration via one or more $\pi$-$\pi$ interactions is greater than or equal to 3 Å and less than or equal to 3.5 Å). Other ranges are also possible.

In certain embodiments, the average interlayer distance between the portion of the fused aromatic system configured in a stacked and/or three-dimensional configuration via one or more $\pi$-$\pi$ interactions is determined by structural analysis and/or microscopic methods.

According to certain non-limiting embodiments when the electrochemically active material is used as an electrode and/or electrode active material in an electrochemical cell, the average interlayer distance between a portion of the fused aromatic system (e.g., configured in a stacked and/or three-dimensional configuration via one or more $\pi$-$\pi$ interactions) may increase (e.g., expand) during discharging (e.g., by greater than or equal to 1%, greater than or equal to 2%, greater than or equal to 5%, greater than or equal to 10%). In certain non-limiting embodiments when the electrochemically active material is used as an electrode and/or electrode active material in an electrochemical cell, the average interlayer distance between a portion of the fused aromatic system (e.g., configured in a stacked and/or three-dimensional configuration via one or more $\pi$-$\pi$ interactions) may decrease (e.g., contract) during charging (e.g., by less than or equal to 10%, less than or equal to 5%, less than or equal to 2%, less than or equal to 1%). In some non-limiting embodiments when the electrochemically active material is used as an electrode and/or electrode active material in an electrochemical cell, the average interlayer distance between a portion of the fused aromatic system (e.g., configured in a

stacked and/or three-dimensional configuration via one or more π-π interactions) may increase (e.g., expand) during cycling (e.g., discharging and charging) (e.g., by greater than or equal to 1%, greater than or equal to 2%, greater than or equal to 5%, greater than or equal to 10%). According to certain embodiments, the fused aromatic system is advantageously chemically and structurally stable such that the crystal structure of the fused aromatic system remains intact during the expansion and/or contraction. In certain embodiments, the chemical and structural stability of the fused aromatic system is determined by X-ray diffraction techniques (e.g., PXRD) and/or microscopy techniques (e.g., SEM and/or cryo-EM).

As described herein, the electrochemically active material may, in certain embodiments, have a low solubility in organic and/or aqueous solvents (e.g., at a temperature of an environment of the battery greater than or equal to -50 °C and less than or equal to 100 °C) due at least in part to the hydrogen bonding interactions and/or π-π interactions of the fused aromatic system. In accordance with some embodiments, it is advantageous for the electrochemically active material to have a low solubility in organic and aqueous solvents, as the electrochemically active material may be used as an electrode and/or electrode material.

The fused aromatic system may have any of a variety of suitable solubilities in organic and/or aqueous solvents. In certain embodiments, for example, the fused aromatic system has a solubility less than or equal to 2 millimoles per liter of solvent (e.g., an organic solvent and/or an aqueous solvent), less than or equal to 1.5 millimoles per liter of solvent, less than or equal to 1 millimole per liter of solvent, less than or equal to 0.5 millimoles per liter of solvent, or less. According to some embodiments, the fused aromatic system has a solubility greater than 0 millimoles per liter of solvent (e.g., an organic solvent and/or an aqueous solvent), greater than or equal to 0.1 millimoles per liter of solvent, greater than or equal to 0.5 millimoles per liter of solvent, greater than or equal to 1 millimole per liter of solvent, or greater than or equal to 1.5 millimoles per liter of solvent. Combinations of the above recited ranges are possible (e.g., the fused aromatic system has a solubility less than or equal to 2 millimoles per liter of solvent and greater than 0 millimoles per liter of solvent, the fused aromatic system has a solubility greater than or equal to 0.5 millimoles per liter of solvent and less than or equal to 1.5 millimoles per liter of solvent). Other ranges are also possible.

According to some embodiments, the fused aromatic system may have any of the solubilities in the preceding paragraph when measured in an organic and/or aqueous solvent at a temperature greater than or equal to -50 °C and less than or equal to 100 °C.

As described herein, the electrochemically active material may comprise a *bis*-tetraamino-benzoquinone molecule and/or a dimer, tautomer, oligomer, polymer, and/or derivative thereof, in accordance with certain embodiments. **In** some embodiments, for example, the electrochemically active material comprises a molecule of the structure (and/or a plurality of molecules of the structure):

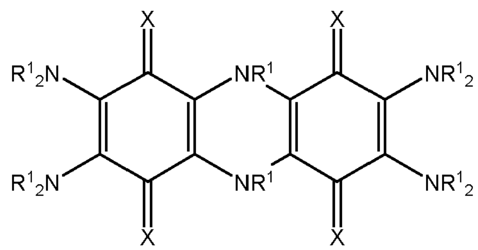

,

wherein each X comprises O, S, Se, or $NR^1$, and wherein each $R^1$ is the same or different and is selected from the group consisting of hydrogen (-H), an optionally substituted - $C_1$-$C_{10}$ alkyl group (e.g., $-CH_3$), an optionally substituted -$C_2$-$C_{10}$ alkenyl group (e.g., - $CH=CH_2$), and/or an optionally substituted -$C_2$-$C_{10}$ alkynyl group (e.g., -C≡CH).

Dimers, tautomers, and/or isomers of the structure shown above are also possible, in some embodiments.

In certain embodiments, the electrochemically active material comprises a molecule of the structure (and/or a plurality of molecules of the structure):

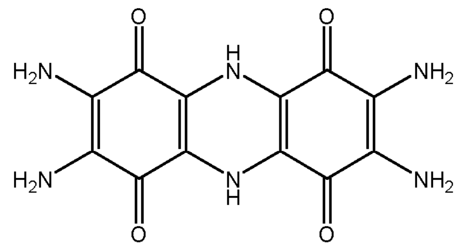

.

Dimers, tautomers, and/or isomers of the structure shown above are also possible, in some embodiments.

According to certain embodiments, the electrochemically active material is synthesized from a tetraamino-*p*-benzoquinone molecule and/or a derivative thereof. In some embodiments, for example, the electrochemically active material is synthesized from a molecule of the structure:

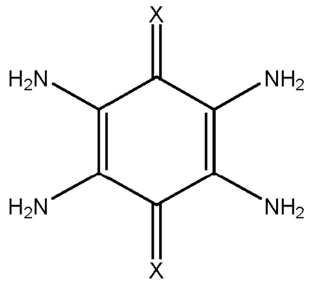

,

wherein each X comprises O, S, Se, or $NR^1$, and wherein each $R^1$ is the same or different and is selected from the group consisting of hydrogen (-H), an optionally substituted - $C_1$-$C_{10}$ alkyl group (e.g., $-CH_3$), an optionally substituted -$C_2$-$C_{10}$ alkenyl group (e.g., - $CH=CH_2$), and/or an optionally substituted -$C_2$-$C_{10}$ alkynyl group (e.g., -C≡CH).

Tetraamino-*p*-benzoquinone may be purchased commercially and/or synthesized using techniques known to a person of ordinary skill in the art. According to some embodiments, the electrochemically active material is synthesized from tetraamino-p-benzoquinone and/or a derivative thereof via a one-step Michael addition and elimination with a loss of ammonia.

According to certain embodiments, the electrochemically active material comprises an oligomer and/or polymer of a bis-tetraamino-benzoquinone molecule and/or a derivative thereof (and/or a plurality of oligomers and/or polymers of a *bis*-tetraamino-benzoquinone molecule and/or a derivative thereof).

The oligomer and/or polymer of the bis-tetraamino-benzoquinone molecule and/or the derivative thereof may have any of a variety of suitable forms. In some embodiments, for example, the oligomer and/or polymer of the bis-tetraamino-benzoquinone molecule and/or the derivative thereof is of the structure:

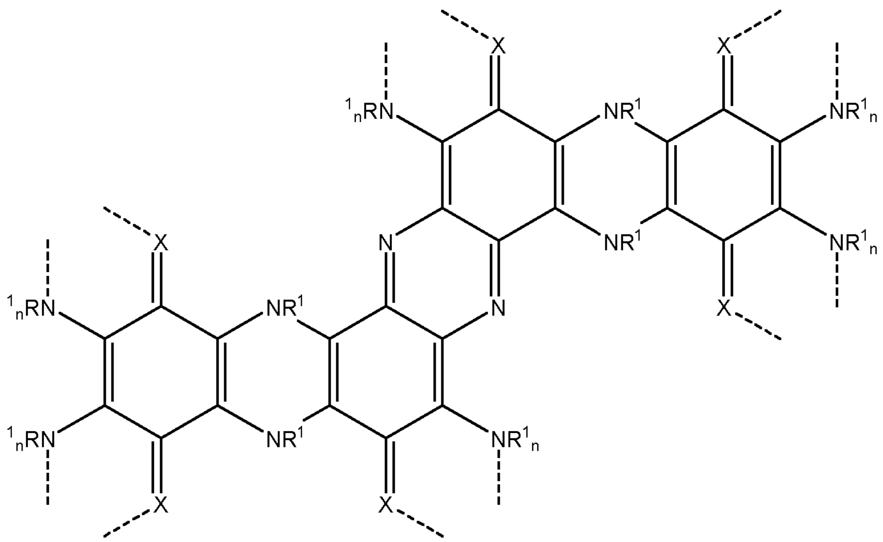

,

wherein each dotted line independently represents either a bond of another aromatic ring of the fused aromatic system or a terminal end of the fused aromatic system. In some embodiments wherein a dotted line represents a bond of another aromatic ring of the fused aromatic system, X comprises N, $R^1$ comprises hydrogen (-H), an optionally substituted $C_1$-$C_{10}$ alkyl group (e.g., $-CH_3$), an optionally substituted -$C_2$-$C_{10}$ alkenyl group (e.g., $-CH=CH_2$), and/or an optionally substituted -$C_2$-$C_{10}$ alkynyl group (e.g., - C≡CH), and n is 1. In certain embodiments wherein a dotted line represents a terminal end of the fused aromatic system, X comprises O, S, Se, or $NR^1$, $R^1$ comprises hydrogen (-H), an optionally substituted $C_1$-$C_{10}$ alkyl group (e.g., $-CH_3$), an optionally substituted -$C_2$-$C_{10}$ alkenyl group (e.g., $-CH=CH_2$), and/or an optionally substituted -$C_2$-$C_{10}$ alkynyl group (e.g., -C≡CH), and n is 2. Tautomers and/or isomers of the structure shown above are also possible, in some embodiments.

As would generally be understood by a person of ordinary skill in the art, in certain embodiments wherein a dotted line represents a bond of another aromatic ring of the fused aromatic system, the fused aromatic system may continue to

extend, via one or more fused aromatic rings, beyond the aromatic ring formed by the bond represented by the dotted line.

In some embodiments, the oligomer and/or polymer of the *bis*-tetraamino-benzoquinone molecule and/or the derivative thereof is of the structure:

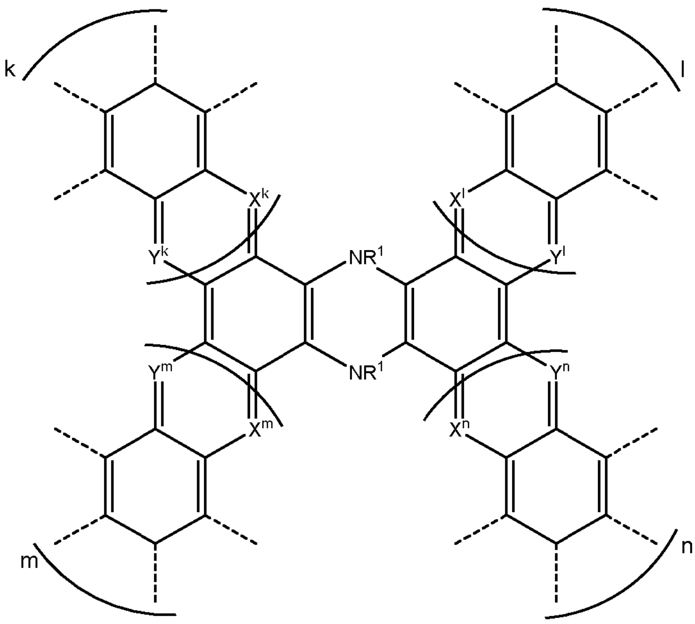

,

wherein when k is greater than 0, $X^k$ and $Y^k$ are N; when k is 0, $X^k$ is O and $Y^k$ is $NR^1$; when l is greater than 0, $X^l$ and $Y^l$ are N; when l is 0, $X^l$ is O and $Y^l$ is $NR^1$; when m is greater than 0, $X^m$ and $Y^m$ are N; when m is 0, $X^m$ is O and $Y^m$ is $NR^1$; when n is greater than 0, $X^n$ and $Y^n$ are N; when n is 0, $X^n$ is O and $Y^n$ is $NR^1$, and wherein $R^1$ comprises hydrogen (-H), an optionally substituted $C_1$-$C_{10}$ alkyl group (e.g., $-CH_3$), an optionally substituted -$C_2$-$C_{10}$ alkenyl group (e.g., $-CH=CH_2$), and/or an optionally substituted -$C_2$-$C_{10}$ alkynyl group (e.g., -C≡CH).

In some non-limiting embodiments, the oligomer and/or polymer of the *bis*-tetraamino-benzoquinone molecule and/or the derivative thereof if of the structure: or

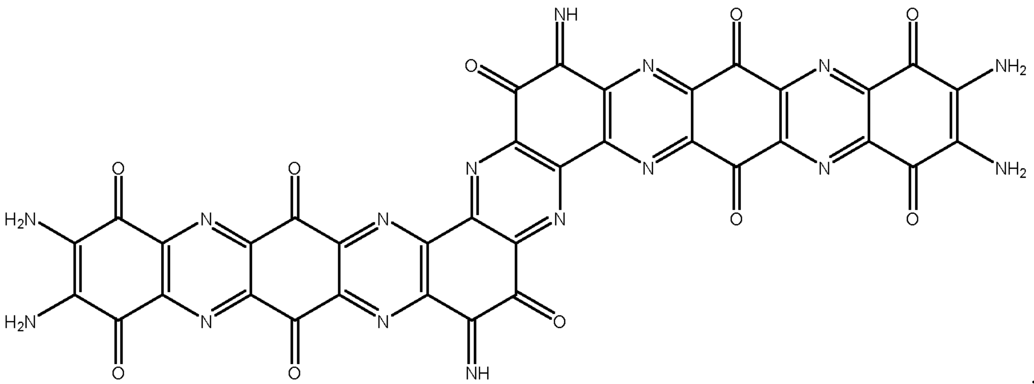

,

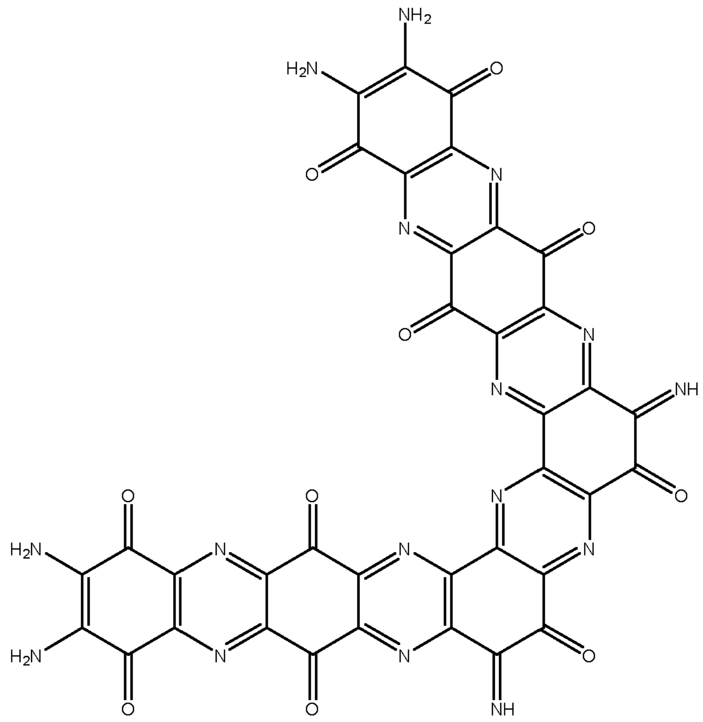

.

Tautomers and/or other isomers of the structures shown above are also possible.

The structure of the oligomer and/or polymer of the bis-tetraamino-benzoquinone molecule and/or the derivative thereof may be determined, in some embodiments, based on elemental analysis, matrix-assisted laser desorption/ionization-time of flight (MALDI-TOF) mass spectrometry, and/or X-ray photoelectron spectroscopy.

According to certain embodiments, the oligomer and/or polymer of the *bis*-tetraamino-benzoquinone molecule and/or the derivative thereof is synthesized via polycondensation of a bis-tetraamino-benzoquinone molecule and/or a derivative thereof in the presence of heat with a loss of water. In some embodiments, the polycondensation reaction is a ladderization reaction.

As described in greater detail herein, the electrochemically active materials and associated compositions may be used in any of a variety of suitable electrodes (e.g., as an electrode active material), in accordance with certain embodiments.

According to some embodiments, an electrochemical cell is described. In certain embodiments, the electrochemical cell is a battery. The battery may, in some embodiments, be a primary (e.g., single use) battery. In other embodiments, the battery is a secondary (e.g., rechargeable) battery. In certain embodiments, the battery is a lithium (Li)-ion battery. In other embodiments, the battery is a sodium (Na)-ion battery. Other electrochemical cells are also possible, including, but not limited to, capacitors and/or supercapacitors.

The electrochemical cell (e.g., battery) may have any of a variety of suitable structures and/or designs. Generally, an electrochemical cell comprises an electrode that includes an electrochemically active material, which can be a charge storage material. The electrochemical cell may comprise more than one electrode, for example, a first electrode (e.g., a cathode) and a second electrode (e.g., an anode), each electrode comprising an electrochemically active material. FIG. 1 shows a cross-sectional schematic diagram of electrochemical cell 101 (e.g., battery), in accordance with certain embodiments. In some embodiments, electrochemical cell 101 comprises first electrode 103 (e.g., a cathode) and second electrode 105 (e.g., an anode). In certain embodiments, electrochemical cell 101 comprises electrolyte 107 disposed between first electrode 103 and second electrode 105.

According to some embodiments, the electrochemical cell may have any of a variety of suitable forms. For example, in certain embodiments, the electrochemical cell is a coin and/or button cell battery, a pouch battery, a cylindrical battery, and/or a prismatic battery. Other battery forms are also possible.

The electrochemical cell may, in some embodiments, comprise more than one electrochemically active material. In certain embodiments, for example, first electrode 103 is or comprises a first electrochemically active material and second electrode 105 is or comprises a second electrochemically active material. According to some embodiments, multiple electrochemically active materials can be provided in a single electrode. For example, in some embodiments, first electrode 103 is or comprises more than one electrochemically active material and/or second electrode 105 is or comprises more than one electrochemically active material.

In some embodiments, an electrochemically active material as described herein may be used in first electrode

103 (e.g., a cathode) and/or in second electrode 105 (e.g., an anode), depending on the application. In some embodiments, the use of electrochemically active materials as described herein perform particularly well when used as an electrochemically active material of a cathode.

The first electrode (e.g., cathode) may comprise any of a variety of suitable electrochemically active materials. In some embodiments, for example, the first electrode comprises an electrochemically active material as described herein (e.g., an electrochemically active material comprising a bis-tetraamino-benzoquinone molecule and/or a dimer, tautomer, oligomer, polymer, and/or derivative thereof). Other electrochemically active materials for the first electrode are also possible.

The second electrode (e.g., anode) may comprise any of a variety of suitable electrochemically active materials. In some embodiments, for example, the second electrode comprises an electrochemically active material as described herein (e.g., an electrochemically active material comprising a bis-tetraamino-benzoquinone molecule and/or a dimer, tautomer, oligomer, polymer, and/or derivative thereof).

According to some embodiments, the second electrode comprises a metal. Suitable metals include, but are not limited to, lithium (Li), sodium (Na), potassium (K), magnesium (Mg), zinc (Zn), calcium (Ca), aluminum (Al), and/or iron (Fe). Other electrochemically active materials for the second electrode are also possible.

An electrode (e.g., a first electrode and/or a second electrode) may include the electrochemically active material in any of a variety of suitable amounts. In some embodiments, for example, an electrode comprises the electrochemically active material in an amount greater than or equal to 50 wt.%, greater than or equal to 60 wt.%, greater than or equal to 70 wt.%, greater than or equal to 80 wt.%, greater than or equal to 90 wt.% , or greater than or equal to 95 wt.% versus a total weight of the electrode. In some embodiments, an electrode comprises the electrochemically active material in an amount less than or equal to 100 wt.%, less than or equal to 95 wt.%, less than or equal to 90 wt.%, less than or equal to 80 wt.%, less than or equal to 70 wt.%, or less than or equal to 60 wt.% versus a total weight of the electrode. Combinations of the above recited ranges are possible (e.g., an electrode comprises the electrochemically active material in an amount greater than or equal to 50 wt.% and less than or equal to 100 wt.% versus a total weight of the electrode, an electrode comprises the electrochemically active material in an amount greater than or equal to 80 wt.% and less than or equal to 90 wt.% versus a total weight of the electrode). Other ranges are also possible.

According to certain embodiments, an electrode (e.g., a first electrode and/or a second electrode) comprises one or more binders, one or more conductive materials, and/or one or more dielectric materials. In certain embodiments, for example, an electrode comprises one or more binders, such as styrene-butadiene rubber. Other binders are also possible. In some embodiments, an electrode comprises one or more conductive materials that increase the conductivity of the electrode. In some embodiments, for example, an electrode comprises a conductive carbon material (e.g., graphite, graphene, carbon black, and/or carbon nanotubes). Other conductive materials are also possible. In certain embodiments, an electrode comprises one or more dielectric materials, such as a dielectric polymer (e.g., polyvinylidene fluoride, carboxymethyl cellulose). Other dielectric materials are also possible.

The electrode may comprise the one or more binders, one or more conductive materials, and/or one or more dielectric materials in any of a variety of suitable amounts. In certain embodiments, for example, the electrode comprises the one or more binders, one or more conductive materials, and/or one or more dielectric materials in an amount greater than or equal to 1 wt.%, greater than or equal to 10 wt.%, greater than or equal to 20 wt.%, greater than or equal to 30 wt.%, or greater than or equal to 40 wt.% versus a total weight of the electrode. In some embodiments, the electrode comprises the one or more binders, one or more conductive materials, and/or one or more dielectric materials in an amount less than or equal to 50 wt.%, less than or equal to 40 wt.%, less than or equal to 30 wt.%, less than or equal to 20 wt.%, or less than or equal to 10 wt.% versus a total weight of the electrode. Combinations of the above recited ranges are possible (e.g., an electrode comprises the one or more binders, one or more conductive materials, and/or one or more dielectric materials in an amount greater than or equal to 1 wt.% and less than or equal to 50 wt.% versus a total weight of the electrode, an electrode comprises the one or more binders, one or more conductive materials, and/or one or more dielectric materials in an amount greater than or equal to 10 wt.% and less than or equal to 20 wt.% versus a total weight of the electrode). Other ranges are also possible.

In some embodiments, an electrode consists only of one or more electrochemically active materials, and does not include any additional materials (e.g., one or more binders, one or more conductive materials, and/or one or more dielectric materials).

The first electrode (e.g., the cathode) may have any of a variety of suitable thicknesses. Referring, for example, to FIG. 1, first electrode 103 has thickness 110a. In some embodiments, the first electrode has a thickness less than or equal to 2000 micrometers, less than or equal to 1500 micrometers, less than or equal to 1000 micrometers, less than or equal to 500 micrometers, less than or equal to 100 micrometers, less than or equal to 50 micrometers, less than or equal to 25 micrometers, less than or equal to 10 micrometers, less than or equal to 5 micrometers, or less. In certain embodiments, the first electrode has a thickness greater than or equal to 1 micrometer, greater than or equal to 5 micrometers, greater than or equal to 10 micrometers, greater than or equal to 25 micrometers, greater than or equal to 50 micrometers, greater than or equal to 100 micrometers, greater than or equal to 500 micrometers, greater than or equal to 1000 micrometers,

greater than or equal to 1500 micrometers, or more. Combinations of the above recited ranges are possible (e.g., the first electrode has a thickness less than or equal to 2000 micrometers and greater than or equal to 1 micrometer, the first electrode has a thickness less than or equal to 1000 micrometers and greater than or equal to 500 micrometers). Other ranges are also possible.

The second electrode (e.g., the anode) may have any of a variety of suitable thicknesses. Referring, for example, to FIG. 1, second electrode 105 has thickness 110b. In some embodiments, the second electrode has a thickness less than or equal to 2000 micrometers, less than or equal to 1500 micrometers, less than or equal to 1000 micrometers, less than or equal to 500 micrometers, less than or equal to 100 micrometers, less than or equal to 50 micrometers, less than or equal to 25 micrometers, less than or equal to 10 micrometers, less than or equal to 5 micrometers, or less. In certain embodiments, the second electrode has a thickness greater than or equal to 1 micrometer, greater than or equal to 5 micrometers, greater than or equal to 10 micrometers, greater than or equal to 25 micrometers, greater than or equal to 50 micrometers, greater than or equal to 100 micrometers, greater than or equal to 500 micrometers, greater than or equal to 1000 micrometers, greater than or equal to 1500 micrometers, or more. Combinations of the above recited ranges are possible (e.g., the second electrode has a thickness less than or equal to 2000 micrometers and greater than or equal to 1 micrometer, the second electrode has a thickness less than or equal to 1000 micrometers and greater than or equal to 500 micrometers). Other ranges are also possible.

As described herein, the electrochemical cell may, in some embodiments, comprise an electrolyte. Referring to FIG. 1, for example, electrochemical cell 101 (e.g. battery) comprises electrolyte 107 disposed between first electrode 103 and second electrode 105. According to certain embodiments, the electrolyte can function as a medium for the storage and transport of ions (e.g., Li ions, Na ions) between electrodes of the electrochemical cell. Any of a variety of suitable liquid, solid, and/or gel materials capable of storing and transporting ions may be used, provided that the material facilitates the transport of ions between the first electrode (e.g., cathode) and the second electrode (e.g., anode). In some embodiments, the electrolyte is electronically nonconductive to prevent short circuiting between the electrodes. According to certain embodiments, the electrolyte comprises one or more liquid electrolyte solvents, gel polymer materials, and/or polymer materials. The electrolyte may, in some embodiments, comprise one or more ionic electrolyte salts (e.g., dissolved and/or suspended in one or more liquid electrolyte solvents) to provide and/or enhance ionic conductivity.

In some embodiments, the electrochemical chemical cell comprises a liquid electrolyte. The liquid electrolyte may, in some embodiments, comprise water. In some embodiments, the liquid electrolyte comprising water optionally includes one or more ionic electrolyte salts dissolved and/or suspended in the water. In certain embodiments, for example, the electrochemical cell comprises an aqueous liquid electrolyte system.

In certain embodiments, the liquid electrolyte comprises an organic, non-aqueous solvent comprising no water or only a trace amount of water. In some embodiments, for example, the liquid electrolyte comprises water in an amount greater than 0 wt.% and less than or equal to 5 wt.% versus a total weight of the liquid electrolyte. In some embodiments, the liquid electrolyte comprising an organic, non-aqueous solvent comprises one or more ionic electrolyte salts dissolved and/or suspended in the organic, non-aqueous solvent. In certain embodiments, for example, the electrochemical cell comprises a non-aqueous liquid electrolyte system. Suitable organic, non-aqueous electrolyte solvents include, but are not limited to, acetonitrile, carbonates (e.g., propylene carbonate (PC), ethylene carbonate (EC), dimethyl carbonate (DMC), diethyl carbonate (DEC)), 1,3-dioxolane (DOL), dimethoxyethane (DME), diethylene glycol dimethyl ether (diglyme), triethylene glycol dimethyl ether (TGDME or triglyme), and/or tetraethylene glycol dimethyl ether (TEGDME or tetraglyme). Other organic, non-aqueous electrolyte solvents are also possible.

The electrolyte may comprise any of a variety of suitable ionic electrolyte salts. In some embodiments, for example, an ionic electrolyte salt comprises a metal cation (e.g., $Li^+$, $Na^+$, $K^+$, and/or $Mg^{2+}$) in combination with an anion (e.g., chloride, hydrogen phosphate, carbonate, hexafluoroarsenate, hexafluorophosphate, perchlorate, tetrafluoroborate, tris(pentafluoroethyl)trifluorophosphate, trifluoromethanesulfonate, bis(fluorosulfonyl)imide, cyclo-difluoromethane-1,1-bis(sulfonyl)imide), bis(perfluoroethanesulfonyl)imide, bis(trifluoromethanesulfonyl)imide, bis(perfluoroethanesulfonyl)imide, bis(oxalate)borate, difluoro(oxalato)borate, bis(fluoromalonato)borate, tetracyanoborate, dicyanotriazolate, dicyano-trifluoromethyl-imidazole, and/or dicyano-pentafluoroethyl-imidazole). Other ionic electrolyte salts are also possible.

The electrolyte may comprise the ionic electrolyte salt in any of a variety of suitable amounts. In some embodiments, for example, the electrolyte comprises the ionic electrolyte salt in an amount greater than or equal to 0.1 M, greater than or equal to 0.2 M, greater than or equal to 0.5 M, greater than or equal to 1 M, greater than or equal to 2 M, or greater than or equal to 5 M. In certain embodiments, the electrolyte comprises the ionic electrolyte salt in an amount less than or equal to 10 M, less than or equal to 5 M, less than or equal to 2 M, less than or equal to 1 M, less than or equal to 0.5 M, or less than or equal to 0.2 M. Combinations of the above recited ranges are possible (e.g., the electrolyte comprises the electrolyte salt in an amount greater than or equal to 0.1 M and less than or equal to 10 M). Other ranges are also possible.

The electrochemical cell may comprise any of a variety of suitable volumes of the liquid electrolyte. In certain embodiments, for example, the electrochemical cell comprises the liquid electrolyte in a volume greater than or equal to 0.1

mL, greater than or equal to 0.5 mL, greater than or equal to 1 mL, greater than or equal to 2 mL, or greater than or equal to 5 mL. In some embodiments, the electrochemical cell comprises the liquid electrolyte in a volume less than or equal to 10 mL, less than or equal to 5 mL, less than or equal to 2 mL, less than or equal to 1 mL, or less than or equal to 0.5 mL. Combinations of the above recited ranges are possible (e.g., the electrochemical cell comprises the liquid electrolyte in a volume greater than or equal to 0.1 mL and less than or equal to 10 mL). Other ranges are also possible.

According to certain embodiments, the electrochemically active material and/or electrode is substantially insoluble when exposed to the electrolyte (e.g., liquid electrolyte) at a temperature of an environment of the battery that is greater than or equal to -50 °C and less than or equal to 100 °C. In certain embodiments, for example, the electrochemically active material and/or electrode is insoluble when exposed to (e.g., soaked in) the electrolyte for at least 1 day, at least 7 days, at least 30 days, or more, at a temperature of an environment of the battery that is greater than or equal to -50 °C and less than or equal to 100 °C. In some embodiments, the electrochemically active material and/or electrode is insoluble when exposed to (e.g., soaked in) the electrolyte for less than or equal or equal to 1 year, less than or equal to 30 days, or less than or equal to 7 days at a temperature of an environment of the battery that is greater than or equal to - 50 °C and less than or equal to 100 °C. Combinations of the above recited ranges are possible (e.g., the electrochemically active material and/or electrode is insoluble when exposed to the electrolyte for at least 1 day and less than or equal to 1 year at a temperature of an environment of the battery that is greater than or equal to -50 °C and less than or equal to 100 °C). Other ranges are also possible.

In some embodiments, the electrochemical cell comprises a separator, which can be configured to inhibit (e.g., prevent) physical contact between the first electrode and the second electrode, i.e., which can prevent short circuiting of the electrochemical cell. In some embodiments, the separator is disposed between the first electrode and the second electrode. For example, in certain embodiments, the separator is disposed in the electrolyte. The separator may comprise any of a variety of suitable materials. In some embodiments, for example, the separator comprises a polymeric material and/or glass fiber.

According to some embodiments, the electrochemical cell may also include one or more current collectors, external circuitry, a housing structure, and/or the like. Those of ordinary skill in the art would be aware of the many battery arrangements that can be utilized with the general schematic arrangement as shown in the figures and described herein.

According to certain embodiments, an electrochemical cell (e.g., battery) as described herein is configured to operate at any of a variety of suitable temperatures, including delivering surprising performance at threshold and/or extreme temperatures (and/or across a temperature range). In certain embodiments, for example, the battery is configured to operate at a temperature of an environment of the battery that is greater than or equal to -50 °C and less than or equal to 100 °C.

As used herein, the term "temperature of an environment of the battery" refers to the temperature of a substantially stagnant environment surrounding the battery. In certain non-limiting embodiments, for example, the battery is surrounded by substantially stagnant air, and the temperature of the environment of the battery refers to the temperature of the substantially stagnant air surrounding the battery. According to certain embodiments, the temperature of the environment of the battery is the temperature of the surrounding substantially stagnant environment (e.g., air) measured (e.g., using a thermometer or temperature sensor) at a distance less than or equal to 15 centimeters from an external surface of the battery. In some embodiments, the external surface of the battery includes an exterior of a package within which the battery resides so long as the package is integral with the battery and accompanies the battery as the battery is moved into and/or out of a device powered by the battery. In certain embodiments, the external surface of the battery optionally includes one or more dissipation elements for convective transfer into the surrounding substantially stagnant environment (e.g., air), such as fins, but optionally does not include a housing around the battery, for example through which a coolant or other temperature-controlled fluid flows. In certain embodiments, the temperature of the environment of the battery is measured at a point at which heat equilibrium between the temperature of the environment of the battery and the external surface of the battery is reached. For example, in some embodiments, the temperature of the environment of the battery is measured after the battery is placed in the temperature of the environment of the battery for at least 1 hour, at least 2 hours, at least 4 hours, at least 6 hours, at least 8 hours, or more. In some embodiments, the temperature of the environment of the battery is measured at a point at which heat dissipation equilibrium is reached, e.g., when the battery is discharged and/or charged at maximum operating rate repeatedly until the temperature of the surrounding substantially stagnant environment (e.g., air), at the distance less than or equal to 15 centimeters from the external surface of the battery, reaches steady state. As used herein, the term "substantially stagnant environment" refers to an environment that is or is not enclosed and that allows a medium in the environment (e.g., air) to dissipate freely into a volume larger than the volume of the battery, wherein the medium (e.g., air) is not actively flowed across the battery, but the medium (e.g., air) might flow across the battery only as urged via normal activity such as the movement of one or more components of a device powered by the battery and/or the movement of one or more technicians and/or operators near the battery.

According to certain embodiments, the temperature of the environment of the battery is equal to or is substantially equal to the temperature of the external surface of the battery. For example, in some embodiments, the temperature of the environment of the battery deviates from the temperature of the external surface of the battery by less than or equal to +/-

5%, less than or equal to +/- 4%, less than or equal to +/- 3%, less than or equal to +/- 2%, less than or equal to +/- 1%, less than or equal to +/- 0.1%, or 0%. For purposes of illustration, if the temperature of the environment of the battery is 50 °C, then the temperature of the external surface of the battery is greater than or equal to 47.5 °C and less than or equal to 52.5 °C. In some embodiments, the temperature of the environment of the battery is equal to the temperature of the external surface of the battery.

According to some embodiments, the temperature of the environment of the battery is equal to or is substantially equal to the temperature of one or more internal components (e.g., one or more electrodes) of the battery. For example, in some embodiments, the temperature of the environment of the battery deviates from the temperature of the one or more internal components of the battery by less than or equal to +/- 5%, less than or equal to +/- 4%, less than or equal to +/- 3%, less than or equal to +/- 2%, less than or equal to +/- 1%, less than or equal to +/- 0.1%, or 0%. For purposes of illustration, if the temperature of the environment of the battery is 50 °C, then the temperature of the one or more internal components of the battery is greater than or equal to 47.5 °C and less than or equal to 52.5 °C. In some embodiments, the temperature of the environment of the battery is equal to the temperature of the one or more internal components of the battery.

In some embodiments, the battery is advantageously configured to operate at high temperatures (i.e., high temperatures of an environment of the battery). In certain embodiments, for example, the battery is configured to operate at a temperature of an environment of the battery greater than or equal to 50 °C, greater than or equal to 60 °C, greater than or equal to 70 °C, greater than or equal to 80 °C, or greater than or equal to 90°C. In some embodiments, the battery is configured to operate at a temperature of an environment of the battery less than or equal to 100 °C, less than or equal to 90°C, less than or equal to 80°C, less than or equal to 70°C, or less than or equal to 60 °C. Combinations of the above recited ranges are possible (e.g., the battery is configured to operate at a temperature of an environment of the battery greater than or equal to 50 °C and less than or equal to 100 °C, the battery is configured to operate at a temperature of an environment of the battery greater than or equal to 70°C and less than or equal to 80 °C). Other ranges are also possible.

The battery may have any of a variety of suitable discharge capacities (and/or charge capacities, as noted below). The discharge capacity (and/or charge capacity) of the battery, as described herein, may be measured in milliampere hours per gram of the electrode (e.g., cathode) (mAh/g). In some embodiments, the discharge capacity (and/or charge capacity) of the battery depends on the current density of the battery. The current density of the battery, as described herein, may be measured in milliamperes per gram of the electrochemically active material in the electrode (e.g., cathode) (mA/g). For purposes of illustration, if a battery has a discharge capacity of 100 mAh/g when current density is set at a value of 1 mA/g, then, for 1 gram of the electrochemically active material, the battery will discharge 1 mA of current for 100 hours, and if a battery has a charge capacity of 100 mAh/g when current density is set at a value of 1 mA/g, then, for 1 gram of the electrochemically active material, the battery will charge 1 mA of current for 100 hours. As another example, if a battery has a discharge capacity of 200 mAh/g when current density is set at a value of 50 mA/g, then, for 1 gram of the electrochemically active material, the battery will discharge 50 mA of current for 4 hours, and if a battery has a charge capacity of 200 mA/g when current density is set at a value of 50 mA/g, then, for 1 gram of the electrochemically active material, the battery will charge 50 mA of current for 4 hours. The discharge capacities (and/or charge capacities) described herein are expressed in terms of a value of current density.

In certain embodiments, the battery has an advantageously high discharge capacity per gram of the electrode (e.g., cathode) when the battery is discharged at high temperatures (e.g., high temperatures of an environment of the battery) and when current density is set at a certain value per gram of the electrochemically active material in the electrode (e.g. cathode). In some embodiments, for example, the battery has a discharge capacity greater than or equal to 200 mAh/g, greater than or equal to 225 mAh/g, greater than or equal to 250 mAh/g, greater than or equal to 275 mAh/g, greater than or equal to 300 mAh/g, or greater than or equal to 325 mAh/g at a temperature of an environment of the battery greater than or equal to 50 °C (e.g., greater than or equal to 60°C, greater than or equal to 70 °C, greater than or equal to 80 °C, greater than or equal to 90 °C, etc.) when current density is set at a value of at least 50 mA/g (e.g., at least 75 mA/g, at least 100 mA/g, at least 125 mA/g, at least 150 mA/g, etc.). In certain embodiments, the battery has a discharge capacity less than or equal to 350 mAh/g, less than or equal to 325 mAh/g, less than or equal to 300 mAh/g, less than or equal to 275 mAh/g, less than or equal to 250 mAh/g, or less than or equal to 225 mAh/g at a temperature of an environment of the battery greater than or equal to 50 °C (e.g., greater than or equal to 60 °C, greater than or equal to 70 °C, greater than or equal to 80 °C, greater than or equal to 90°C, etc.) when current density is set at a value of at least 50 mA/g (e.g., at least 75 mA/g, at least 100 mA/g, at least 125 mA/g, at least 150 mA/g, etc.). Combinations of the above recited ranges are possible (e.g., the battery has a discharge capacity greater than or equal to 200 mAh/g and less than or equal to 350 mAh/g at a temperature of an environment of the battery greater than or equal to 50 °C when current density is set at a value of at least 50 mA/g, the battery has a discharge capacity greater than or equal to 275 mAh/g and less than or equal to 300 mAh/g at a temperature of an environment of the battery greater than or equal to 50 °C when current density is set at a value of at least 50 mA/g). Other ranges are also possible.

In certain embodiments, the battery has a discharge capacity greater than or equal to 150 mAh/g, greater than or equal to 175 mAh/g, greater than or equal to 200 mAh/g, greater than or equal to 225 mAh/g, greater than or equal to 250 mAh/g, or greater than or equal to 275 mAh/g at a temperature of an environment of the battery greater than or equal to 50

°C (e.g., greater than or equal to 60 °C, greater than or equal to 70 °C, greater than or equal to 80 °C, greater than or equal to 90 °C, etc.) when current density is set at a value of at least 200 mA/g (e.g., at least 225 mA/g, at least 250 mA/g, at least 275 mA/g, at least 300 mA/g, etc.). In some embodiments, the battery has a discharge capacity less than or equal to 300 mAh/g, less than or equal to 275 mAh/g, less than or equal to 250 mAh/g, less than or equal to 225 mAh/g, less than or equal to 200 mAh/g, or less than or equal to 175 mAh/g at a temperature of an environment of the battery greater than or equal to 50 °C (e.g., greater than or equal to 60 °C, greater than or equal to 70 °C, greater than or equal to 80 °C, greater than or equal to 90 °C, etc.) when current density is set at a value of at least 200 mA/g (e.g., at least 225 mA/g, at least 250 mA/g, at least 275 mA/g, at least 300 mA/g, etc.). Combinations of the above recited range are possible (e.g., the battery has a discharge capacity greater than or equal to 150 mAh/g and less than or equal to 300 mAh/g at a temperature of an environment of the battery greater than or equal to 50 °C when current density is set at a value of at least 200 mA/g, the battery has a discharge capacity greater than or equal to 225 mAh/g and less than or equal to 250 mAh/g at a temperature of an environment of the battery greater than or equal to 50 °C when current density is set at a value of at least 200 mA/g). Other ranges are also possible.

The values in the preceding paragraphs may also apply to the charge capacity of the battery per gram of the electrode (e.g., cathode) when the battery is charged at high temperatures (e.g., high temperatures of an environment of the battery) and when current density is set at a certain value per gram of the electrochemically active material in the electrode (e.g., cathode). For example, in certain embodiments, the battery has a charge capacity greater than or equal to 200 mAh/g and less than or equal to 350 mAh/g at a temperature of an environment of the battery greater than or equal to 50 °C when current density is set at a value of at least 50 mA/g. In some embodiments, the battery has a charge capacity greater than or equal to 150 mAh/g and less than or equal to 300 mAh/g at a temperature of an environment of the battery greater than or equal to 50 °C when current density is set at a value of at least 200 mA/g. Other combinations of the values in the preceding paragraphs are also possible.

In some embodiments, the discharge capacity (and/or charge capacity) of the battery per gram of the electrode may be measured by a constant-current charge/discharge method, optionally with an additional constant voltage period after the constant-current charge/discharge method. In accordance with certain embodiments, the discharge capacity (and/or charge capacity) is calculated by: (i) multiplying the current (e.g., in milliamperes) and the time (e.g., in hours) used to discharge (and/or charge) the electrode, thereby yielding the discharge capacity (and/or charge capacity) of the battery (i.e., in mAh); and (ii) dividing the discharge capacity (and/or charge capacity) of the battery by the mass of the electrode (e.g., in grams), thereby yielding the discharge capacity (and/or charge capacity) of the battery per gram of the electrode (i.e., in mAh/g). For purposes of illustration, if a battery with a mass of an electrode equal to 1 gram is discharged (and/or charged) using a current of 50 mA, and the time used to discharge (and/or charge) the battery is 2 hours, then the calculated discharge capacity (and/or charge capacity) of the battery per gram of the electrode is 100 mAh/g. As another example, if a battery with a mass of an electrode equal to 1 gram is discharged (and/or charged) using a current of 200 mA, and the time used to discharge (and/or charge) the battery is 3 hours, then the calculated discharge capacity (and/or charge capacity) of the battery per gram of the electrode is 600 mAh/g.

As described herein in greater detail, the battery may be a secondary (e.g., rechargeable) battery, in accordance with certain embodiments. The battery may be capable of being cycled (e.g., discharged and charged) any of a variety of suitable number of times. In certain embodiments, the battery is advantageously capable of being cycled at high temperatures (i.e., high temperatures of an environment of the battery). In some embodiments, for example, the battery is capable of being cycled at least 100 times, at least 150 times, at least 200 times, at least 250 times, at least 300 times, at least 350 times, at least 400 times, at least 450 times, at least 500 times, at least 750 times, or more, at a temperature of an environment of the battery greater than or equal to 50 °C (e.g., greater than or equal to 60 °C, greater than or equal to 70 °C, greater than or equal to 80 °C, greater than or equal to 90°C, etc.). In certain embodiments, the battery is capable of being cycled less than or equal to 1000 times, less than or equal to 750 times, less than or equal to 500 times, less than or equal to 450 times, less than or equal to 400 times, less than or equal to 350 times, less than or equal to 300 times, less than or equal to 250 times, less than or equal 200 times, less than or equal to 100 times, or less, at a temperature of an environment of the battery greater than or equal to 50 °C (e.g., greater than or equal to 60 °C, greater than or equal to 70 °C, greater than or equal to 80°C, greater than or equal to 90 °C, etc.). Combinations of the above recited ranges are possible (e.g., the battery is capable of being cycled at least 100 times and less than or equal to 1000 times at a temperature of an environment of the battery greater than or equal to 50 °C, the battery is capable of being cycled at least 300 times and less than or equal to 350 times at a temperature of an environment of the battery greater than or equal to 50 °C). Other ranges are also possible.

The discharge capacity of the battery per gram of the electrode (e.g., cathode) may decrease by any of a variety of suitable percentages after cycling the battery any of a variety of suitable number of times when current density is set at a certain value per gram of the electrochemically active material in the electrode (e.g., cathode). In certain embodiments, the discharge capacity of the battery per gram of the electrode (e.g., cathode) decreases by an advantageously small amount after cycling the battery at high temperatures (i.e., high temperatures of an environment of the battery) when current density is set at a certain value per gram of the electrochemically active material in the electrode (e.g., cathode). In some embodiments, for example, the discharge capacity of the battery per gram of the electrode (e.g., cathode) decreases by

less than or equal to 30%, less than or equal to 20%, less than or equal to 10%, less than or equal to 5%, or less than or equal to 1% after cycling the battery at least 100 times (e.g., at least 150 times, at least 200 times, at least 250 times, at least 300 times, etc.) at a temperature of an environment of the battery greater than or equal to 50 °C (e.g., greater than or equal to 60 °C, greater than or equal to 70 °C, greater than or equal to 80°C, greater than or equal to 90°C, etc.) when current density is set at a value of at least 50 mA/g (e.g., at least 75 mA/g, at least 100 mA/g, at least 125 mA/g, at least 150 mA/g, etc.). In certain embodiments, the discharge capacity of the battery per gram the of electrode (e.g., cathode) decreases by greater than or equal to 0.1%, greater than or equal to 1%, greater than or equal to 5%, greater than or equal to 10%, or greater than or equal to 20% after cycling the battery at least 100 times (e.g., at least 150 times, at least 200 times, at least 250 times, at least 300 times, etc.) at a temperature of an environment of the battery greater than or equal to 50 °C (e.g., greater than or equal to 60°C, greater than or equal to 70°C, greater than or equal to 80°C, greater than or equal to 90 °C, etc.) when current density is set at a value of at least 50 mA/g (e.g., at least 75 mA/g, at least 100 mA/g, at least 125 mA/g, at least 150 mA/g, etc.). Combinations of the above recited ranges are possible (e.g., the discharge capacity of the battery per gram of the electrode decreases by less than or equal to 30% and greater than or equal to 0.1% after cycling the battery at least 100 times at a temperature of an environment of the battery greater than or equal to 50 °C when current density is set at a value of at least 50 mA/g, the discharge capacity of the battery per gram of the electrode decreases by less than or equal to 10% and greater than or equal to 5% after cycling the battery at least 100 times at a temperature of an environment of the battery greater than or equal to 50 °C when current density is set at a value of at least 50 mA/g). Other ranges are also possible.

The values in the preceding paragraph may also apply to the charge capacity of the battery per gram of the electrode (e.g., cathode). For example, in certain embodiments, the charge capacity of the battery decreases by less than or equal to 30% and greater than or equal to 0.1% after cycling the battery at least 100 times at a temperature of an environment of the battery greater than or equal to 50 °C when current density is set at a value of at least 50 mA per gram of the electrochemically active material in the electrode (e.g., cathode). Other combinations of the values in the preceding paragraph are also possible.

In some embodiments, the battery is advantageously configured to operate at low temperatures (i.e., low temperatures of an environment of the battery). In certain embodiments, for example, the battery is configured to operate at a temperature of an environment of the battery less than or equal to 0 °C, less than or equal to -10 °C, less than or equal to -20°C, less than or equal to -30 °C, or less than or equal to -40°C. In some embodiments, the battery is configured to operate at a temperature of an environment of the battery greater than or equal to -50 °C, greater than or equal to -40 °C, greater than or equal to -30 °C, greater than or equal to -20°C, or greater than or equal to -10. Combinations of the above recited ranges are possible (e.g., the battery is configured to operate at a temperature of an environment of the battery less than or equal to 0 °C and greater than or equal to -50 °C, the battery is configured to operate at a temperature of an environment of the battery less than or equal to -20°C and greater than or equal to -30 °C). Other ranges are also possible.

In certain embodiments, the battery has an advantageously high discharge capacity per gram of the electrode (e.g., cathode) when the battery is discharged at low temperatures (e.g., low temperatures of an environment of the battery) and when current density is set at a certain value per gram of the electrochemically active material in the electrode (e.g., cathode). In some embodiments, for example, the battery has a discharge capacity greater than or equal to 200 mAh/g, greater than or equal to 225 mAh/g, greater than or equal to 250 mAh/g, greater than or equal to 275 mAh/g, greater than or equal to 300 mAh/g, or greater than or equal to 325 mAh/g at a temperature of an environment of the battery less than or equal to 0 °C (e.g., less than or equal to -10 °C, less than or equal to -20 °C, less than or equal to -30 °C, less than or equal to -40 °C, etc.) when current density is set at a value of at least 50 mA/g (e.g., at least 75 mA/g, at least 100 mA/g, at least 125 mA/g, at least 150 mA/g, etc.). In certain embodiments, the battery has a discharge capacity less than or equal to 350 mAh/g, less than or equal to 325 mAh/g, less than or equal to 300 mAh/g, less than or equal to 275 mAh/g, less than or equal to 250 mAh/g, or less than or equal to 225 mAh/g at a temperature of an environment of the battery less than or equal to 0 °C (e.g., less than or equal to -10°C, less than or equal to - 20°C, less than or equal to -30 °C, less than or equal to -40°C, etc.) when current density is set at a value of at least 50 mA/g (e.g., at least 75 mA/g, at least 100 mA/g, at least 125 mA/g, at least 150 mA/g, etc.). Combinations of the above recited ranges are possible (e.g., the battery has a discharge capacity greater than or equal to 200 mAh/g and less than or equal to 350 mAh/g at a temperature of an environment of the battery less than or equal to 0 °C when current density is set at a value of at least 50 mA/g, the battery has a discharge capacity greater than or equal to 275 mAh/g and less than or equal to 300 mAh/g at a temperature of an environment of the battery less than or equal to 0 °C when current density is set at a value of at least 50 mA/g). Other ranges are also possible.

In certain embodiments, the battery has a discharge capacity greater than or equal to 150 mAh/g, greater than or equal to 175 mAh/g, greater than or equal to 200 mAh/g, greater than or equal to 225 mAh/g, greater than or equal to 250 mAh/g, or greater than or equal to 275 mAh/g at a temperature of an environment of the battery less than or equal to 0 °C (e.g., less than or equal to -10 °C, less than or equal to -20 °C, less than or equal to -30 °C, less than or equal to -40°C, etc.) when current density is set at a value of at least 200 mA/g (e.g., at least 225 mA/g, at least 250 mA/g, at least 275 mA/g, at least 300 mA/g, etc.). In some embodiments, the battery has a discharge capacity less than or equal to 300 mAh/g, less than or equal to 275 mAh/g, less than or equal to 250 mAh/g, less than or equal to 225 mAh/g, less than or equal to 200

mAh/g, or less than or equal to 175 mAh/g at a temperature of an environment of the battery less than or equal to 0 °C (e.g., less than or equal to -10 °C, less than or equal to -20 °C, less than or equal to -30 °C, less than or equal to -40 °C, etc.) when current density is set at a value of at least 200 mA/g (e.g., at least 225 mA/g, at least 250 mA/g, at least 275 mA/g, at least 300 mA/g, etc.). Combinations of the above recited range are possible (e.g., the battery has a discharge capacity greater than or equal to 150 mAh/g and less than or equal to 300 mAh/g at a temperature of an environment of the battery less than or equal to 0 °C when current density is set at a value of at least 200 mA/g, the battery has a discharge capacity greater than or equal to 225 mAh/g and less than or equal to 250 mAh/g at a temperature of an environment of the battery less than or equal to 0 °C when current density is set at a value of at least 200 mA/g). Other ranges are also possible.

In certain embodiments, the battery is advantageously capable of being cycled at low temperatures (i.e., low temperatures of an environment of the battery). In some embodiments, for example, the battery is capable of being cycled at least 100 times, at least 150 times, at least 200 times, at least 250 times, at least 300 times, at least 350 times, at least 400 times, at least 450 times, at least 500 times, at least 750 times, or more, at a temperature of an environment of the battery less than or equal to 0 °C (e.g., less than or equal to -10 °C, less than or equal to -20 °C, less than or equal to -30 °C, less than or equal to -40 °C, etc.). In certain embodiments, the battery is capable of being cycled less than or equal to 1000 times, less than or equal to 750 times, less than or equal to 500 times, less than or equal to 450 times, less than or equal to 400 times, less than or equal to 350 times, less than or equal to 300 times, less than or equal to 250 times, less than or equal 200 times, less than or equal to 100 times, or less, at a temperature of an environment of the battery less than or equal to 0 °C (e.g., less than or equal to -10 °C, less than or equal to -20 °C, less than or equal to -30 °C, less than or equal to -40°C, etc.). Combinations of the above recited ranges are possible (e.g., the battery is capable of being cycled at least 100 times and less than or equal to 1000 times at a temperature of an environment of the battery less than or equal to 0°C, the battery is capable of being cycled at least 300 times and less than or equal to 350 times at a temperature of an environment of the battery less than or equal to 0°C). Other ranges are also possible.

The values in the preceding paragraphs may also apply to the charge capacity of the battery per gram of the electrode (e.g. cathode) when the battery is charged at low temperatures (e.g., low temperatures of an environment of the battery) and when current density is set at a certain value per gram of the electrochemically active material in the electrode (e.g., cathode). For example, in certain embodiments, the battery has a charge capacity greater than or equal to 200 mAh/g and less than or equal to 350 mAh/g at a temperature of an environment of the battery less than or equal to 0 °C when current density is set at a value of at least 50 mA/g. In some embodiments, the battery has a charge capacity greater than or equal to 150 mAh/g and less than or equal to 300 mAh/g at a temperature of an environment of the battery greater than or equal to 0 °C when current density is set at a value of at least 200 mA/g. Other combinations of the values in the preceding paragraphs are also possible.

In certain embodiments, the discharge capacity of the battery per gram of the electrode (e.g., cathode) decreases by an advantageously small amount after cycling the battery at low temperatures (i.e., low temperatures of an environment of the battery) when current density is set at a certain value per gram of the electrochemically active material in the electrode (e.g., cathode). In some embodiments, for example, the discharge capacity of the battery per gram of the electrode (e.g. cathode) decreases by less than or equal to 30%, less than or equal to 20%, less than or equal to 10%, less than or equal to 5%, or less than or equal to 1% after cycling the battery at least 100 times (e.g., at least 150 times, at least 200 times, at least 250 times, at least 300 times, at least 400 times, at least 450 times, at least 500 times, at least 750 times, etc.) at a temperature of an environment of the battery less than or equal to 0 °C (e.g., less than or equal to -10 °C, less than or equal to -20 °C, less than or equal to -30 °C, less than or equal to -40 °C, etc.) when current density is set at a value of at least 50 mA/g (e.g., at least 75 mA/g, at least 100 mA/g, at least 125 mA/g, at least 150 mA/g, etc.). In certain embodiments, the discharge capacity of the battery per gram of the electrode (e.g., cathode) decreases by greater than or equal to 0.1%, greater than or equal to 1%, greater than or equal to 5%, greater than or equal to 10%, or greater than or equal to 20% after cycling the battery at least 100 times (e.g., at least 150 times, at least 200 times, at least 250 times, at least 300 times, at least 400 times, at least 450 times, at least 500 times, at least 750 times, etc.) at a temperature of an environment of the battery less than or equal to 0 °C (e.g., less than or equal to -10 °C, less than or equal to -20°C, less than or equal to -30 °C, less than or equal to -40°C, etc.) when current density is set at a value of at least 50 mA/g (e.g., at least 75 mA/g, at least 100 mA/g, at least 125 mA/g, at least 150 mA/g, etc.). Combinations of the above recited ranges are possible (e.g., the discharge capacity of the battery per gram of the electrode decreases by less than or equal to 30% and greater than or equal to 0.1% after cycling the battery at least 100 times at a temperature of an environment of the battery less than or equal to 0 °C when current density is set at a value of at least 50 mA/g, the discharge capacity of the battery per gram of the electrode decreases by less than or equal to 10% and greater than or equal to 5% after cycling the battery at least 100 times at a temperature of an environment of the battery less than or equal to 0 °C when current density is set at a value of at least 50 mA/g). Other ranges are also possible.

The values in the preceding paragraph may also apply to the charge capacity of the battery per gram of the electrode (e.g., cathode). For example, in certain embodiments, the charge capacity of the battery per gram of the electrode (e.g., cathode) decreases by less than or equal to 30% and greater than or equal to 0.1% after cycling the battery at least 100 times at a temperature of an environment of the battery less than or equal to 0 °C when current density is set at a

value of at least 50 mA per gram of the electrochemically active material in the electrode (e.g., cathode). Other combinations of the values in the preceding paragraph are also possible.

In some embodiments, the battery is advantageously configured to operate over a wide range of temperatures (i.e., high temperatures of an environment of the battery, low temperatures of an environment of the battery, and/or ambient temperatures of an environment of the battery). In certain embodiments, for example, the battery is configured to operate at a temperature of an environment of the battery greater than or equal to -50 °C and less than or equal to 100 °C. According to certain embodiments, the battery may have any of the previously described discharge capacities (and/or charge capacities) at a temperature of an environment of the battery greater than or equal to -50 °C and less than or equal to 100 °C. In some embodiments, the battery is capable of being cycled any of the previously described number of times at a temperature of an environment of the battery greater than or equal to -50 °C and less than or equal to 100 °C. According to some embodiments, the discharge capacity (and/or charge capacity) of the battery may decrease by any of the previously described percentages after cycling the battery any of the previously described number of times at a temperature of an environment of the battery greater than or equal to -50 °C and less than or equal to 100 °C.

The battery may have any of a variety of suitable energy densities (e.g., discharge energy densities and/or charge energy densities) at a temperature of an environment of the battery greater than or equal to -50 °C and less than or equal to 100 °C. In certain embodiments, for example, the battery has an energy density greater than or equal to 675 Wh per kilogram of the electrode (e.g., cathode) (Wh/kg), greater than or equal to 700 Wh/kg, greater than or equal to 725 Wh/kg, greater than or equal to 750 Wh/kg, or greater than or equal to 775 Wh/kg at a temperature of an environment of the battery greater than or equal to -50 °C and less than or equal to 100 °C. In some embodiments, the battery has an energy density less than or equal to 800 Wh/kg, less than or equal to 775 Wh/kg, less than or equal to 750 Wh/kg, less than or equal to 725 Wh/kg, or less than or equal to 700 Wh/kg at a temperature of an environment of the battery greater than or equal to -50 °C and less than or equal to 100 °C. Combinations of the above recited ranges are possible (e.g., the battery has an energy density greater than or equal to 675 Wh/kg and less than or equal to 800 Wh/kg at a temperature of an environment of the battery greater than or equal to -50 °C and less than or equal to 100 °C, the battery has an energy density greater than or equal to 725 Wh/kg and less than or equal to 750 Wh/kg at a temperature of an environment of the battery greater than or equal to -50 °C and less than or equal to 100 °C). Other combinations are also possible.

According to certain embodiments, the energy density (e.g., discharge energy density and/or charge energy density) of the battery in units of Watt-hours per kilogram of the electrode (Wh/kg) is calculated by multiplying the charge capacity (and/or discharge capacity) of the battery in units of mAh per gram of the electrode by the discharge nominal voltage (and/or charge nominal voltage). For purposes of illustration, if a battery has a discharge capacity (and/or charge capacity) of 100 mAh per gram of the electrode, and the discharge nominal voltage (and/or charge nominal voltage) is 2.5 V, then the calculated discharge energy density (and/or charge energy density) of the battery per kilogram of the electrode is 250 Wh/kg. As another example, if a battery has a discharge capacity (and/or charge capacity) of 300 mAh per gram of the electrode, and the discharge nominal voltage (and/or charge nominal voltage) is 2 V, then the calculated discharge energy density (and/or charge energy density) of the battery per kilogram of the electrode is 600 Wh/kg.

According to some embodiments, the energy density of the battery per kilogram of the electrode (e.g., cathode) at a temperature of an environment of the battery greater than or equal to -50 °C and less than or equal to 100 °C is at least 10% higher, at least 20% higher, at least 30% higher, at least 40% higher, at least 50% higher, or at least 60% higher than the energy density per kilogram of an electrode of a conventional battery that does not comprise the electrochemically active material but is otherwise equivalent and measured under substantially similar conditions. In some embodiments, the energy density of the battery per kilogram of the electrode (e.g., cathode) at a temperature of an environment of the battery greater than or equal to -50 °C and less than or equal to 100 °C is less than or equal to 70% higher, less than or equal to 60% higher, less than or equal to 50% higher, less than or equal to 40% higher, less than or equal to 30% higher, or less than or equal to 20% higher than the energy density per kilogram of an electrode of a conventional battery that does not comprise the electrochemically active material but is otherwise equivalent and measured under substantially similar conditions.

The battery may have any of a variety of suitable Coulombic efficiencies. In certain embodiments, the Coulombic efficiency of the battery is advantageously high at a temperature of an environment of the battery greater than or equal to -50 °C and less than or equal to 100 °C. For example, in some embodiments, the battery has a Coulombic efficiency greater than or equal to 70%, greater than or equal to 80%, greater than or equal to 90%, greater than or equal to 92%, greater than or equal to 94%, greater than or equal to 96%, greater than or equal to 98%, or greater than or equal to 99% when measured at a temperature of an environment of the battery greater than or equal to -50 °C and less than or equal to 100 °C. In certain embodiments, the battery has a Coulombic efficiency less than or equal to 99.9%, less than or equal to 99%, less than or equal to 98%, less than or equal to 96%, less than or equal to 94%, less than or equal to 92%, less than or equal to 90%, or less than or equal to 80% when measured at a temperature of an environment of the battery greater than or equal to -50 °C and less than or equal to 100 °C. Combinations of the above recited ranges are possible (e.g., the battery has a Coulombic efficiency greater than or equal to 70% and less than or equal to 99.9% when measured at a temperature of an environment of the battery greater than or equal to -50 °C and less than or equal to 100 °C, the battery has a Coulombic efficiency greater

than or equal to 94% and less than or equal to 96% when measured at a temperature of an environment of the battery greater than or equal to -50 °C and less than or equal to 100 °C). Other ranges are also possible.

In certain embodiments, the Coulombic efficiency of the battery decreases by an advantageously small amount after cycling the battery at a temperature of an environment of the battery greater than or equal to -50 °C and less than or equal to 100 °C. In some embodiments, for example, the Coulombic efficiency of the battery decreases by less than or equal to 15%, less than or equal to 10%, less than or equal to 5%, less than or equal to 2%, or less than or equal to 1% after cycling the battery at least 100 times (e.g., at least 150 times, at least 200 times, at least 250 times, at least 300 times, at least 400 times, at least 450 times, at least 500 times, at least 750 times, etc.) at a temperature of an environment of the battery greater than or equal to -50 °C and less than or equal to 100 °C. In certain embodiments, the Coulombic efficiency of the battery decreases by greater than or equal to 0.1%, greater than or equal to 1%, greater than or equal to 2%, greater than or equal to 5%, or greater than or equal to 10% after cycling the battery at least 100 times (e.g., at least 150 times, at least 200 times, at least 250 times, at least 300 times, at least 400 times, at least 450 times, at least 500 times, at least 750 times, etc.) at a temperature of an environment of the battery greater than or equal to -50 °C and less than or equal to 100 °C. Combinations of the above recited ranges are possible (e.g., the Coulombic efficiency of the battery decreases by less than or equal to 15% and greater than or equal to 0.1% after cycling the battery at least 100 times at a temperature of an environment of the battery greater than or equal to -50 °C and less than or equal to 100 °C, the Coulombic efficiency of the battery decreases by less than or equal to 2% and greater than or equal to 1% after cycling the battery at least 100 times at a temperature of an environment of the battery greater than or equal to -50 °C and less than or equal to 100 °C). Other ranges are also possible.

According to certain embodiments, a method of operating an electrochemical cell (e.g., a battery) is described.

In some embodiments, the method comprises discharging the battery. According to certain embodiments, the discharging occurs at a high temperature (i.e., a high temperature of an environment of the battery). For example, in some embodiments, the discharging occurs at a temperature of an environment of the battery greater than or equal to 50 °C (e.g., greater than or equal to 60 °C, greater than or equal to 70 °C, greater than or equal to 80 °C, greater than or equal to 90 °C, etc.).

According to some embodiments, the method comprises charging the battery. In certain embodiments, the charging occurs at a high temperature (i.e., a high temperature of an environment of the battery). In some embodiments, for example, the charging occurs at a temperature of an environment of the battery greater than or equal to 50 °C (e.g., greater than or equal to 60 °C, greater than or equal to 70 °C, greater than or equal to 80 °C, greater than or equal to 90°C, etc.).

In certain embodiments, the method comprises cycling the battery. In some embodiments, the cycling comprises discharging and charging the battery. According to some embodiments, the cycling occurs at a high temperature (i.e., a high temperature of an environment of the battery). For example, in some embodiments, the cycling occurs at a temperature of an environment of the battery greater than or equal to 50 °C (e.g., greater than or equal to 60 °C, greater than or equal to 70 °C, greater than or equal to 80 °C, greater than or equal to 90 °C, etc.).

The cycling may comprise cycling the battery any of a variety of suitable times at a temperature of an environment of the battery greater than or equal to 50 °C. In certain embodiments, for example, the cycling comprises cycling the battery greater than or equal to 100 times, greater than or equal to 150 times, greater than or equal to 200 times, greater than or equal to 250 times, greater than or equal to 300 times, greater than or equal to 350 times, greater than or equal to 400 times, greater than or equal to 450 times, greater than or equal to 500 times, greater than or equal to 750 times, or more, at a temperature of an environment of the battery greater than or equal to 50 °C. In some embodiments, the cycling comprises cycling the battery less than or equal to 1000 times, less than or equal to 750 times, less than or equal to 500 times, less than or equal to 450 times, less than or equal to 400 times, less than or equal 350 times, less than or equal to 300 times, less than or equal to 250 times, less than or equal to 200 times, less than or equal to 150 times, or less, at a temperature of an environment of the battery greater than or equal to 50 °C. Combinations of the above recited ranges are possible (e.g., the cycling comprises cycling the battery greater than or equal to 100 times and less than or equal to 1000 times at a temperature of an environment of the battery greater than or equal to 50 °C, the cycling comprises cycling the battery greater than or equal to 300 times and less than or equal to 350 times at a temperature of an environment of the battery greater than or equal to 50 °C). Other ranges are also possible.

In some embodiments, the method comprises discharging the battery at a low temperature (i.e., a low temperature of an environment of the battery). For example, in some embodiments, the discharging occurs at a temperature of an environment of the battery less than or equal to 0 °C (e.g., less than or equal to -10°C, less than or equal to - 20°C, less than or equal to -30 °C, less than or equal to -40°C, etc.).

According to some embodiments, the method comprises charging the battery at a low temperature (i.e., a low temperature of an environment of the battery). In some embodiments, for example, the charging occurs at a temperature of an environment of the battery less than or equal to 0 °C (e.g., less than or equal to -10 °C, less than or equal to -20 °C, less than or equal to -30 °C, less than or equal to -40 °C, etc.).

According to some embodiments, the cycling (e.g., discharging and charging) occurs at a low temperature (i.e., a low temperature of an environment of the battery). For example, in some embodiments, the cycling occurs at a

temperature of an environment of the battery less than or equal to 0 °C (e.g., less than or equal to -10 °C, less than or equal to -20 °C, less than or equal to -30 °C, less than or equal to -40°C, etc.).

The cycling may comprise cycling the battery any of a variety of suitable times at a temperature of an environment of the battery less than or equal to 0 °C. **In** certain embodiments, for example, the cycling comprises cycling the battery greater than or equal to 100 times, greater than or equal to 150 times, greater than or equal to 200 times, greater than or equal to 250 times, greater than or equal to 300 times, greater than or equal to 350 times, greater than or equal to 400 times, greater than or equal to 450 times, greater than or equal to 500 times, greater than or equal to 750 times, or more, at a temperature of an environment of the battery less than or equal to 0 °C. In some embodiments, the cycling comprises cycling the battery less than or equal to 1000 times, less than or equal to 750 times, less than or equal to 500 times, less than or equal to 450 times, less than or equal to 400 times, less than or equal 350 times, less than or equal to 300 times, less than or equal to 250 times, less than or equal to 200 times, less than or equal to 150 times, or less, at a temperature of an environment of the battery less than or equal to 0 °C. Combinations of the above recited ranges are possible (e.g., the cycling comprises cycling the battery greater than or equal to 100 times and less than or equal to 1000 times at a temperature of an environment of the battery less than or equal to 0 °C, the cycling comprises cycling the battery greater than or equal to 300 times and less than or equal to 350 times at a temperature of an environment of the battery less than or equal to 0 °C). Other ranges are also possible.

According to some embodiments, the method comprises discharging the battery at a temperature of an environment of the battery greater than or equal to -50 °C and less than or equal to 100 °C. In certain embodiments, the method comprises charging the battery at a temperature of an environment of the battery greater than or equal to -50 °C and less than or equal to 100 °C. In some embodiments, the method comprises cycling (e.g., discharging and charging) the battery at a temperature of an environment of the battery greater than or equal to -50 °C and less than or equal to 100 °C. According to certain embodiments, the method may comprises cycling the battery any of the previously described number of times at a temperature of the environment of the battery greater than or equal to -50 °C and less than or equal to 100 °C.

The compositions, articles, systems, and methods described herein may be used in any of variety of suitable applications. In certain embodiments, for example, an electrochemical cell (e.g., a battery) described herein is used in a consumer electronic (e.g., a mobile phone, a computer, a television, a video game console, and the like) and/or an electric vehicle. In certain embodiments, a method described herein is used to operate a battery in a consumer electronic and/or an electric vehicle. Other applications are also possible.

The following applications are incorporated herein by reference, in their entirety, for all purposes: International Patent Application No. PCT/US2022/013925, filed January 26, 2022, and entitled "Fused Aromatic Molecules as Electrode Materials"; International Patent Application No. PCT/US2022/047839, filed October 26, 2022, and entitled "Rechargeable Batteries, Including Organic Batteries"; International Patent Application No. PCT/US2024/022179, filed March 29, 2024, and entitled "Batteries for Operation Across Temperatures and Related Methods"; European Patent Application No. 24167910.9, filed March 29, 2024, and entitled "Batteries for Operation Across Temperatures and Related Methods"; and International Patent Application No. PCT/US2024/022179, filed March 29, 2024, and entitled "Batteries for Operation Across Temperatures and Related Methods".

The following examples are intended to illustrate certain embodiments of the present disclosure, but do not exemplify the full scope of the disclosure.

## EXAMPLE 1

Demand for lithium-ion batteries (LIBs) to endure and perform reliably in extreme thermal conditions is increasing. For example, LIBs for electric vehicles (EVs) need to deliver consistent performance in both colder conditions (e.g., -20 °C) and hot conditions (e.g., 50 °C) relative to the normal (e.g., room temperature). Moreover, certain applications require stable energy storage technologies under even more extreme temperatures, such as subsurface exploration and space vehicles, which currently still rely on primary lithium-thionyl chloride (Li-$SOCl_2$) batteries. LIBs with task-specific designs and formulations have the potential to exceed the temperature range provided by Li-$SOCl_2$ batteries, in addition to providing rechargeability, greater power capability, and significantly lower toxicity. Apart from external influences, inevitable resistive heating while operating LIBs may also cause uncontrollable thermal fluctuations, which can unintentionally lead to hazardous extreme temperatures (e.g., >60 °C) inside the battery pack and potentially cause thermal runaway, posing severe safety concerns. Therefore, practical LIBs are designed to tolerate unintentional thermal fluctuations, regardless of the external conditions. Although certain types of conventional batteries, such as those employing lead-acid and nickel-metal hydride technologies, can operate between -50 °C and 50 °C, their inferior performance relative to LIBs limits their use in diversified applications. Therefore, expanding the operational temperature limits can greatly accelerate the utilization of LIBs in a wider range of applications, leading to a more sustainable future.

Conventional LIBs largely use transition metal oxides as cathode materials, especially those of cobalt (Co), nickel (Ni), and manganese (Mn) (e.g., $LiCoO_2$ (LCO) and $LiNi_{1-x-y}Mn_xCo_yO_2$ (NMC)), which rely heavily on the supply of transition metals and thus are easily affected by supply chain problems. The rate of irreversible metal dissolution and

oxygen evolution in transition metal oxide-based cathodes increase substantially under high temperatures (e.g., >50 °C), leading to accelerated loss of active mass and instability in the structural composition, which ultimately cause serious performance degradation and safety hazards. Conversely, low external temperatures (e.g., <0 °C) cause sluggish solid-state $Li^+$ diffusion and charge transfer kinetics, decreased electrical conductivity of electrode and ionic conductivity of electrolyte, and more serious electrode polarization, which all significantly limit cathode performance. For instance, the capacity of $LiFePO_4$ (LFP) drops by ~75% at -20 °C relative to room temperature, and its rate capability is also severely impacted due to the >300% increase of charge-transfer resistance.

Relative to inorganic counterparts, redox-active organic electrode materials (OEMs), derived entirely from earth-abundant elements, offer an alternative materials space with excellent compositional diversity and structural tunability for designing cathodes for LIBs that are metal-free. Although the value of replacing inorganic cathodes with more sustainable OEMs have previously been appreciated, material candidates in this class that deliver comprehensive performance along all metrics relevant for practical LIBs have remained elusive due to their poor electrical conductivity and electrode dissolution. High temperatures often lead to expedited dissolution of OEMs into electrolyte, whereas low temperatures render the electron transport and charge transfer of OEMs sluggish, both of which result in poor performance in all relevant metrics. Furthermore, although LIBs employing organic electrodes have been shown to exhibit stable performance under low temperatures, research has focused on the optimization of electrolyte formulation. As a result, the electron transport, charge transfer kinetics, and solid-state $Li^+$ diffusion in organic electrode materials under low-temperature conditions have rarely been systematically studied, despite their importance in determining the battery performance. In great contrast, LIBs using organic electrode materials have rarely been shown to exhibit reliable performance under high temperatures due to expedited dissolution of active materials into electrolyte and potential side reactions. Therefore, the structure-performance relationships of OEMs for LIBs operating at high temperatures have remained unexplored. In addition, the challenges for low-temperature and high-temperature operation will become substantially more difficult to overcome when a more relevant active material content (e.g., 90 wt.%) is used for cathodes rather than the low active material content between 60 wt.% and 70 wt.% that is typically used for OEMs in conventional systems.

Described herein is the application of organic rechargeable batteries (e.g. LIBs) using organic fused conjugated molecules, such as bis-tetraaminobenzoquinone (also referred to herein as TAQ) and its derivatives (FIGS. 2A-3), as a cathode material under a wide range of external temperatures involving extreme conditions (e.g., -20 °C to 80 °C). At elevated temperatures (e.g., 50 °C to 80 °C), TAQ-based LIBs cycle stably over hundreds of cycles and deliver higher charge storage capacities compared with that at room temperature, which are substantially higher than state-of-the-art conventional inorganic cathodes under similar conditions. At colder temperatures (e.g., 0 °C to -20 °C), TAQ-based LIBs only experience a slight drop in charge storage capacity while maintaining satisfactory cycling stability over several hundreds of cycles, outperforming most state-of-the-art conventional inorganic cathodes under similar conditions. Conductive and insoluble TAQ represents a unique LIB cathode material that offers essentially temperature-tolerant performance in a wide range of external temperatures, which is unknown for any other battery materials.

Battery performances of TAQ-Li cells display discharge cathode capacities (at a current density of 200 mA/g or 1C) reaching 286 mAh/g at 50 °C, 274 mAh/g at 60 °C, 272 mAh/g at 70 °C, and 286 mAh/g at 80 °C. The TAQ-Li cells exhibit good cycling stability where the best capacity retention of 92% after cycling the cell at 50 °C and 200 mA/g for 300 cycles is recorded. Although slightly faster capacity decays are observed for cycling studies of TAQ-Li cells under 60 °C and 70 °C, capacity retentions still reach 70% after 360 cycles at 60 °C and 200 mA/g and reach 82% after 240 cycles at 70 °C and 200 mA/g. For context, $LiNi_{1/3}Mn_{1/3}Co_{1/3}O_2$ (NMC111), which is widely used as a conventional cathode material of LIBs in EVs, exhibits cathode capacity drop from 135 mAh/g to 96 mAh/g (with advanced electrolyte additives) or 47 mAh/g (without electrolyte additives) after 100 cycles at 60 °C and 1C. In other words, TAQ delivers twice as much of the capacity of NMC111 with better cycling stability under higher external temperatures.

TAQ also exhibits reliable performance under low temperature extremes. TAQ-Li cells deliver cathode capacities (at a current density of 200 mA/g or 1C) reaching 202 mAh/g at 0 °C, 224 mAh/g at -10 °C, and 194 mAh/g at -20 °C. The TAQ-Li cells exhibit good cycling stability where cycling studies at 200 mA/g and 0° C reveal the best capacity retention of 96% after 750 cycles. Cycling studies at 200 mA/g reveal capacity retentions no less than 70% after 300 cycles under either -10 °C or -20 °C. For context, $LiNi_{0.5}Mn_{0.3}Co_{0.2}O_2$ (NMC532), another widely used inorganic cathode material for conventional LIBs, exhibits a capacity retention of 54.7% (without electrolyte additives) or 73.8% (with advanced electrolyte additives) at -10 °C after 100 cycles. The fact that TAQ performs well in both low and high temperature extremes provides important advancement compared with conventional inorganic cathode materials for LIBs.

International Application No. PCT/US2022/013925, filed January 26, 2022, entitled "FUSED AROMATIC MOLECULES AS ELECTRODE MATERIALS", which is incorporated herein by reference in its entirety, describes that the TAQ molecule and its polymeric derivative, along with their derivatives and compositional analogues, are excellent candidates for ultrahigh-power energy storage (e.g., at room temperature) in devices that use aqueous electrolytes. International Application No. PCT/US2022/047839, filed October 26, 2022, entitled "RECHARGEABLE BATTERIES, INCLUDING ORGANIC BATTERIES", which is also incorporated herein by reference in its entirety, describes the full-cell performances (e.g., at room temperature) of TAQ, its polymeric derivative, along with their derivatives and compositional

analogues, in devices that use non-aqueous organic electrolytes. Described herein is the full-cell performance of TAQ-based LIBs under extreme temperature conditions (e.g., temperatures down to -20 °C and up to 80 °C). The demonstration of stable performance at both high and low temperature extremes significantly extends the environmental frontiers of TAQ-based LIB cells, enabling its reliable use in consumer electronics and EVs regardless the external/internal temperatures, and its potential use in diversified applications including even subsurface exploration, space technologies, and military use. The ability of an electrode material for LIBs to function properly at room temperature does not indicate or guarantee its stable function in temperature extremes. Therefore, the stable and outstanding performance of TAQ-based LIB cells at both low and high temperature extremes as described herein is a distinct contribution from a scientific standpoint.

OEMs should: (i) exhibit limited dissolution during cycling to achieve stable performance under high temperatures; and (ii) exhibit adequate electrical conductivity to operate reliably under low temperatures. Fused aromatic molecules, such as TAQ, are a specific class of organic materials in which the fused rings in the backbone are co-planar and $\pi$-conjugated (FIGS. 2A-2B). These structural features lead to high structural stability and provide basis for strong inter-molecular $\pi$-$\pi$ stacking interactions. In addition to these features, TAQ exhibits a high density of heteroatomic functionalities including imines and quinones that serve as both redox-active sites and hydrogen bonding donors/acceptors. This unique mix of in-plane electronic conjugation, interplane $\pi$-$\pi$ stacking, and strong intra-plane hydrogen bonding interactions produce a highly insoluble molecular solid with high bulk electrical conductivity.

Therefore, described herein is the use of TAQ and its analogues as electrodes for batteries under high and low temperature extremes, based on the following design principles: (i) the material has a continuously $\pi$-conjugated planar backbone that ensures high bulk electrical conductivity values of greater than $10^{-6}$ S/cm, facilitating low charge-transfer resistance even at extreme temperatures; and (ii) the material has strong intermolecular hydrogen bonding and closely-packed two-dimensional (2D) inter-layer $\pi$-$\pi$ interactions, which ensures high insolubility and high $Li^+$ diffusivity at extreme temperatures, leading to good cyclability and limited drop of capacity, respectively.

A TAQ composite electrode was made from TAQ, carbon black (CB), carboxymethyl cellulose (CMC), and styrene-butadiene rubber (SBR) with a mass ratio of 90:5:4:1, respectively. High carbon content electrodes contained TAQ, CB, CMC, and SBR with a mass ratio of 75:20:4:1, respectively. The electrodes were tested in CR2032 coin cells against a lithium metal anode (represented as a TAQ-Li cell herein) which were assembled in an argon (Ar)-filled glove box. The cases (e.g., external surfaces) of the coin cells were made from stainless steel 316. The coin cells had a diameter of about 20 millimeters and a thickness of about 3.2 millimeters. CMC and SBR were well dissolved and/or suspended in a small amount of water (50~100 $\mu$L/mg) upon heating at 85 °C with vigorous stirring for an hour. Well-mixed TAQ and CB powders were transferred into the CMC/SBR aqueous mixture, and the resulting mixture was vigorously stirred at 85 °C for two hours to produce the cathode slurry, which was then coated on stainless steel current collectors. All electrodes were dried under ambient conditions before drying in a vacuum oven at 100 °C for 12 hours. TAQ electrodes had areal active material mass loadings between 2.0 and 4.0 mg/cm$^2$. TAQ-Li half cells used a lithium chip as the anode and a glass fiber separator. Commercial electrolytes including 1 M LiTFSI in DME and 1DOL (1:1 vol.%) and 1 M LiTFSI in tetraglyme were used for battery tests. Batteries were typically tested using a galvanostatic charge-discharge between 1.5 V and 3.3 V versus $Li^+$/Li using a battery cyclers at various temperatures (-20 °C to 70 °C).

For high and low temperature battery measurements, the coin cell was placed in a closed environment of an oven (i.e., for high temperature measurements greater than 25 °C) or a freezer (i.e., for low temperature measurements less than 25 °C). Prior to evaluation of the coin cell, the coin cell was kept at the target temperature for at least 8 hours to allow the external surfaces of the coin cell to reach equilibrium with the target temperature of the stagnant air in the oven or freezer. The coin cells were rather thin and small to allow fast thermal conduction between the external surface and the center of the battery even at fast charge-discharge speed, so that the temperature variation upon dissipation was negligible. A temperature sensor was configured less than or equal to 15 centimeters from an external surface of the coin cell and used to measure the temperature of the stagnant air in the oven or freezer before and during evaluation of the coin cell (e.g., during discharging and/or charging). The oven or freezer was kept closed during evaluation of the coin cell.

The electrode delivers about 269 mAh/g of reversible cathode capacity at 50 °C and a current density of 40 mA/g (FIG. 4). A cycling study of the TAQ-Li cell exhibits a capacity retention of 76% after 95 cycles (FIG. 5). Increasing the current density to 200 mA/g reveals essentially no drop in the cathode capacity, as verified by the average discharge cathode capacity of about 270 mAh/g over two TAQ-Li cells cycled at 50 °C (FIG. 6). Cycling studies of these two cells give an average capacity retention of 92% after 300 cycles. Raising the external temperature of one of the two TAQ-Li cells to 80 °C after 305 cycles at 50 °C slightly increased the cathode capacity from ~275 mAh/g to ~286 mAh/g. Remarkably, the TAQ-Li cell still cycles stably at 80 °C, leading to only a ~8% capacity drop after 100 cycles (FIG. 7).

Under an external temperature of 60 °C, a TAQ-Li cell exhibits a reversible cathode capacity of 274 mAh/g at a current density of 200 mA/g. Its cycling study reveals a capacity retention of 70% after 360 cycles (FIG. 8). The cathode capacity of this TAQ-Li cell increased from 212 mAh/g to 221 mAh/g when the external temperature raised to 70 °C during the cycling study. The subsequent cycling study at 70 °C reveals a capacity retention of 82% after 240 cycles (FIG. 8). Cycling another TAQ-Li cell at 70 °C and a current density of 25 mA/g reveals an initial reversible cathode capacity of ~280 mAh/g and a capacity retention of ~75% after 60 cycles (FIG. 9).

Sequential temperature swing studies of two TAQ-Li cells at 200 mA/g between high temperatures and room temperature (i.e., 50 °C → 25 °C → 60 °C → 25 °C → 70 °C → 25 °C → 70 °C) reveals stable operation even under circumstances when drastic temperature changes happen (FIG. 10). Subsequent cycling studies at 70 °C after the swing studies exhibit an average capacity retention of 91% after about 200 cycles.

Under an external temperature of 0 °C, two TAQ-Li cells deliver an average discharge cathode capacity of 178 mAh/g at a current density of 200 mA/g after 1000 cycles, exhibiting an excellent average capacity retention of 91% (FIG. 11). An activation-like behavior that the capacity increases to a maximum during the first few cycles is observed for both cells. Therefore, the capacity retention is calculated against the highest capacity value observed during cycling.

Under an external temperature of -10 °C, two TAQ-Li cells deliver an average discharge cathode capacity of 193 mAh/g at a current density of 200 mA/g after 340 cycles, exhibiting an average capacity retention of 80% (FIG. 12). A more significant activation-like behavior is recorded for both cells compared to that observed at 0 °C.

Under an external temperature of -20 °C, a TAQ-Li cell delivers an initial reversible cathode capacity of 259 mAh/g at a current density of 25 mA/g. The cathode capacity of this TAQ-Li cell slightly decreases to 223 mAh/g after 40 cycles at -20 °C, corresponding to a capacity retention of 86% (FIG. 13). Cycling a TAQ-Li cell at 200 mA/g leads to a severe activation-like behavior, where the cathode capacity increases from 136 mAh/g to 194 mAh/g. Subsequent cycling reveals a discharge cathode capacity of 133 mAh/g after 600 cycles, corresponding to a capacity retention of ~70% (FIG. 14).

A comparison of the battery performances of TAQ-Li cells under a variety of temperatures versus state-of-the-art conventional LIBs using inorganic cathodes contextualizes the advancements described herein. First, with close capacity-loss-per-day values, TAQ exhibits ~40% more energy density at 60 °C compared with LCO and LFP (FIG. 15A). Second, TAQ delivers about double the energy density relative to NMC523 while exhibiting less than half of the capacity-loss-per-day value at -20 °C (FIG. 15B). In fact, the energy density of TAQ is significantly higher than all the conventional inorganic cathode materials in the comparison from -20 °C to 70 °C. Such superior performance of TAQ in all relevant temperature ranges including high and low extremes marks its great potential for applications involving harsher external conditions.

TAQ and its analogues outperform conventional inorganic cathode materials for LIBs under both high and low temperature extremes while offering low cost and environmental benignity. With such stable performance at high temperatures, TAQ-based LIBs can enable more efficient cooling of battery packs in EVs by operating at higher temperature relative to inorganic LIBs without sacrificing battery performance. The reliable low temperature performance of TAQ-based LIBs will allow EVs to survive colder environments. These enormous advancement in performance of TAQ-based LIBs compared with commercial inorganic LIBs offer great potential for the commercial use of TAQ.

Sustainable battery technologies that power portable electronics and EVs are receiving great industrial interest owing to the need to transition toward a low-carbon society. Several car makers and governments around the world have come up with ambitious goals in this regard. However, battery technologies must demonstrate stable performance in a wide range of temperatures to meet the requirements of more diversified applications. The TAQ-based batteries described herein provide a more sustainable alternative to traditional inorganic LIBs, while performing better in both high and low temperature extremes.

TAQ was synthesized according to the following procedure. To a 250 mL pressure tube with a polytetrafluoroethylene (PTFE) cap was added 1.07 g of 2,3,5,6-tetraamino-1,4-benzoquinone, 8.3 g of tetrabutylammonium chloride (99%, Alfa Aesar), and 80 mL of dimethylformamide (DMF). The tube was capped under ambient conditions, sonicated for 1 minute, and heated in an isothermal oven at 120 °C for 12 hours, after which it was cooled down to room temperature. Then the reaction mixture was filtered and washed with DMF until the filtrate came out colorless. The resulting dark-greenish black solid (TAQ) was further washed with methanol and dried under vacuum yielding 0.24 g (24% yield). Employing anhydrous tetrabutylammonium bromide instead of anhydrous tetrabutylammonium chloride can increase the yield of TAQ at the expense of slightly decreased crystallinity.

Electrical conductivities were measured at 296 K in ambient atmosphere on pressed pellets using a 2-probe setup. At least three pellets from different batches of each sample were measured. The thickness of the pellets was between 0.3 mm and 1 mm. For each sample, the conductivity values were averaged to give the average conductivity value.

## EXAMPLE 2

A TAQ-Li cell was fabricated with a lithium metal anode and a TAQ composite cathode. The TAQ composite was made from TAQ, CB, CMC, and SBR with a mass ratio of 90:5:4:1, respectively. Performance of the TAQ-Li cell was evaluated under various temperatures. FIG. 16 shows a charge-discharge voltage profile of the TAQ-Li cell at five different temperatures (-20 °C, 0 °C, 25 °C, 50 °C, and 70 °C) and a current density of 25 mA/g, in accordance with certain embodiments. FIG. 17 shows the active material utilization of the TAQ-Li cell at the five different temperatures at different current densities, in accordance with certain embodiments. FIG. 18 shows the rate performance of the TAQ-Li cell at the five different temperatures, in accordance with certain embodiments. FIG. 19 shows the cycling performance of the TAQ-Li cell at the five different temperatures, in accordance with certain embodiments. The specific capacity, as shown in FIGS.

16, 18, and 19, was measured in units of mAh per gram of electrode.

TAQ-Li cells were evaluated for electrode optimization. FIG. 20 shows a charge-discharge voltage profile comparison of TAQ-Li cells using a TAQ-based cathode with either 5% CB or 20% CB, in accordance with certain embodiments, showing that higher CB content dramatically increase the capacity at -20 °C. FIG. 21 shows the rate performance of a TAQ-Li cell using a TAQ-based cathode with 20% CB, in accordance with certain embodiments. FIG. 22 shows the cycling performance of TAQ-Li cells using a TAQ-based cathode with either 5% CB or 20% CB, in accordance with certain embodiments. The specific capacity, as shown in FIGS. 20-22, was measured in units of mAh per gram of electrode.

TAQ-Li cells were also evaluated for electrolyte optimization. FIG. 23 shows the cycling performance of a TAQ-Li cell in 1 M lithium bis(trifluoromethane)sulfonimide (LiTFSI) tetraglyme electrolyte at 70 °C and a current density of 200 mA/g, in accordance with certain embodiments. The specific capacity, as shown in FIG. 23, was measured in units of mAh per gram of electrode.

## EXAMPLE 3

The performance and safety of LIBs at sub-zero and high (> 50 °C) temperatures are related to electrode materials, electrolyte formulations, and electrode-electrolyte interphases, whereas the intrinsic properties of the electrode materials, such as stability, conductivity, and ion diffusivity, determine the performance limits under these extreme conditions. In this example, an electrically conductive and insoluble organic fused conjugated molecule, bis-tetraaminobenzoquinone (TAQ) (FIG. 24A), was employed as the representative cathode material for battery studies under a wide range of external temperatures ranging from -20 °C to 100 °C. At high temperatures, TAQ's excellent conductivity and low solubility prevented material dissolution and degradation, enabling stable cycling performance over hundreds of cycles and delivering charge storage capacities superior to conventional commercial and state-of-the-art inorganic cathodes. TAQ's stability at high temperatures is attributed to its strong intermolecular hydrogen bonding and π-π stacking, enabling competitive performance even at 100 °C. At lower temperatures (e.g., -20 °C), TAQ maintained remarkable solid-state $Li^+$ diffusivity, ensuring competitive performance despite a limitation in its overall electrical conductivity under such conditions. TAQ's performance at low temperatures is limited by charge transport in the electrode bulk rather than solid-state $Li^+$ diffusivity, despite being among the most conductive OEMs. Conductive and insoluble TAQ represents a unique LIB cathode material that offers essentially temperature-tolerant performance in a wide range of external temperatures, positioning TAQ as a competitive cathode material for LIBs operating across extreme thermal conditions.

TAQ electrochemically stores up to four lithium ions ($Li^+$) per formula with an average discharge potential of 2.5 V (vs. $Li^+$/Li if not otherwise noted) and a high theoretical capacity of 356 mAh $g^{-1}$ (FIG. 24A). The van der Waals layered structure of TAQ allows $Li^+$ to easily intercalate in between two dimensional (2D) hydrogen-bonded molecular layers at room temperature and provides facile 2D $Li^+$ diffusion pathways. *In-operando* PXRD measurements of a customized TAQ||Li coin cell revealed the structural evolution of TAQ during cycling between 1.6 V and 3.3 V at 0.05 A/g (FIG. 24B). The electrode formulations, active material loading, and electrolyte used are summarized in the box. The voltage profile is shown on the left, PXRD patterns in the middle, and the contour map of a selected 2θ range on the right. During the first discharge plateau of the first cycle that roughly corresponds to the intercalation of two $Li^+$, the interlayer spacing increased from 3.14 Å to 3.33 Å, together with the broadening of reflection peaks due to intercalation-induced structural disordering. The subsequent discharge resulted in a slight increase in interlayer spacing from 3.33 Å to 3.38 Å, leading to an overall 7.6% increase in interlayer spacing during the first discharging process. The structural evolution during the first discharging/charging cycle was almost symmetrical except that the interlayer spacing became 3.18 Å for the recharged state, indicating that the crystal structure underwent irreversible expansion of approximately 1.3%. During the following steady-state cycling, the interlayer spacing varied smoothly between 3.18 Å and 3.38 Å, accounting for a change of approximately 6.3%. The crystal structure of TAQ remained intact during cycling, and the morphology of TAQ crystallites also remained largely unchanged, confirming the high structural and chemical stability of TAQ.

The high-temperature performance of organic cathode materials for LIBs depends on the solubility of the active materials in organic electrolytes as dissolution leads to rapid capacity decay, dramatically reducing the cycling lifetime. On the other hand, the performance of LIBs at low temperatures is heavily dependent on the charge transport and transfer resistance, as well as the solid-state $Li^+$ diffusion resistance of the electrode. The solubility of TAQ electrodes and deeply lithiated TAQ ($Li_x$-TAQ, $3<x<4$) electrodes in a commercially available electrolyte (1 M LiTFSI in DOL/DME (1/1 vol.%)) under various temperatures was evaluated (FIGS. 24C and 31). The electrodes tested contained 90 wt.% of TAQ and only 10 wt.% of carbon and binder if not otherwise noted, a cathode composition that is comparable with conventional commercial inorganic cathodes but hardly achievable for organic electrode materials. The electrodes were soaked in 2 mL of electrolyte, and kept under various temperatures ranging from -20 °C to 70 °C for 24 hours. Remarkably, both TAQ and $Li_x$-TAQ electrodes exhibited complete insolubility even at temperatures as high as 70 °C (FIG. 24C), as verified by no coloration of electrolyte, offering a great potential for enabling stable high-temperature LIB cathode performance. This insolubility stems from strong intermolecular hydrogen bonding between TAQ molecules and interlayer π- π stacking,

which both persist even upon deep lithiation.

Apart from charge-transfer complexes and conducting polymers, OEMs typically exhibit poor electrical conductivity, which is generally lower than $10^{-7}$ S $cm^{-1}$, and has almost never exceed $10^{-6}$ S $cm^{-1}$. Moreover, it is believed that the electrical conductivity of OEMs at different state of charge/discharge has never been systematically studied before. However, it has been well established for inorganic cathode materials (e.g., NMC) that their electrical conductivity can change drastically according to different state of charge, significantly affecting the charge storage kinetics, especially under higher rates. Therefore, to gain a thorough understanding of electron transport properties of TAQ during cycling, the electrical conductivity of TAQ at different discharge states under different temperatures was examined. It was previously shown that neat TAQ electrodes (i.e., no carbon and binder) can function well as LIB cathodes, offering a great opportunity for evaluation of the electrical conductivity of lithiated TAQ without the interference from carbon and binders. Pure TAQ was electrochemically lithiated to produce $Li_1$-TAQ, $Li_2$-TAQ, and $Li_3$-TAQ (noting that the intercalation of all four $Li^+$ is hardly achievable for neat TAQ electrodes), which exhibited decreased crystallinity due to $Li^+$ intercalation, as revealed by their PXRD patterns with slight peaking broadening relative to that of pristine TAQ. Furthermore, the molecular separation within both the in-plane and out-of-plane directions increased for lithiated TAQ, as suggested by the shifting of the reflections towards lower $2\theta$ values, respectively (FIG. 32), matching well with the *in-operando* data. All $Li_x$-TAQ (x = 0, 1, 2, or 3) materials showed thermally activated semiconducting behavior (FIG. 24D). The pristine TAQ exhibited an electrical conductivity of $2.0\times 10^{-6}$ S $cm^{-1}$ at 25 °C, as measured on a pressed pellet by a two-probe method using a customized Swagelok cell (FIG. 24D, inset). In comparison, all lithiated TAQ materials showcase over two orders of magnitude increase in electrical conductivity at 25 °C, exceeding $10^{-4}$ S $cm^{-1}$ (see FIG. 33 for exact conductivity values). TAQ, $Li_2$-TAQ, and $Li_3$-TAQ exhibited similar activation energies ($E_A$) of charge transport between 0.248 eV and 0.262 eV, whereas $Li_1$-TAQ had a slightly lower $E_A$ of 0.215 eV. These $E_A$ values are comparable to that of most conductive inorganic LIB cathode materials and some organic electronic materials, suggesting small bandgaps for all four materials. Notably, $Li_x$-TAQ exhibited electrical conductivity values of over $10^{-3}$ S $cm^{-1}$ at 70 °C, and their conductivity at -20 °C still maintained around $10^{-5}$ S $cm^{-1}$ to $10^{-4}$ S $cm^{-1}$. In summary, TAQ exhibited significantly enhanced electron transport performance upon lithiation; meanwhile, TAQ and $Li_x$-TAQ maintained facile charge transport capability across a wide range of temperatures ranging from -20 °C to 70 °C.

Motivated by the superior electrical conductivity and insolubility, TAQ was used as a positive electrode in TAQ‖Li half cells, and the electrochemical performance of the battery system was evaluated at different temperatures (-20 °C, 0 °C, 25 °C, 50 °C, and 70 °C). -20°C is lower than the coldest temperatures experienced in most environments where batteries are used, and 70°C exceeds the operating temperatures in most applications, including those in hot climates or under heavy load. FIG. 16 shows the voltage profiles for the battery at the 3rd cycle under a current density of 25 mA $g^{-1}$, measured at various temperatures (-20°C to 70°C), showing distinct discharge capacities and potential plateaus at 25 mA $g^{-1}$. Results indicated a temperature dependence, with higher temperatures (50 °C and 70 °C) yielding higher capacities (close to 4-electron theoretical capacity of 355 mAh $g^{-1}$) and more distinct voltage plateaus. In contrast, lower temperatures (-20 °C and 0 °C) reduced both the capacity and the flatness of the charge-discharge curves. This phenomenon was more pronounced in the case of different current density. Active material utilization reached close to 100% at 50 °C and 70 °C at a low current density of 25 mA/g, and even at an ultra-high current density of 5 A/g, TAQ still maintained over 60% of material utilization (FIG. 17). In contrast, at lower temperatures, material utilization decreased sharply with increasing current density, reflecting limitations in either electrode electrical conductivity or lithium-ion diffusion and charge transport. At -20 °C, the material utilization was the lowest, particularly at higher current densities (FIG. 17). FIG. 18 presents the rate performance over 70 cycles at different current densities ranging from 25 mA/g to 5 A/g under varying temperatures, highlighting the specific capacity and Coulombic efficiency. In comparison with the rate performance at 25 °C, as the temperature increases, the capacity improved drastically, with 70 °C showing the highest values across all cycles. Notably, even at a super-high current density of 5 A/g (approximately 150 seconds per charge/discharge), the cell still reached over 200 mAh/g of capacity. Interestingly, the capacity stabilized back to the initial capacity even after higher current charge/discharge and returning back to 25 mA/g, indicating remarkable material stability under elevated temperatures. TAQ‖Li cells exhibited exceptional long-term cycling stability, with negligible capacity decay over 400 cycles at 200 mA/g between -20 °C and 50 °C (FIG. 25). However, their stability declined at 70 °C, likely due to the combined effects of material solubility and electrolyte degradation. Interestingly, in contrast, the cycling Coulombic efficiency (CE) remained very stable between 20 °C and 50 °C (close to 100%) but fluctuated at 70 °C, primarily due to the stability of the Li metal and the solid electrolyte interphase (SEI) (FIG. 25).

To better understand the excellent high-temperature performance of TAQ and the factors contributing to capacity decay at 70 °C, the solubility of neat TAQ and its fully lithiated form, $Li_4$TAQ, in 1M LiTFSI DOL/DME (1: 1 vol%) electrolyte between -20 °C and 70 °C was quantitatively analyzed using UV-vis spectroscopy based on the Beer-Lambert law (FIG. 26B). TAQ exhibited negligible solubility below 25 °C and only 4.6 $\mu$M at 70 °C, demonstrating its exceptional insolubility. Although $Li_4$TAQ exhibited slightly higher solubility than TAQ, it only dissolved 7.5 $\mu$M at 70 °C. In great contrast, commercially available prototypical organic electrode materials, such as anthraquinone (AQ), tetraamino-1,4-benzoquinone (TABQ), and pyrene-4,5,9,10-tetraone (PTO) (FIG. 26A), exhibited substantially higher solubility in the same

electrolyte (FIG. 26B). Particularly, AQ and PTO were several thousand times more soluble than TAQ, and the solubility difference was significantly amplified under higher temperatures. This comparison highlights the importance of strong intermolecular hydrogen bonding in determining the solubility and structural integrity of OEMs. On the other hand, TABQ, a well-known organic cathode material featuring pervasive intermolecular hydrogen bonding interactions, also showed solubility several hundred times greater than TAQ. This stark difference underscores the critical role of extended π-conjugation and interlayer π-π stacking in suppressing dissolution, a trend that was also observed in the difference between the solubility of AQ and PTO. Interestingly, the solubility of TABQ dropped at 70 °C due to its self-condensation reaction, which has been observed previously and was also confirmed according to the change in the absorption spectra. This result suggests that not only the solubility matters at high temperatures, the chemical stability of organic electrode materials also plays a role, which has been largely overlooked in previous research. In summary, these findings emphasize that the unique structural advantages of TAQ, namely strong intermolecular π-π stacking and hydrogen bonding, contribute to its outstanding stability and low solubility under extreme thermal conditions.

FIG. 26C demonstrates the role of electrolyte stability in the cycling performance of TAQ||Li cells at 70 °C. In 1M LiTFSI DOL/DME electrolyte, the cycling stability was limited, with slow capacity fading over time and fluctuating Coulombic efficiency, pointing to issues with electrolyte degradation and SEI instability at high temperatures. To address this, solvents with higher boiling points were explored. Using triglyme, a solvent with improved thermal stability, significantly enhanced the cycling performance, with a high capacity retention of 77% after 500 cycles. Further improvements were achieved with tetraglyme, a solvent with an even higher boiling point of 275 °C, where the cells exhibited the best cycling stability (83% retention after 500 cycles) and consistently high Coulombic efficiency. These results underscore solvent stability in achieving reliable battery operation under elevated temperatures. For comparison, 7-diaminopyrene-4,5,9,10-tetraone ($PTO-NH_2$), a conventional state-of-the-art organic cathode material, was tested using the same electrode formulation (90% active material, 5% CB, 5% binder). The capacity was limited to below 165 mAh/g, far from its theoretical value of ~300 mAh/g, due to poor electrical conductivity (FIGS. 26C-26D). Furthermore, its cycling was also unstable, and the capacity dropped from 165 mAh/g to 51 mAh/g within 50 cycles, which is primarily because of its high solubility at elevated temperatures, leading to continuous material loss during operation. Other conventional commercial organic electrode materials including AQ, PTO, and TABQ could barely cycle at 70 °C using such an electrode formulation with high active material content and low carbon/binder content (FIG. 26D), where their capacities are all below 25 mAh/g. Finally, the cycling performance of TAQ cathodes under an even harsher thermal condition (100 °C) was tested, and a stable cycling was observed with discharge capacities around theoretical values, despite the relatively poor CE in the initial 10 cycles mostly due to the attenuated performance of Li anode under such a harsh thermal condition (FIG. 26E). These findings highlight the exceptional performance of TAQ as a cathode material for high-temperature Li-ion batteries. Its strong intermolecular interactions, including π-π stacking and hydrogen bonding, result in low solubility even at 70 °C, while its intrinsic conductivity enables efficient charge transport. In contrast, conventional state-of-the-art organic electrode materials face significant limitations under similar conditions.

Compared to the limitations on cathode performance at high temperatures, which are primarily influenced by material solubility and electrolyte stability, the low-temperature performance is mainly constrained by electrical conductivity, charge transfer resistance, and lithium-ion diffusion through SEI as well as within the cathode materials. The low-temperature performance (e.g., -20 °C) of a TAQ cathode was poorer than the high-temperature performance, especially under high current densities. Therefore, the factors limiting the low-temperature performance of TAQ cathode materials were investigated. To understand the influence of the electrical conductivity of the electrodes, the charge-discharge performance of TAQ electrodes with different CB contents of 5 wt.% and 20 wt.% were compared at -20 °C. It is believed that under the same temperature conditions, increasing the carbon content will only affect the conductivity of the electrode and will not change the $Li^+$ migration and diffusion in the electrolyte, electrode material, or at their interfaces. Interestingly, the reversible capacity at -20 °C increased from 245 mAh/g to 309 mAh/g, very close to the theoretical capacity of 355 mAh/g (FIG. 20), by just adding 15 wt.% more CB. The rate capability of TAQ electrode with 20 wt.% CB also significantly improved in comparison with that of electrodes with only 5 wt.% CB (FIGS. 18 and 21). In particular, FIG. 21 shows cycling of a TAQ electrode using 20% CB at -20 °C with various current densities ranging from 25 mA $g^{-1}$ to 5 A $g^{-1}$. Even at an ultra-high current density of 5 A/g, TAQ electrodes with 20 wt.% CB still reached 173 mAh/g, whereas the value for electrodes with 5 wt.% CB was only 27 mAh/g, indicating that the rate performance of TAQ at low temperature is influenced by the electron conduction throughout the bulk of electrode. The limitation of $Li^+$ diffusion at low temperature is another important factor limiting the battery performance. It is believed that with 20% CB in the electrode, electron transport remains efficient even at -20 °C, minimizing the impact of conductivity on battery performance. At higher temperatures, performance is primarily influenced by $Li^+$ diffusion rather than conductivity. Therefore, the battery performance of 20 wt.% CB electrodes at -20 °C and 25 °C was compared to assess the impact of $Li^+$ diffusion on low-temperature performance. According to FIGS. 27A-27B, at lower current densities (e.g., 25-100 mA/g), electrical conductivity was the dominant factor, contributing over 90% to the capacity limitation. As the current density increased, the impact of $Li^+$ diffusion became more significant, increasing from 7% at 25 mA/g to 29% at 3000 mA/g. However, even at higher current densities, electrical conductivity remained the dominant limitation, consistently contributing more to the capacity loss than $Li^+$ diffusion at low temperature.

Cells at -20°C with 5% and 20% CB showed the limitation of electrical conductivity to rate capability, while at sufficient 20% CB, increasing the temperature changed the $Li^+$ diffusivity. FIG. 27C shows the $Li^+$ diffusion coefficient ($D_{Li^+}$) during a full discharge-charge cycle across different temperatures, ranging from -20 °C to 70 °C. The diffusion coefficient remained within $10^{-9}$ to $10^{-10}$ $cm^2/s$ under most equilibrium potentials, which is comparable to conventional state-of-the-art organic electrode materials. Notably, the diffusion coefficient exhibited minimal variation across temperatures, indicating that $Li^+$ diffusion is relatively stable even at low temperatures. This further confirms that $Li^+$ diffusion is not the primary limiting factor for battery performance at low temperatures, whereas electrical conductivity also plays a role.

TAQ is a high-performance organic cathode material for lithium-ion batteries operating across an extreme temperature range (-20 °C to 100 °C). Its intrinsic conductivity, structural stability, and low solubility enables TAQ to deliver near-theoretical capacities and excellent cycling stability under both high and low-temperature conditions. Electrode compositions with higher conductive carbon content further enhance performance at sub-zero temperatures, which highlights that the low temperature performance is dominated by the electrical conductivity instead of $Li^+$ diffusion. This example highlights the potential of TAQ for developing sustainable, temperature-tolerant batteries, advancing their applicability in diverse environments, from electric vehicles to extreme industrial and exploratory settings.

PXRD: Laboratory PXRD patterns were recorded using a Bruker Advance II diffractometer equipped with a θ/2θ reflection geometry and Ni-filtered Cu Kα radiation ($K\alpha_1$ = 1.5406 Å, $K\alpha_2$ = 1.5444 Å, $K\alpha_2/K\alpha_1$ = 0.5). The tube voltage and current were 40 kV and 40 mA, respectively. Samples for PXRD were prepared by placing a thin layer of the appropriate material on a zero-background silicon crystal plate. FIG. 29A shows the experimental and calculated (based on reported single-crystal structure) PXRD patterns of TAQ, in accordance with certain embodiments.

SEM: SEM images were collected on a Zeiss Merlin high-resolution scanning electron microscope with an InLens detector at an operating voltage of 3 or 4 kV. FIG. 29B shows a SEM image of TAQ, in accordance with certain embodiments. FIG. 29C shows a cryo-EM image of TAQ crystals, in accordance with certain embodiments.

FIGS. 30A-30D show high-magnification cryo-EM images of TAQ, in accordance with certain embodiments. FIG. 30B corresponds to the highlighted area in FIG. 30A. FIG. 30D is the fast Fourier transform (FFT) of FIG. 30C. The d spacings obtained from the diffraction spots matched well with the reported crystal structure of TAQ.

GITT: The effective chemical lithium diffusion coefficient in the active material was derived from the GITT potential response. The chemical diffusion coefficient was calculated at each step, with the following formula:

$$D = \frac{4}{\pi}\left(\frac{iV_m}{Z_A FS}\right)^2 \left[\left({dE}/{d\delta}\right) \Big/ \left({dE}/{d\sqrt{t}}\right)\right]^2 \qquad (1)$$

Here, i is the current (A); $V_m$ is the molar volume of the electrode ($cm^3/mol$); $Z_A$ is the charge number; F is the Faraday's constant (96485 C/mol); S is the electrode/electrolyte contact area ($cm^2$); dE/dδ is the slope of the coulometric titration curve, found by plotting the steady state voltages E (V) measured after each titration step δ; dE/d√t is the slope of the linearized plot of the potential E (V) during the current pulse of duration t (s).

If sufficient small currents are applied for short time intervals, so that dE/d√t can be considered linear and the coulometric titration curve can be also considered linear over the composition range involved in that step, Equation 1 can be simplified into:

$$D = \frac{4}{\pi\tau}\left(\frac{n_m V_m}{S}\right)^2 \left[\frac{\Delta E_s}{\Delta E_t}\right]^2 \qquad (\tau \ll {L^2}/{D}) \qquad (2)$$

Here, τ is the duration of the current pulse (s); $n_m$ is the number of moles (mol) of the active material; $V_m$ is the molar volume of the electrode ($cm^3/mol$); S is the electrode/electrolyte contact area ($cm^2$); $\Delta E_s$ is the steady-state voltage change, due to the current pulse and $\Delta E_t$ is the voltage change during the constant current pulse, eliminating the iR drop. L is the film thickness. FIGS. 28A-28B show examples for charge and discharge, respectively, where $\Delta E_s$ = E4-E3, $\Delta E_t$ = E2-E1. The density of the electrode was 1.1 $g/cm^3$ according to the measurement of the electrode, Vm = 274.6 $cm^3/mol$.

Electrochemical measurements: Electrochemical performances of TAQ electrodes were tested in stainless steel 316 CR2032 coin cells assembled in an Ar-filled glove box. TAQ electrodes contained 90 wt.% of TAQ, 5 wt.% of CB, 4 wt.% of CMC, and 1 wt.% SBR. High carbon content electrodes contained 75 wt.% of TAQ, 20 wt.% of CB, 4 wt.% of CMC, and 1 wt.% SBR. CMC and SBR were well dissolved/suspended in a small amount of water (50~100 μL/mg) upon heating at 85 °C with vigorous stirring for an hour. Well-mixed TAQ and CB powders (upon grinding) were transferred into the CMC/SBR aqueous mixture, and the resulting mixture was vigorously stirred at 85 °C for two hours to produce the cathode slurry, which was then coated on stainless steel disks. All electrodes were dried under ambient condition before drying in a

vacuum oven at 100 °C for 12 hours. TAQ electrodes had areal active material mass loadings between 2.0 and 4.0 mg $cm^{-2}$. TAQ‖Li half cells used a lithium chip as the anode and a glass fiber separator. Commercial electrolytes including 1 M LiTFSI in DME/DOL (1:1 vol.%) and 1 M LiTFSI in tetraglyme were used for battery tests. Batteries were typically tested using galvanostatic charge-discharge between 1.5 V and 3.3 V versus $Li^+$/Li using Landt battery cyclers at various temperatures (-20 °C - 70 °C). GITT and electrochemical impedance spectroscopy (EIS) tests were performed using a BioLogic VMP-3 workstation. GITT measurements were carried out at 25 mA $9^{-1}$ where each step consisted of a one-hour constant-current discharge or charge followed by a two-hour rest. Impedance of coin cells were collected from 10 mHz to 1 MHz at various potentials versus $Li^+$/Li.

Variable temperature battery measurements: The assembled coin cells were tested in ovens (high temperature) or freezers (low temperatures) at a wide temperature range from -20 °C to 70 °C. The temperatures were measured with separate temperature sensors next to the batteries (no more than 15 cm distance), not touching to the batteries, measuring the stagnant air temperature surrounding the batteries, while charging and discharging. The batteries were kept under the targeted temperature for at least 8 hours before the battery charge-discharge starts. The coin cells were rather thin and small to allow fast thermal conduction between the external surface and the center of the battery even at fast charge-discharge speed, so the temperature variation upon dissipation is negligible.

While several embodiments of the present disclosure have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present disclosure. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present disclosure is/are used. Those skilled in the art will recognize, or be able to ascertain using no more than routine experimentation, many equivalents to the specific embodiments of the disclosure described herein. It is, therefore, to be understood that the foregoing embodiments are presented by way of example only and that, within the scope of the appended claims and equivalents thereto, the disclosure may be practiced otherwise than as specifically described and claimed. The present disclosure is directed to each individual feature, system, article, material, and/or method described herein. In addition, any combination of two or more such features, systems, articles, materials, and/or methods, if such features, systems, articles, materials, and/or methods are not mutually inconsistent, is included within the scope of the present disclosure.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

As used herein, "wt.%" is an abbreviation of weight percentage. As used herein, "at.%" is an abbreviation of atomic percentage.

Some embodiments may be embodied as a method, of which various examples have been described. The acts performed as part of the methods may be ordered in any suitable way. Accordingly, embodiments may be constructed in which acts are performed in an order different than illustrated, which may include different (e.g., more or less) acts than those that are described, and/or that may involve performing some acts simultaneously, even though the acts are shown as being performed sequentially in the embodiments specifically described above.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

In the claims, as well as in the specification above, all transitional phrases such as "comprising," "including," "carrying," "having," "containing," "involving," "holding," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

**EMBODIMENTS**

1. A battery, comprising:

   an electrode comprising an electrochemically active material comprising a *bis*-tetraamino-benzoquinone molecule and/or a dimer, tautomer, oligomer, polymer, and/or derivative thereof,
   wherein the battery is configured to operate at a temperature of an environment of the battery greater than or equal to 50 °C, and
   wherein, at the temperature of the environment of the battery, the battery has a discharge capacity greater than or equal to 200 mAh per gram of the electrode when current density is set at a value of at least 50 mA per gram of the electrochemically active material in the electrode.

2. The battery of embodiment 1, wherein, at the temperature of the environment of the battery, the discharge capacity of the battery is greater than or equal to 250 mAh per gram of the electrode when current density is set at the value of at least 50 mA per gram of the electrochemically active material in the electrode.

3. The battery of any one of embodiments 1-2, wherein, at the temperature of the environment of the battery, the discharge capacity of the battery is greater than or equal to 300 mAh per gram of the electrode when current density is set at the value of at least 50 mA per gram of the electrochemically active material in the electrode.

4. The battery of any one of embodiments 1-3, wherein, at the temperature of the environment of the battery, the discharge capacity of the battery is greater than or equal to 150 mAh per gram of the electrode when current density is set at a value of at least 200 mA per gram of the electrochemically active material in the electrode.

5. The battery of embodiment 4, wherein, at the temperature of the environment of the battery, the discharge capacity of the battery is greater than or equal to 200 mAh per gram of the electrode when current density is set at the value of at least 200 mA per gram of the electrochemically active material in the electrode.

6. The battery of any one of embodiments 4-5, wherein, at the temperature of the environment of the battery, the discharge capacity of the battery is greater than or equal to 250 mAh per gram of the electrode when current density is set at the value of at least 200 mA per gram of the electrochemically active material in the electrode.

7. The battery of any one of embodiments 1-6, wherein, at the temperature of the environment of the battery, the battery is capable of being cycled at least 100 times.

8. The battery of embodiment 7, wherein, at the temperature of the environment of the battery, the discharge capacity of the battery decreases by less than or equal to 30% after the battery is cycled the at least 100 times.

9. The battery of any one of embodiments 7-8, wherein, at the temperature of the environment of the battery, the

discharge capacity of the battery decreases by less than or equal to 20% after the battery is cycled the at least 100 times.

10. The battery of any one of embodiments 7-9, wherein, at the temperature of the environment of the battery, the discharge capacity of the battery decreases by less than or equal to 10% after the battery is cycled the at least 100 times.

11. The battery of any one of embodiments 1-10, wherein, at the temperature of the environment of the battery, the battery is capable of being cycled at least 300 times.

12. The battery of embodiment 11, wherein, at the temperature of the environment of the battery, the discharge capacity of the battery decreases by less than or equal to 30% after the battery is cycled the at least 300 times.

13. The battery of any one of embodiments 11-12, wherein, at the temperature of the environment of the battery, the discharge capacity of the battery decreases by less than or equal to 20% after the battery is cycled the at least 300 times.

14. The battery of any one of embodiments 11-13, wherein, at the temperature of the environment of the battery, the discharge capacity of the battery decreases by less than or equal to 10% after the battery is cycled the at least 300 times.

15. The battery of any one of embodiments 1-14, wherein the temperature of the environment of the battery is less than or equal to 100 °C.

16. A battery, comprising:

an electrode comprising an electrochemically active material comprising a *bis*-tetraamino-benzoquinone molecule and/or a dimer, tautomer, oligomer, polymer, and/or derivative thereof,
wherein the battery is configured to operate at a temperature of an environment of the battery greater than or equal to 50 °C, and
wherein, at the temperature of the environment of the battery, the battery is capable of being cycled at least 100 times such that a discharge capacity of the battery decreases by less than or equal to 30% after the battery is cycled the at least 100 times.

17. The battery of embodiment 16, wherein, at the temperature of the environment of the battery, the battery is capable of being cycled at least 300 times such that the discharge capacity of the battery decreases by less than or equal to 10% after the battery is cycled the at least 300 times.

18. The battery of any one of embodiments 16-17, wherein, at the temperature of the environment of the battery, the discharge capacity of the battery is greater than or equal to 200 mAh per gram of the electrode when current density is set at a value of at least 50 mA per gram of the electrochemically active material in the electrode.

19. The battery of any one of embodiments 16-18, wherein, at the temperature of the environment of the battery, the discharge capacity of the battery is greater than or equal to 250 mAh per gram of the electrode when current density is set at a value of at least 200 mA per gram of the electrochemically active material in the electrode.

20. The battery of any one of embodiments 16-19, wherein the temperature of the environment of the battery is less than or equal to 100 °C.

21. A method of operating a battery, comprising:

discharging the battery, wherein the battery comprises an electrode comprising an electrochemically active material comprising a bis-tetraamino-benzoquinone molecule and/or a dimer, tautomer, oligomer, polymer, and/or derivative thereof,
wherein the discharging occurs at a temperature of an environment of the battery greater than or equal to 50 °C, and
wherein, at the temperature of the environment of the battery, the battery has a discharge capacity greater than or equal to 200 mAh per gram of the electrode when current density is set at a value of at least 50 mA per gram of the

electrochemically active material in the electrode.

22. The method of embodiment 21, wherein, at the temperature of the environment of the battery, the discharge capacity of the battery is greater than or equal to 250 mAh per gram of the electrode when current density is set at a value of at least 200 mA per gram of the electrochemically active material in the electrode.

23. The method of any one of embodiment 21-22, further comprising charging the battery, wherein the charging occurs at the temperature of the environment of the battery.

24. The method of embodiment 23, further comprising cycling the battery, wherein the cycling comprises discharging and charging the battery, wherein the cycling occurs at the temperature of the environment of the battery.

25. The method of embodiment 24, wherein the cycling comprises cycling the battery at least 100 times.

26. The method of embodiment 25, wherein the discharge capacity of the battery decreases by less than or equal to 30% after cycling the battery the at least 100 times.

27. The method of any one of embodiments 25-26, wherein the discharge capacity of the battery decreases by less than or equal to 10% after cycling the battery the at least 100 times.

28. The method of any one of embodiments 24-25, wherein the cycling comprises cycling the battery at least 300 times.

29. The method of embodiments 28, wherein the discharge capacity of the battery decreases by less than or equal to 30% after cycling the battery the at least 300 times.

30. The method of any one of embodiments 28-29, wherein the discharge capacity of the battery decreases by less than or equal to 10% after cycling the battery the at least 300 times.

31. The method of any one of embodiments 21-30, wherein the temperature of the environment of the battery is less than or equal to 100 °C.

## Claims

**1.** A battery, comprising:

an electrode comprising an electrochemically active material comprising a *bis*-tetraamino-benzoquinone molecule and/or a dimer, tautomer, oligomer, polymer, and/or derivative thereof,
wherein the battery is configured to operate at a temperature of an environment of the battery greater than or equal to 50 °C, and
wherein, at the temperature of the environment of the battery, the battery has a discharge capacity greater than or equal to 200 mAh per gram of the electrode when current density is set at a value of at least 50 mA per gram of the electrochemically active material in the electrode.

**2.** The battery of claim 1,

a) wherein, at the temperature of the environment of the battery, the discharge capacity of the battery is greater than or equal to 250 mAh per gram of the electrode when current density is set at the value of at least 50 mA per gram of the electrochemically active material in the electrode; and/or
b) wherein, at the temperature of the environment of the battery, the discharge capacity of the battery is greater than or equal to 300 mAh per gram of the electrode when current density is set at the value of at least 50 mA per gram of the electrochemically active material in the electrode.

**3.** The battery of any one of claims 1-2, wherein, at the temperature of the environment of the battery, the discharge capacity of the battery is greater than or equal to 150 mAh per gram of the electrode when current density is set at a value of at least 200 mA per gram of the electrochemically active material in the electrode; optionally

a) wherein, at the temperature of the environment of the battery, the discharge capacity of the battery is greater than or equal to 200 mAh per gram of the electrode when current density is set at the value of at least 200 mA per gram of the electrochemically active material in the electrode; and/or
b) wherein, at the temperature of the environment of the battery, the discharge capacity of the battery is greater than or equal to 250 mAh per gram of the electrode when current density is set at the value of at least 200 mA per gram of the electrochemically active material in the electrode.

**4.** The battery of any one of claims 1-3, wherein, at the temperature of the environment of the battery, the battery is capable of being cycled at least 100 times; optionally

a) wherein, at the temperature of the environment of the battery, the discharge capacity of the battery decreases by less than or equal to 30% after the battery is cycled the at least 100 times; and/or
b) wherein, at the temperature of the environment of the battery, the discharge capacity of the battery decreases by less than or equal to 20% after the battery is cycled the at least 100 times; and/or
c) wherein, at the temperature of the environment of the battery, the discharge capacity of the battery decreases by less than or equal to 10% after the battery is cycled the at least 100 times.

**5.** The battery of any one of claims 1-4, wherein, at the temperature of the environment of the battery, the battery is capable of being cycled at least 300 times; optionally

a) wherein, at the temperature of the environment of the battery, the discharge capacity of the battery decreases by less than or equal to 30% after the battery is cycled the at least 300 times; and/or
b) wherein, at the temperature of the environment of the battery, the discharge capacity of the battery decreases by less than or equal to 20% after the battery is cycled the at least 300 times; and/or
c) wherein, at the temperature of the environment of the battery, the discharge capacity of the battery decreases by less than or equal to 10% after the battery is cycled the at least 300 times.

**6.** The battery of any one of claims 1-5, wherein the temperature of the environment of the battery is less than or equal to 100 °C.

**7.** A battery, comprising:

an electrode comprising an electrochemically active material comprising a *bis*-tetraamino-benzoquinone molecule and/or a dimer, tautomer, oligomer, polymer, and/or derivative thereof,
wherein the battery is configured to operate at a temperature of an environment of the battery greater than or equal to 50 °C, and
wherein, at the temperature of the environment of the battery, the battery is capable of being cycled at least 100 times such that a discharge capacity of the battery decreases by less than or equal to 30% after the battery is cycled the at least 100 times.

**8.** The battery of claim 7,

a) wherein, at the temperature of the environment of the battery, the battery is capable of being cycled at least 300 times such that the discharge capacity of the battery decreases by less than or equal to 10% after the battery is cycled the at least 300 times; and/or
b) wherein, at the temperature of the environment of the battery, the discharge capacity of the battery is greater than or equal to 200 mAh per gram of the electrode when current density is set at a value of at least 50 mA per gram of the electrochemically active material in the electrode; and/or
c) wherein, at the temperature of the environment of the battery, the discharge capacity of the battery is greater than or equal to 250 mAh per gram of the electrode when current density is set at a value of at least 200 mA per gram of the electrochemically active material in the electrode; and/or
d) wherein the temperature of the environment of the battery is less than or equal to 100 °C.

**9.** A method of operating a battery, comprising:

discharging the battery, wherein the battery comprises an electrode comprising an electrochemically active material comprising a bis-tetraamino-benzoquinone molecule and/or a dimer, tautomer, oligomer, polymer, and/or derivative thereof,

wherein the discharging occurs at a temperature of an environment of the battery greater than or equal to 50 °C, and
wherein, at the temperature of the environment of the battery, the battery has a discharge capacity greater than or equal to 200 mAh per gram of the electrode when current density is set at a value of at least 50 mA per gram of the electrochemically active material in the electrode,
optionally wherein the temperature of the environment of the battery is less than or equal to 100 °C.

**10.** The method of claim 9,

a) wherein, at the temperature of the environment of the battery, the discharge capacity of the battery is greater than or equal to 250 mAh per gram of the electrode when current density is set at a value of at least 200 mA per gram of the electrochemically active material in the electrode; and/or
b) further comprising charging the battery, wherein the charging occurs at the temperature of the environment of the battery.

**11.** The method of claim 10b), further comprising cycling the battery, wherein the cycling comprises discharging and charging the battery, wherein the cycling occurs at the temperature of the environment of the battery.

**12.** The method of claim 11, wherein the cycling comprises cycling the battery at least 100 times.

**13.** The method of claim 12, wherein the discharge capacity of the battery decreases by less than or equal to 30% after cycling the battery the at least 100 times.

**14.** The method of any one of claims 12-13, wherein the discharge capacity of the battery decreases by less than or equal to 10% after cycling the battery the at least 100 times.

**15.** The method of any one of claims 11-12, wherein the cycling comprises cycling the battery at least 300 times, optionally

a) wherein the discharge capacity of the battery decreases by less than or equal to 30% after cycling the battery the at least 300 times; and/or
b) wherein the discharge capacity of the battery decreases by less than or equal to 10% after cycling the battery the at least 300 times.

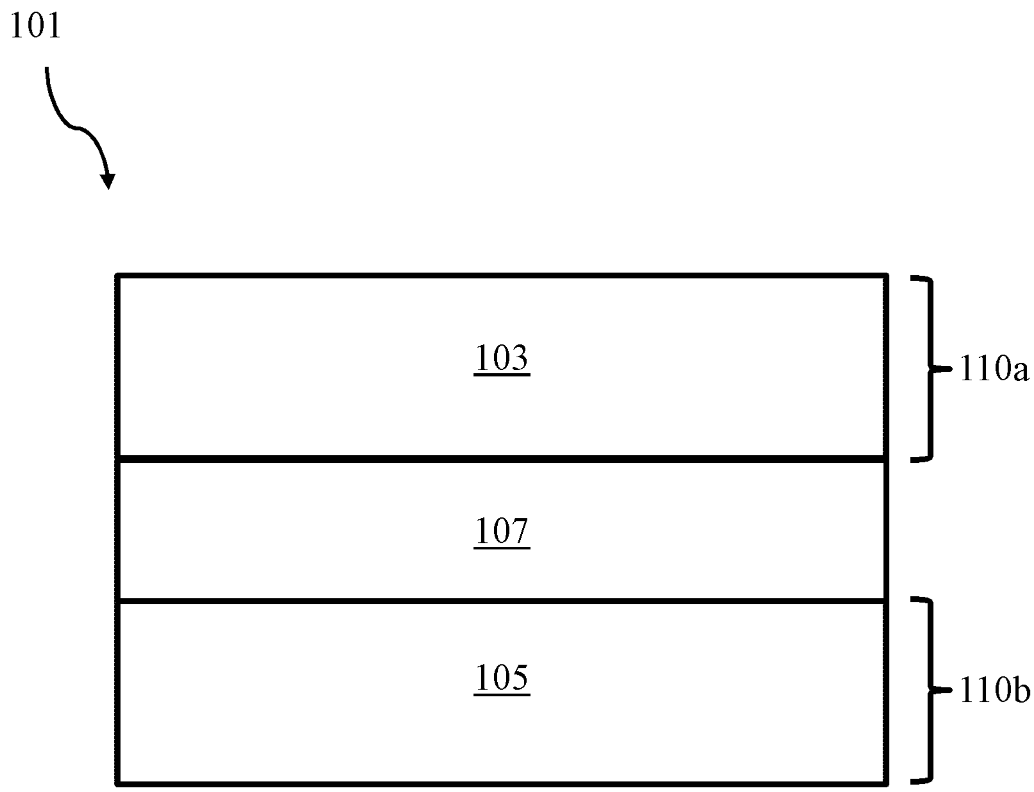


*FIG. 1*

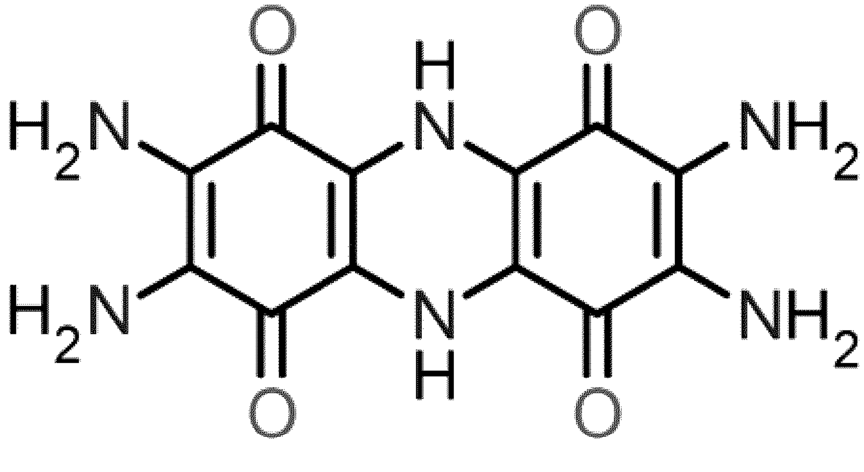

*FIG. 2A*

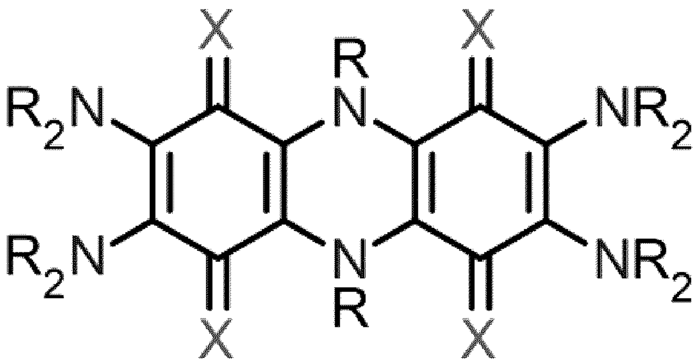

R = alkyl, aryl
X = O, NH, NR, S, Se

*FIG. 2B*

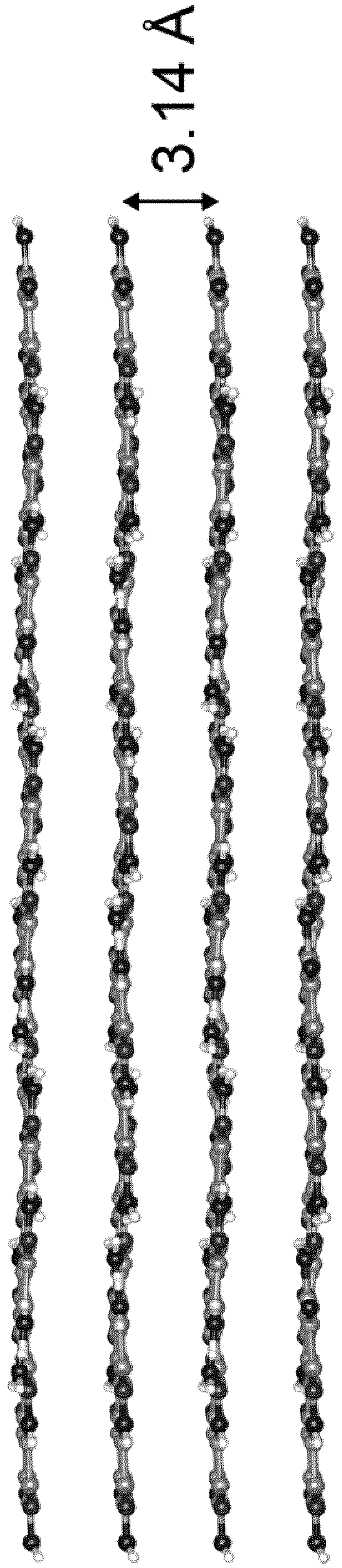


FIG. 3

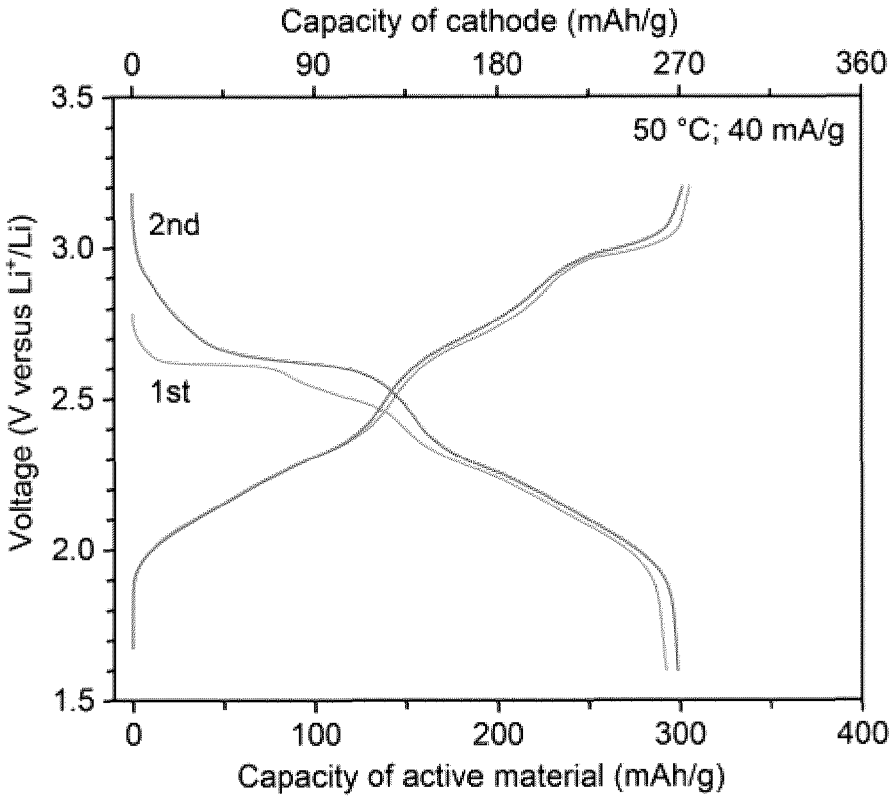
Capacity of cathode (mAh/g)
0
90
180
270
360
3.5
3.0
2.5
2.0
1.5
50 °C; 40 mA/g
2nd
1st
Voltage (V versus Li⁺/Li)
0
100
200
300
400
Capacity of active material (mAh/g)

*FIG. 4*

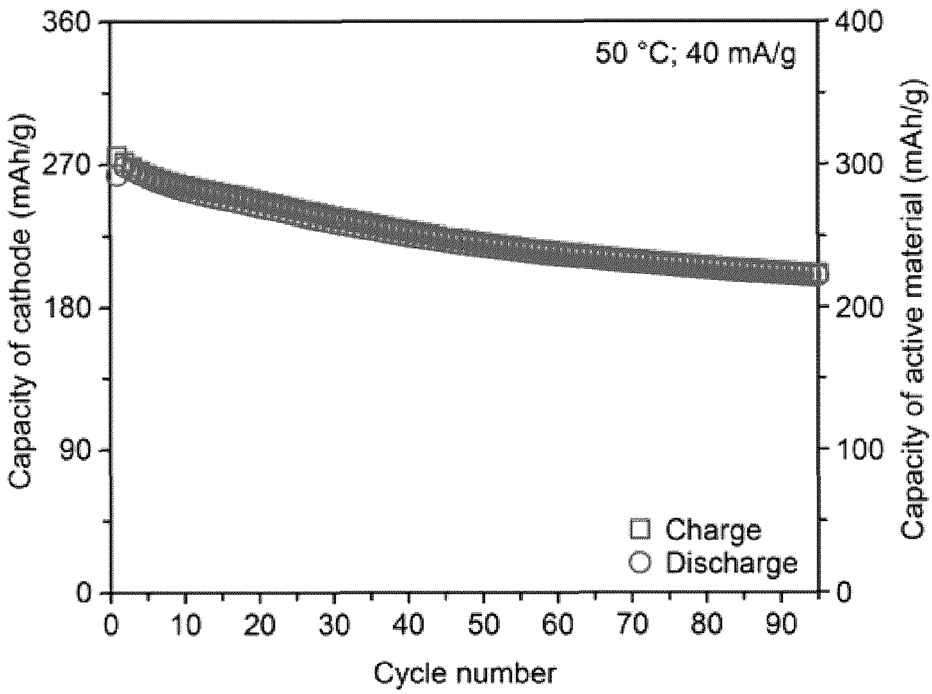
360
270
180
90
0
50 °C; 40 mA/g
Capacity of cathode (mAh/g)
Capacity of active material (mAh/g)
400
300
200
100
0
Charge
Discharge
0
10
20
30
40
50
60
70
80
90
Cycle number

*FIG. 5*

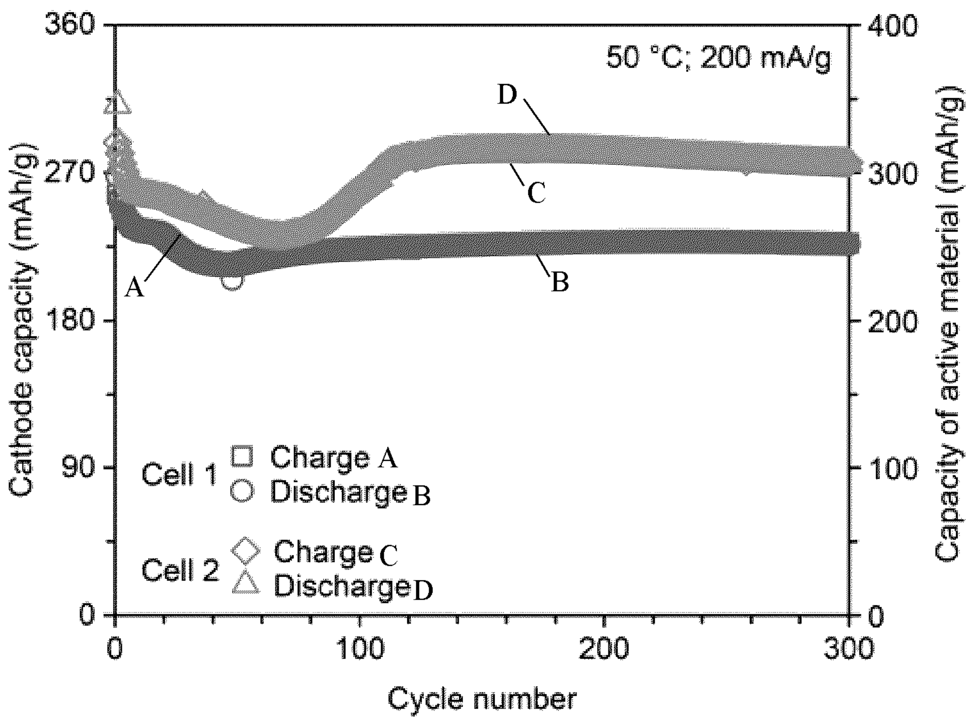
360
270
180
90
0
400
300
200
100
0
0
100
200
300
50 °C; 200 mA/g
D
C
A
B
Cathode capacity (mAh/g)
Capacity of active material (mAh/g)
Cycle number
Cell 1
Charge A
Discharge B
Cell 2
Charge C
Discharge D

*FIG. 6*

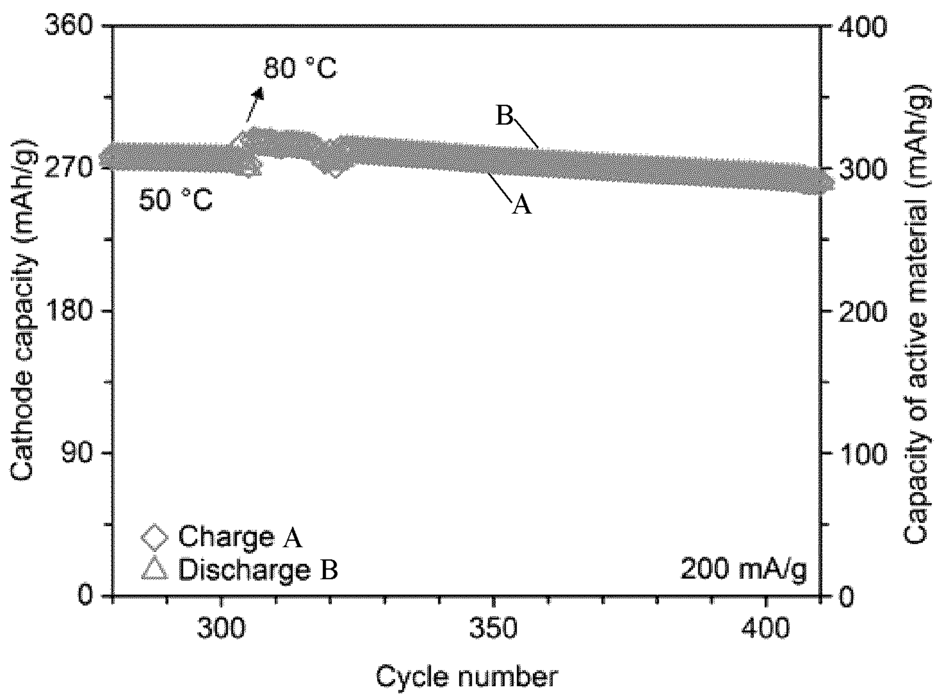
360
270
180
90
0
400
300
200
100
0
300
350
400
80 °C
50 °C
B
A
Cathode capacity (mAh/g)
Capacity of active material (mAh/g)
Cycle number
Charge A
Discharge B
200 mA/g

*FIG. 7*

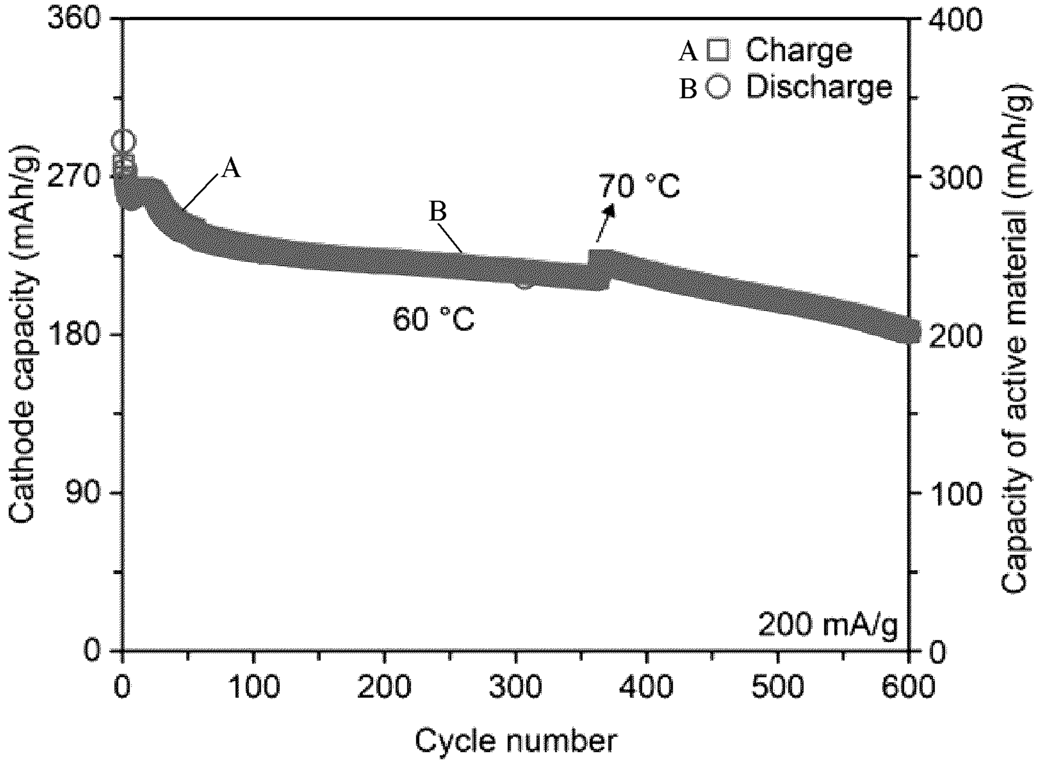
A Charge
B Discharge
A
B
70 °C
60 °C
200 mA/g
Cathode capacity (mAh/g)
Capacity of active material (mAh/g)
Cycle number
360
270
180
90
0
400
300
200
100
0
100
200
300
400
500
600

*FIG. 8*

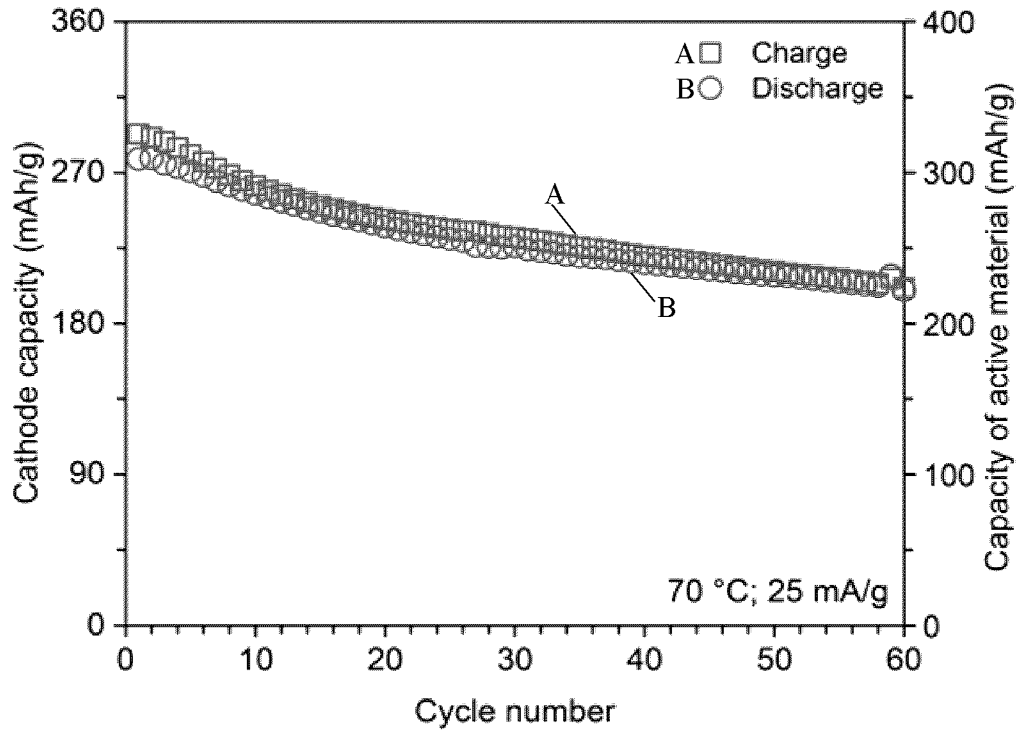
A Charge
B Discharge
A
B
70 °C; 25 mA/g
Cathode capacity (mAh/g)
Capacity of active material (mAh/g)
Cycle number
360
270
180
90
0
400
300
200
100
0
10
20
30
40
50
60

*FIG. 9*

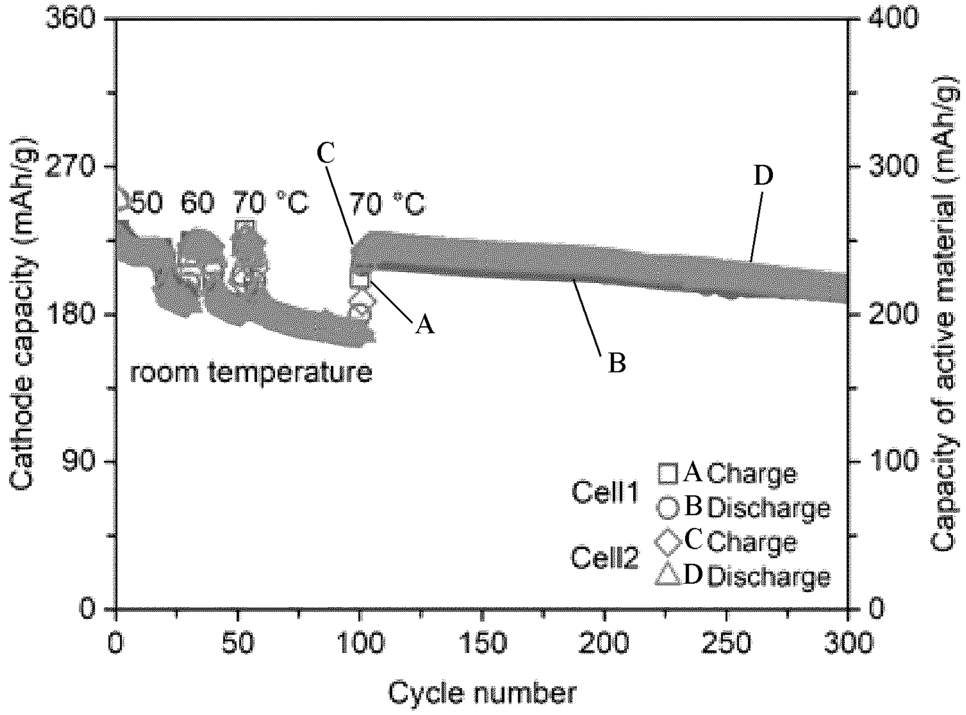

360
270
180
90
0
400
300
200
100
0
Cathode capacity (mAh/g)
Capacity of active material (mAh/g)
50 60 70 °C
70 °C
room temperature
C
A
B
D
Cell1
A Charge
B Discharge
Cell2
C Charge
D Discharge
0
50
100
150
200
250
300
Cycle number


*FIG. 10*

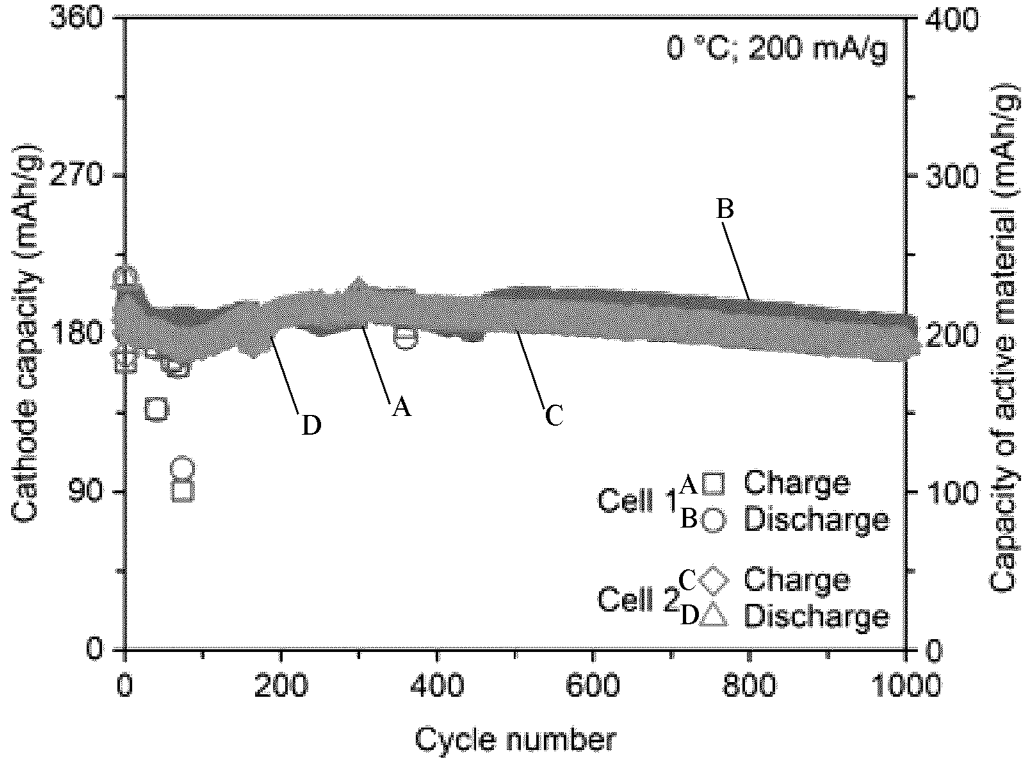

360
270
180
90
0
400
300
200
100
0
0 °C; 200 mA/g
Cathode capacity (mAh/g)
Capacity of active material (mAh/g)
B
D
A
C
Cell 1
A Charge
B Discharge
Cell 2
C Charge
D Discharge
0
200
400
600
800
1000
Cycle number


*FIG. 11*

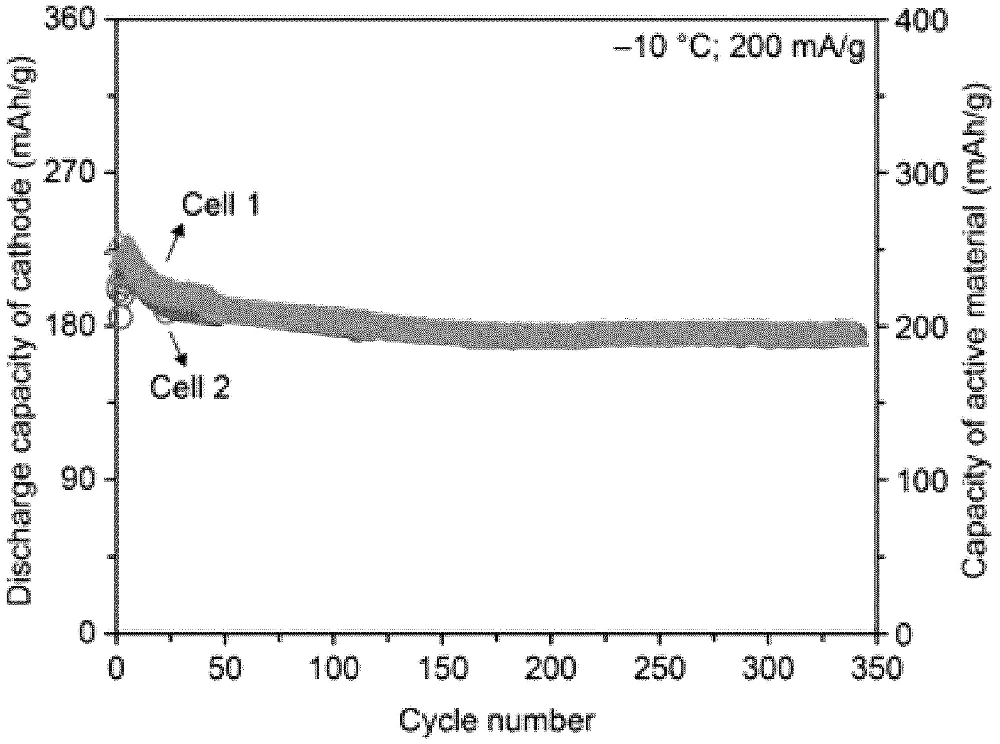
–10 °C; 200 mA/g
Cell 1
Cell 2
Discharge capacity of cathode (mAh/g)
Capacity of active material (mAh/g)
Cycle number
360
270
180
90
0
400
300
200
100
0
0
50
100
150
200
250
300
350

*FIG. 12*

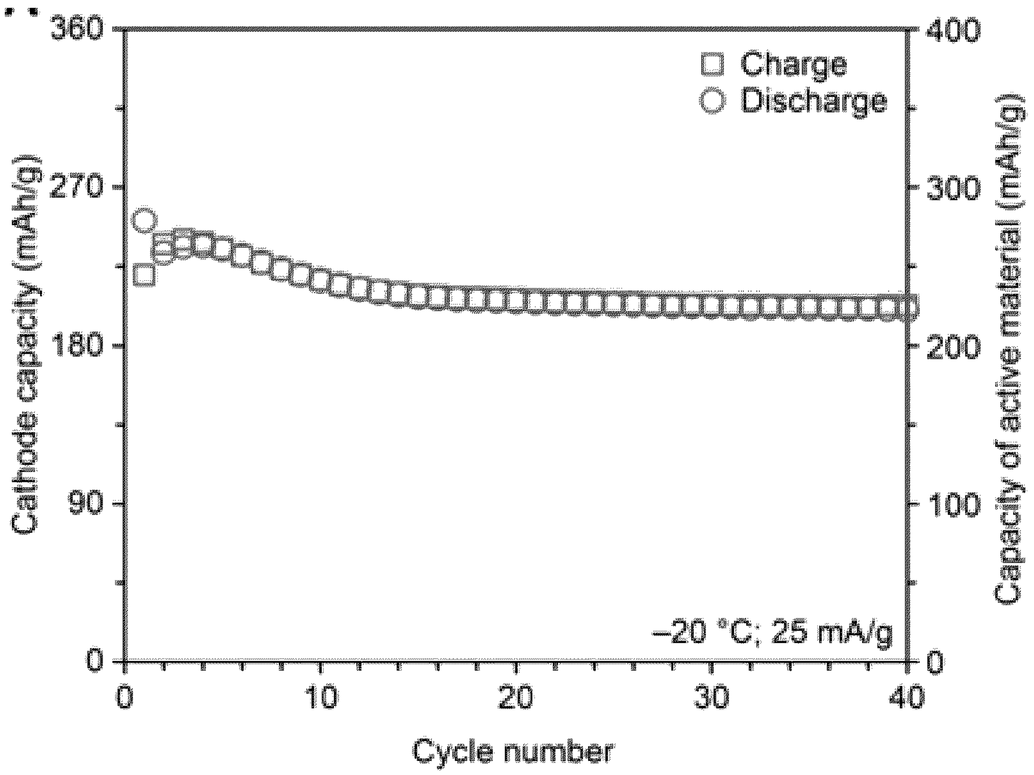
Charge
Discharge
–20 °C; 25 mA/g
Cathode capacity (mAh/g)
Capacity of active material (mAh/g)
Cycle number
360
270
180
90
0
400
300
200
100
0
0
10
20
30
40

*FIG. 13*

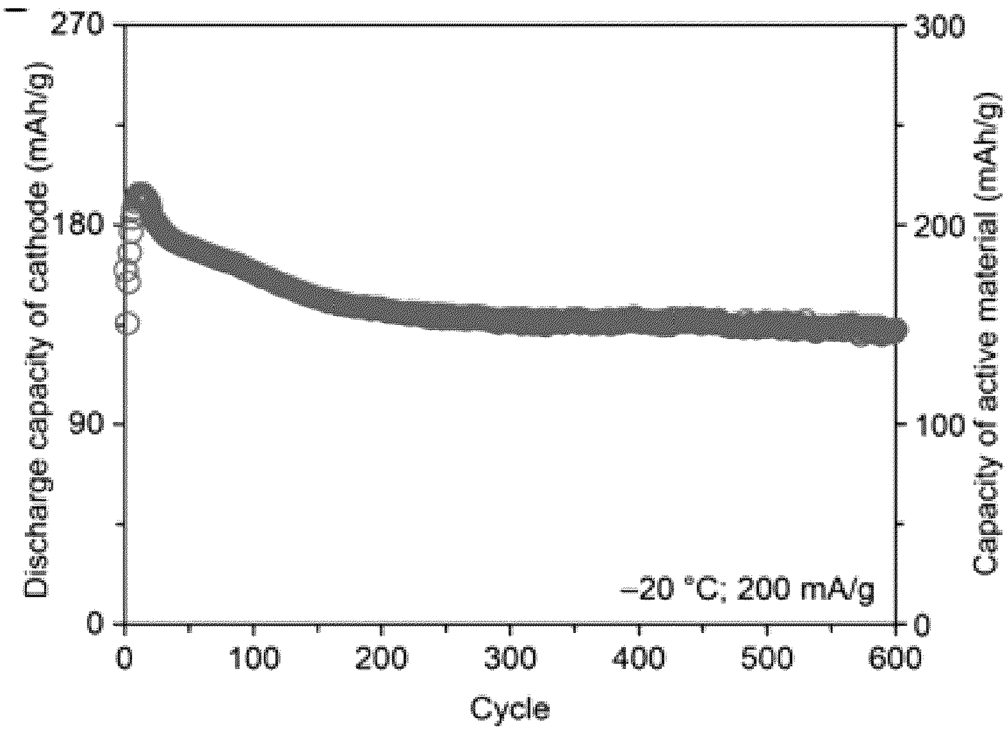


*FIG. 14*

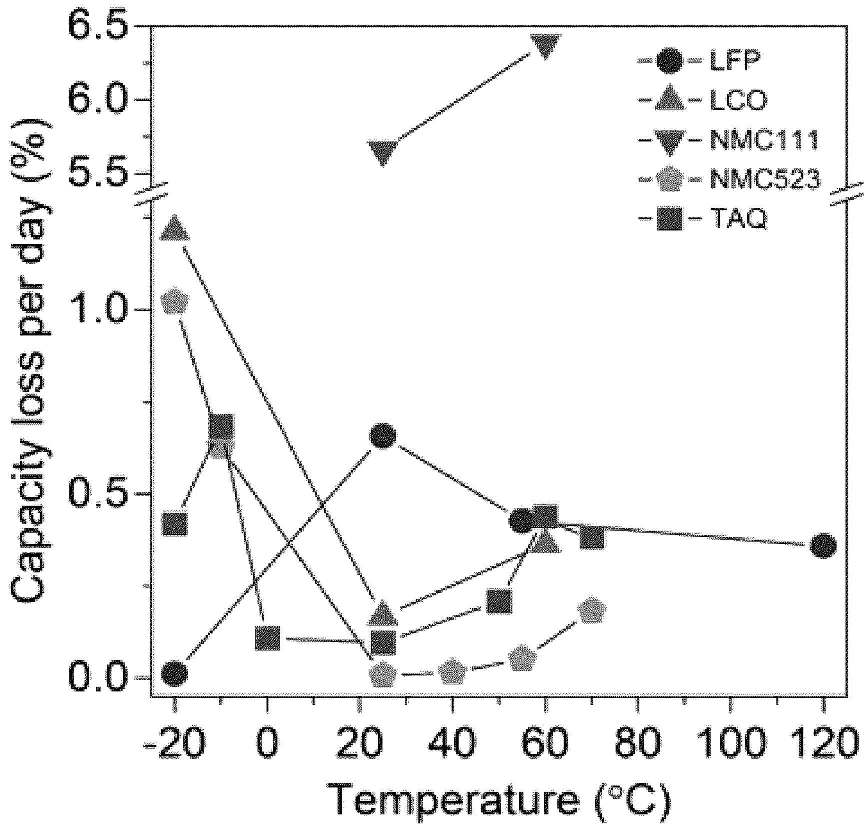


*FIG. 15A*

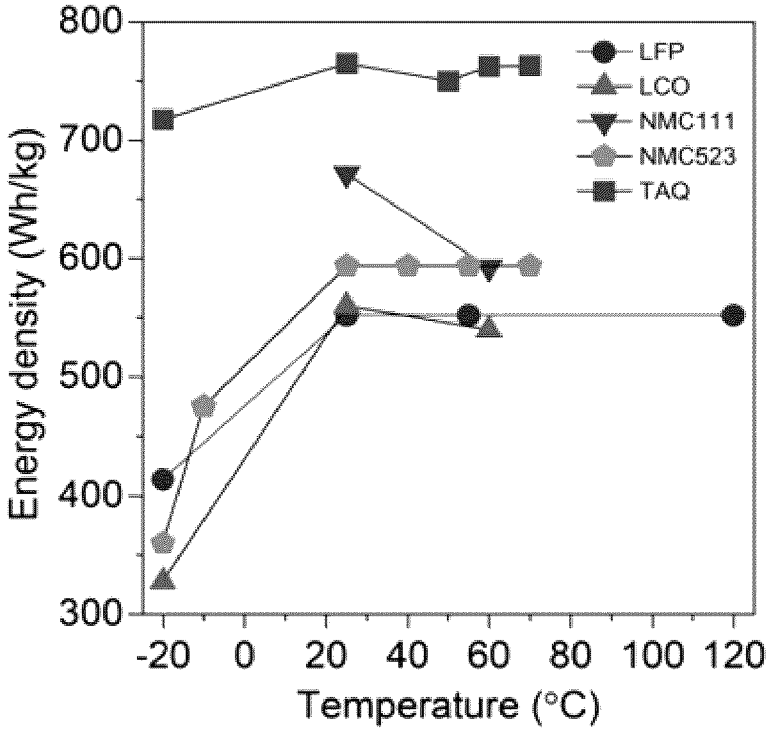


*FIG. 15B*

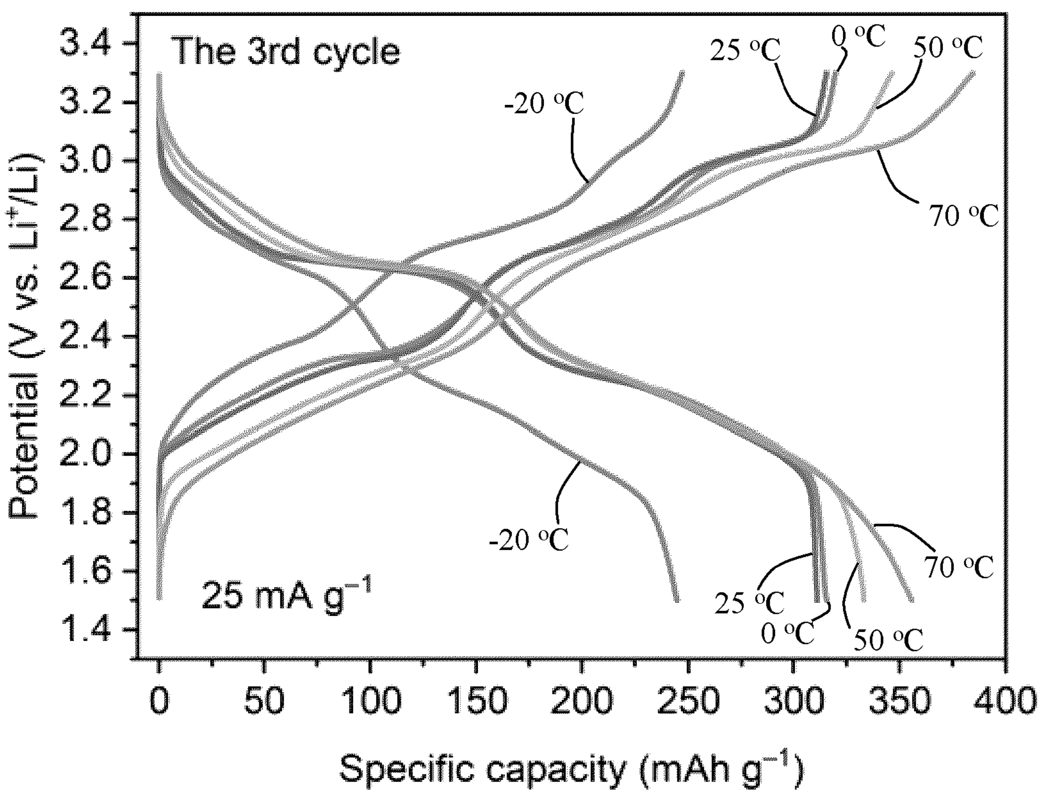


*FIG. 16*

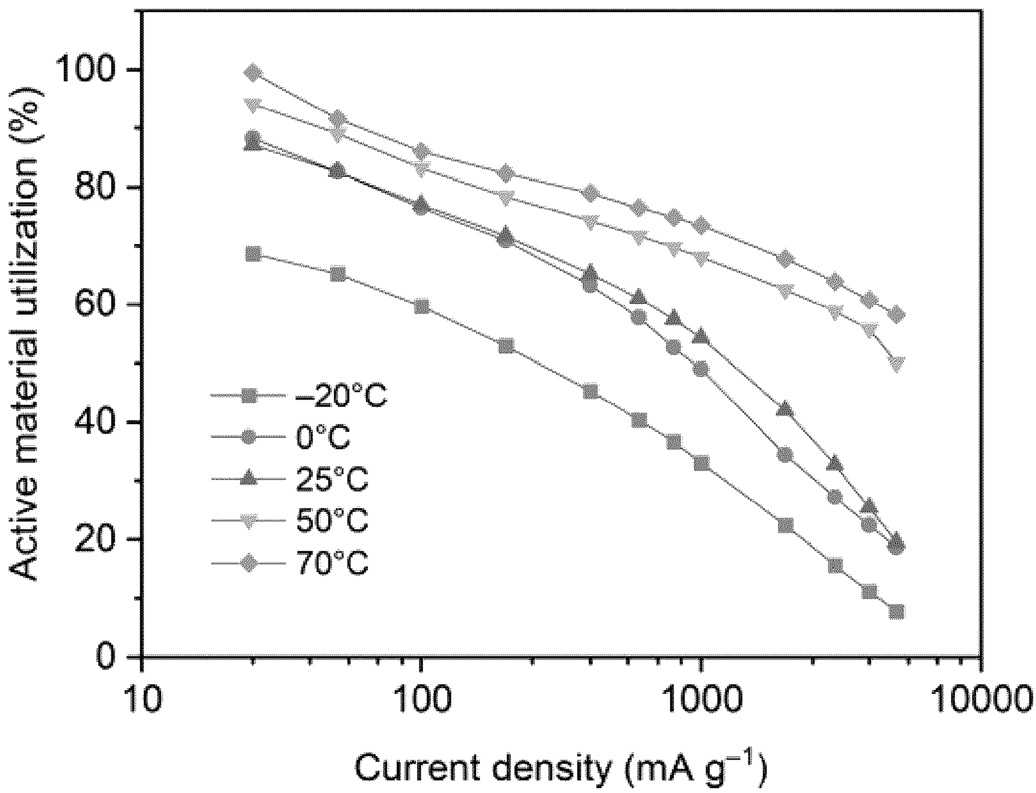

Active material utilization (%)
0
20
40
60
80
100
10
100
1000
10000
Current density (mA g⁻¹)
–20°C
0°C
25°C
50°C
70°C


*FIG. 17*

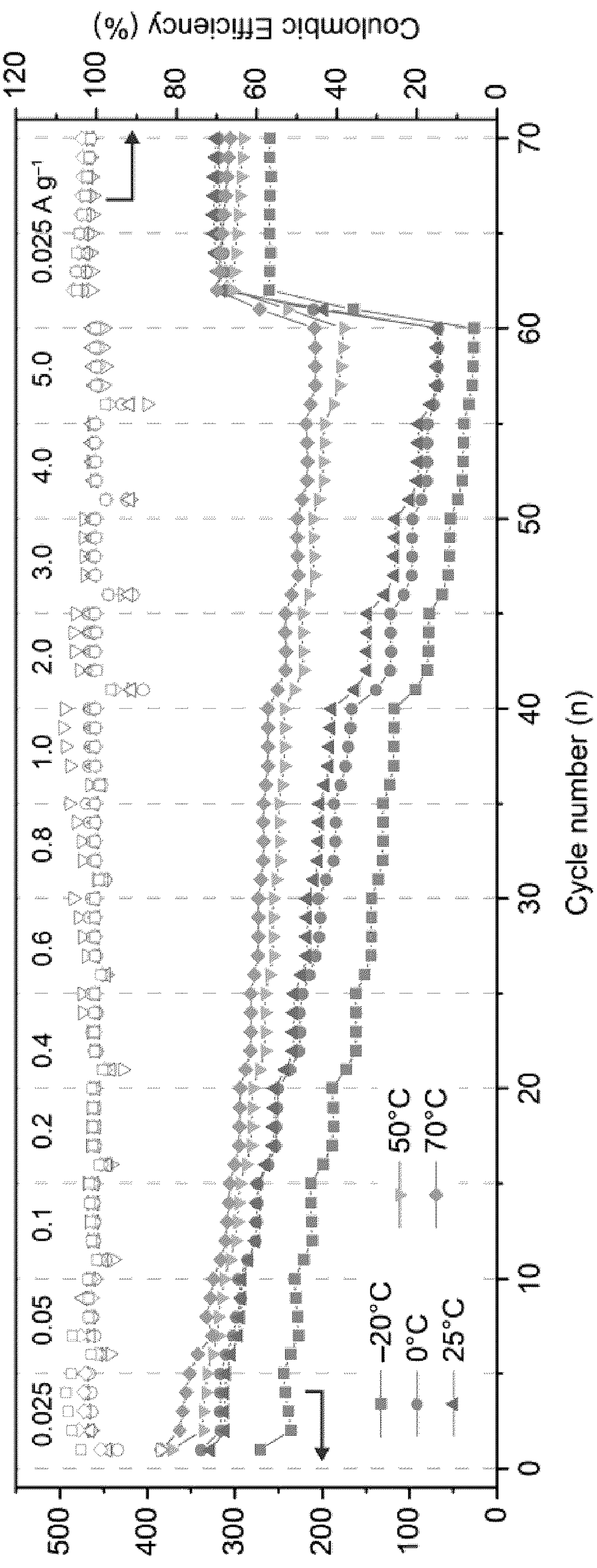
Specific capacity (mAh g$^{-1}$)
Coulombic Efficiency (%)
Cycle number (n)
0.025 A g$^{-1}$
0.025
0.05
0.1
0.2
0.4
0.6
0.8
1.0
2.0
3.0
4.0
5.0
−20°C
0°C
25°C
50°C
70°C

*FIG. 18*

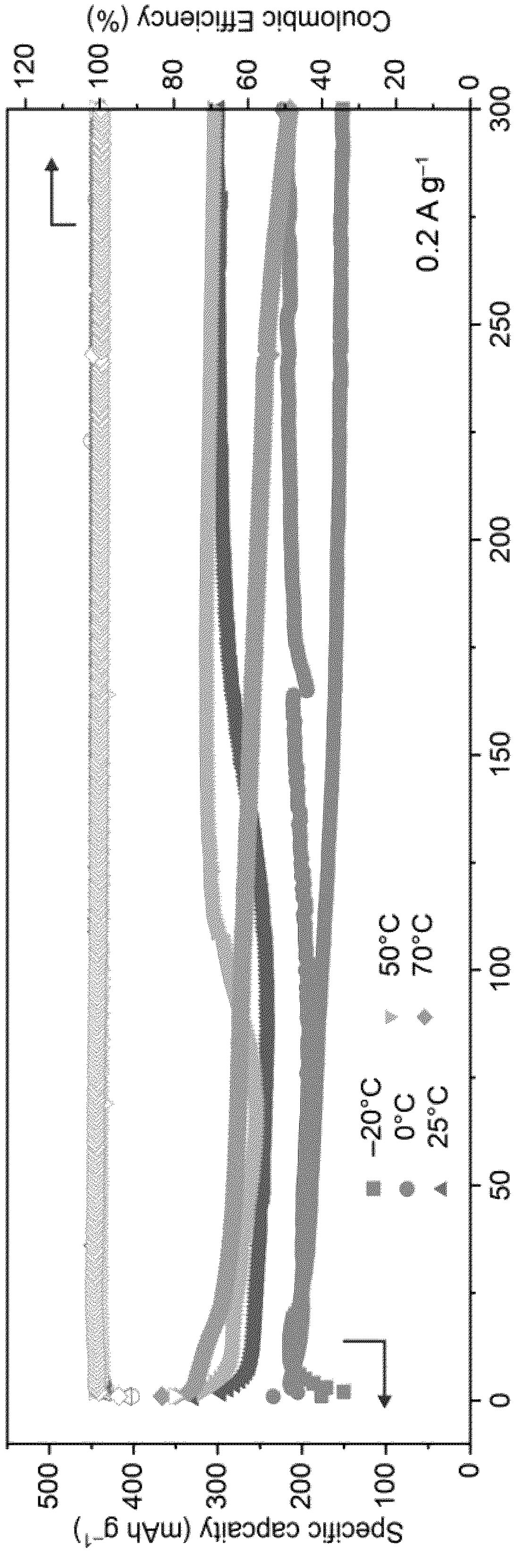
Coulombic Efficiency (%)
Specific capacity (mAh g$^{-1}$)
Cycle number (n)
0.2 A g$^{-1}$
−20°C
0°C
25°C
50°C
70°C

*FIG. 19*

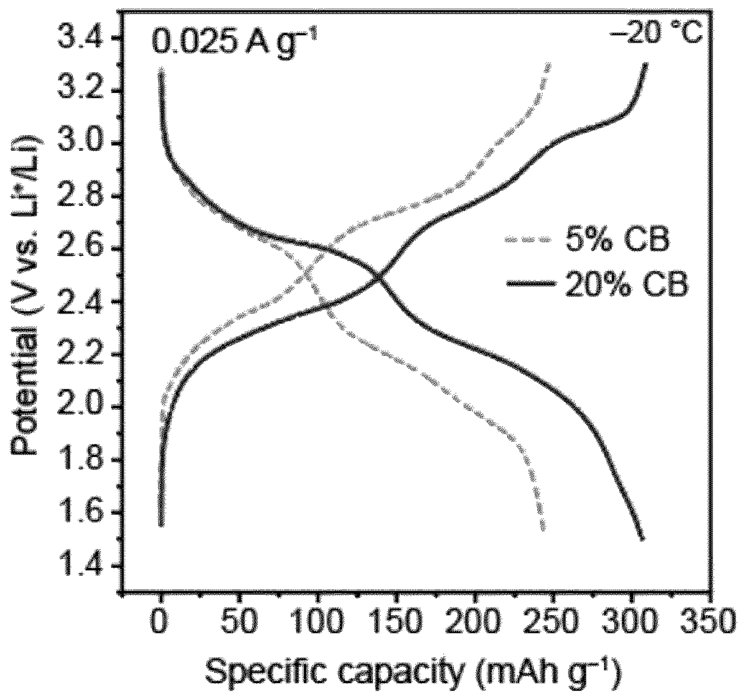
0.025 A g⁻¹
–20 °C
5% CB
20% CB
Potential (V vs. Li⁺/Li)
Specific capacity (mAh g⁻¹)

*FIG. 20*

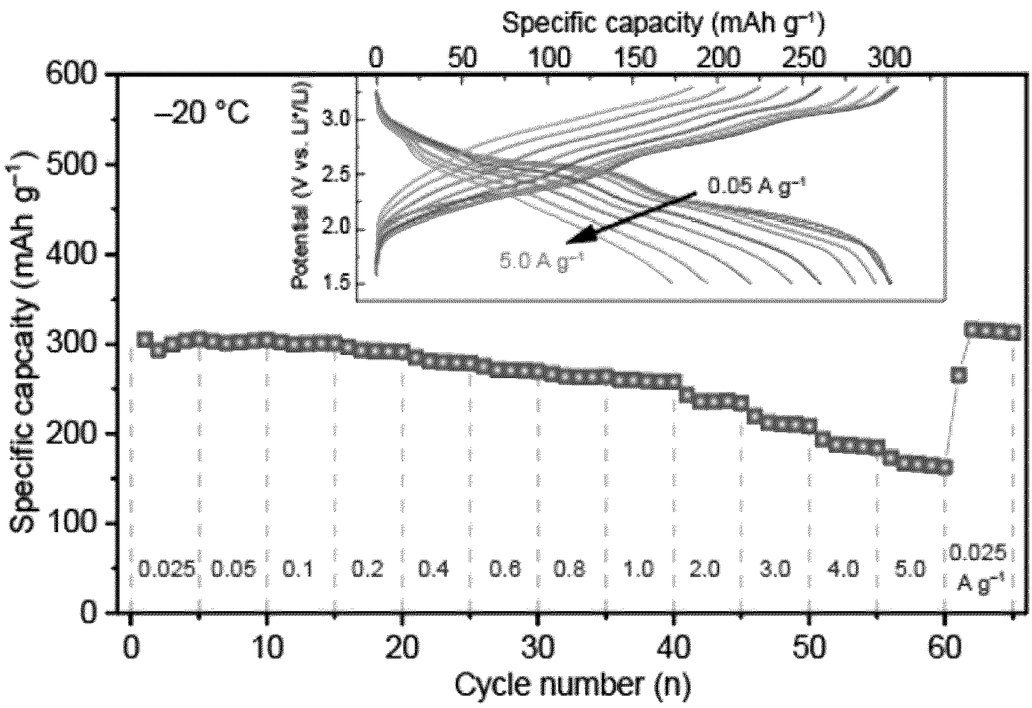
Specific capacity (mAh g⁻¹)
–20 °C
Potential (V vs. Li⁺/Li)
0.05 A g⁻¹
5.0 A g⁻¹
Specific capcaity (mAh g⁻¹)
0.025
0.05
0.1
0.2
0.4
0.6
0.8
1.0
2.0
3.0
4.0
5.0
0.025 A g⁻¹
Cycle number (n)

*FIG. 21*

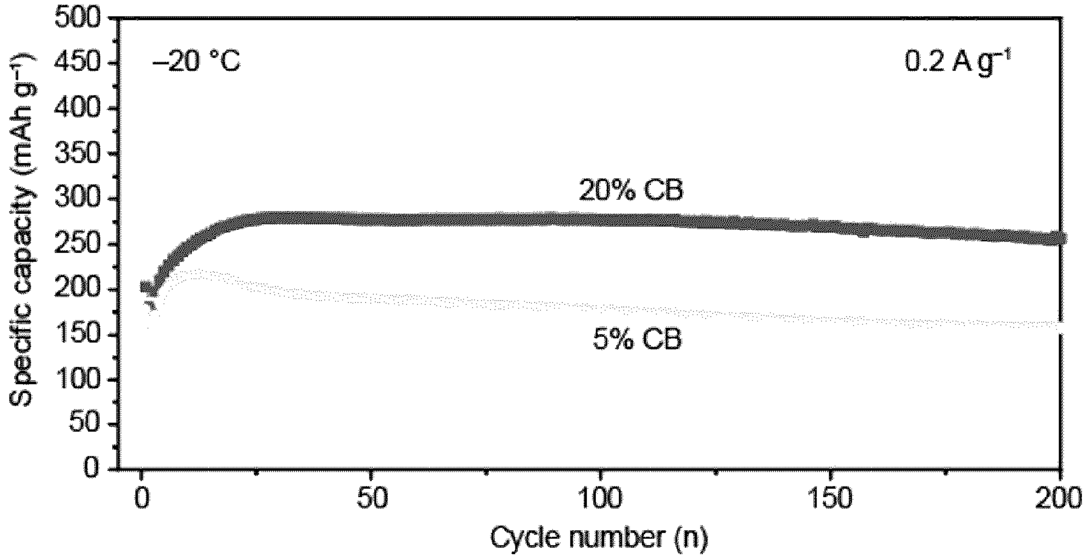

–20 °C
0.2 A g⁻¹
20% CB
5% CB
Specific capacity (mAh g⁻¹)
Cycle number (n)


*FIG. 22*

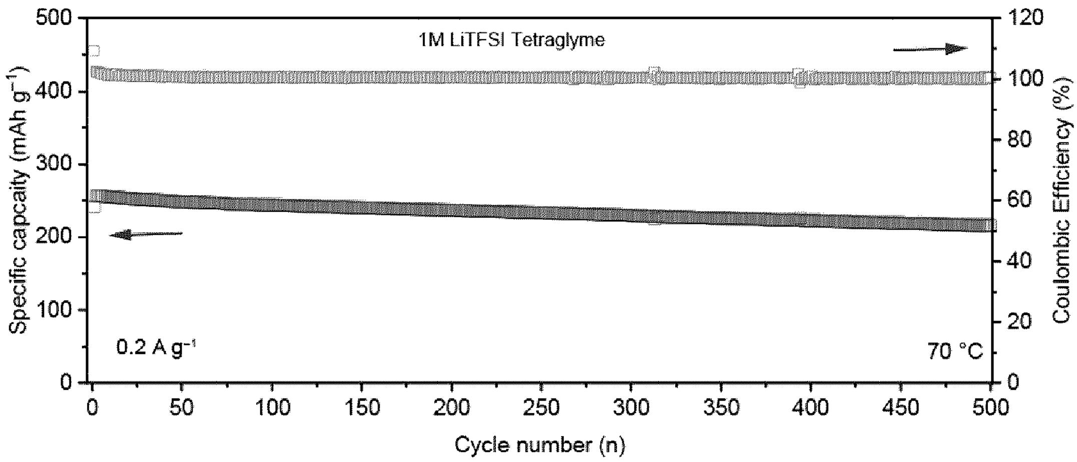

1M LiTFSI Tetraglyme
0.2 A g⁻¹
70 °C
Specific capcaity (mAh g⁻¹)
Coulombic Efficiency (%)
Cycle number (n)


*FIG. 23*

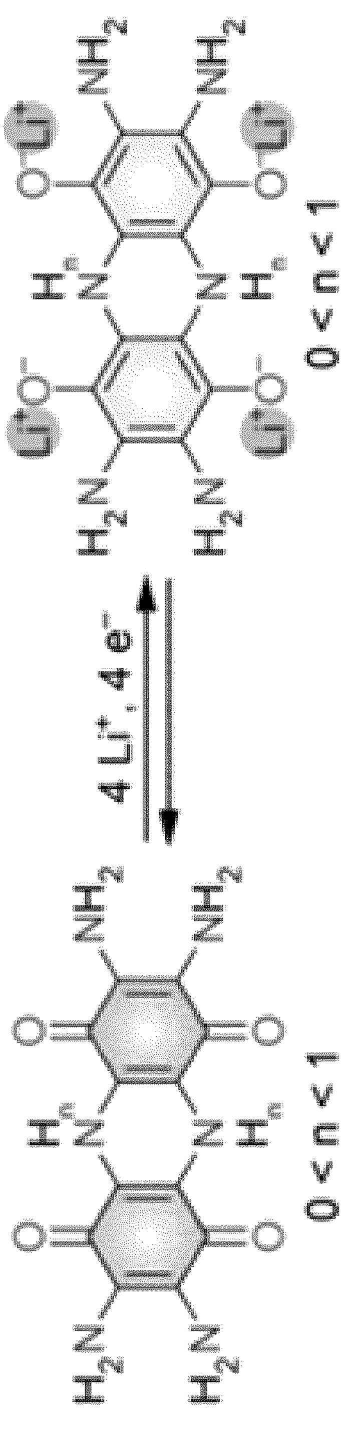


TAQ

$Li_4$-TAQ

*FIG. 24A*

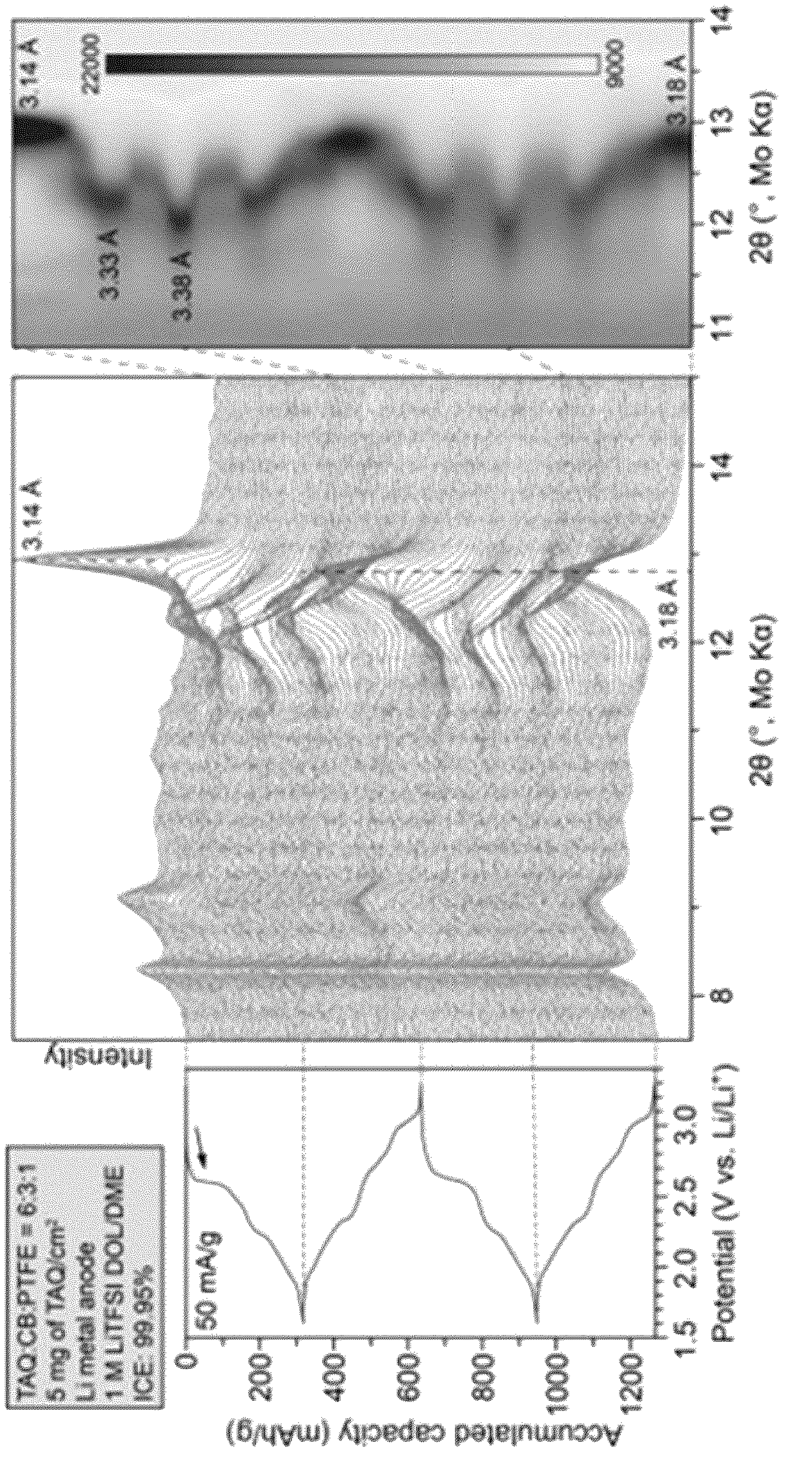
TAQ:CB:PTFE = 6:3:1
5 mg of TAQ/cm$^2$
Li metal anode
1 M LiTFSI DOL/DME
ICE: 99.95%
50 mA/g
Accumulated capacity (mAh/g)
Potential (V vs. Li/Li$^+$)
Intensity
2θ (°, Mo Kα)
3.14 Å
3.18 Å
3.33 Å
3.38 Å
22000
9000

*FIG. 24B*

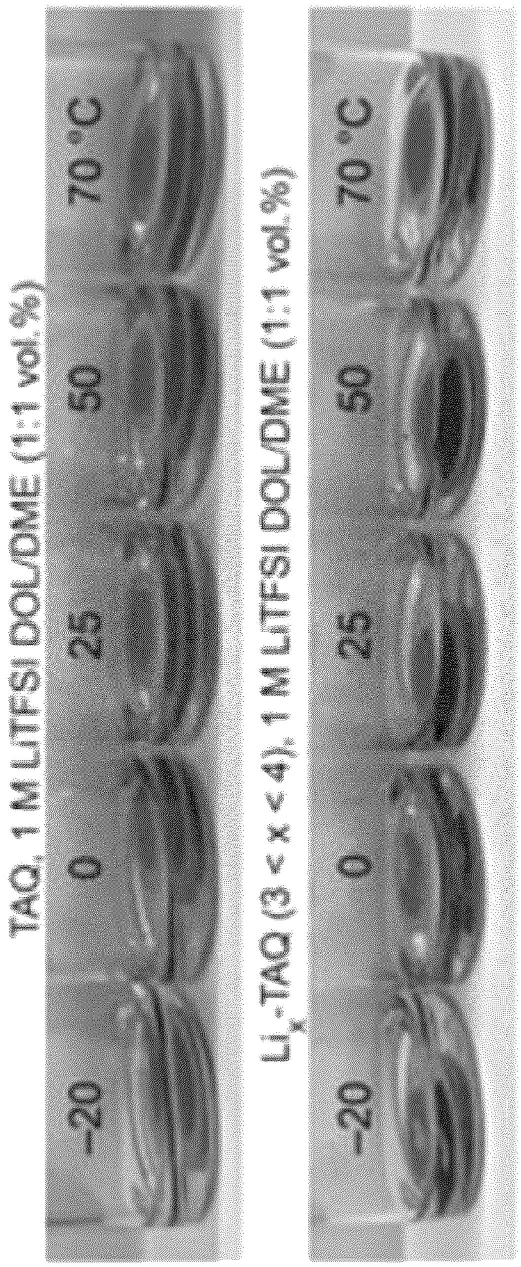
TAQ, 1 M LiTFSI DOL/DME (1:1 vol.%)
−20
0
25
50
70 °C
$Li_x$-TAQ (3 < x < 4), 1 M LiTFSI DOL/DME (1:1 vol.%)
−20
0
25
50
70 °C

*FIG. 24C*

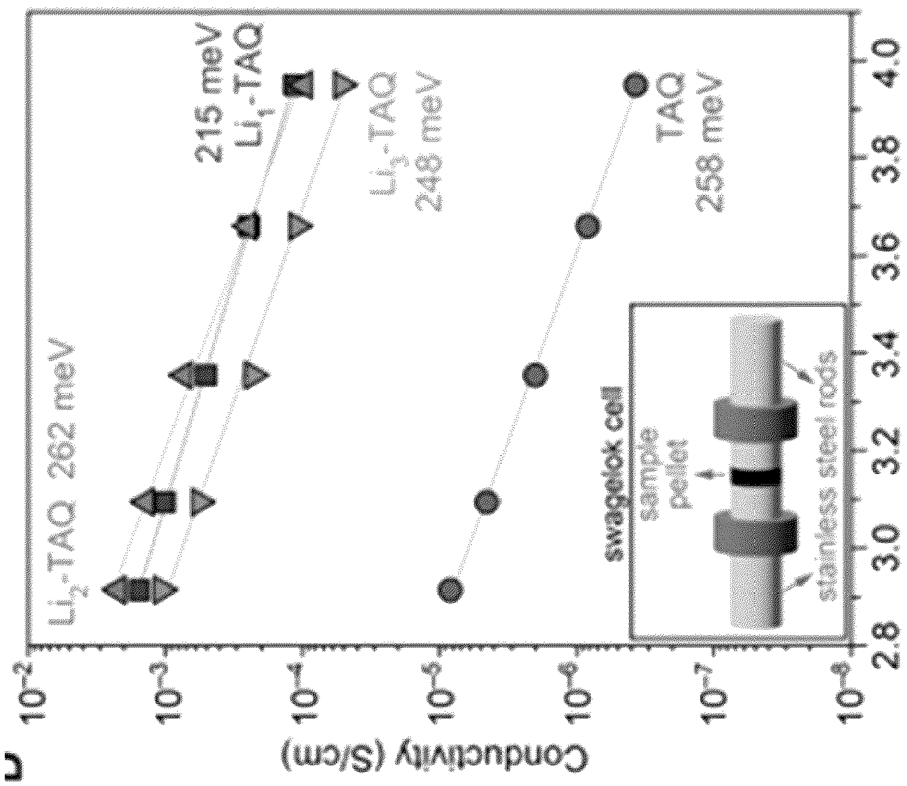
Li$_2$-TAQ 262 meV
215 meV
Li$_1$-TAQ
Li$_3$-TAQ
248 meV
TAQ
258 meV
swagelok cell
sample pellet
stainless steel rods
Conductivity (S/cm)
1000/T (1/K)
10$^{-2}$
10$^{-3}$
10$^{-4}$
10$^{-5}$
10$^{-6}$
10$^{-7}$
10$^{-8}$
2.8
3.0
3.2
3.4
3.6
3.8
4.0

*FIG. 24D*

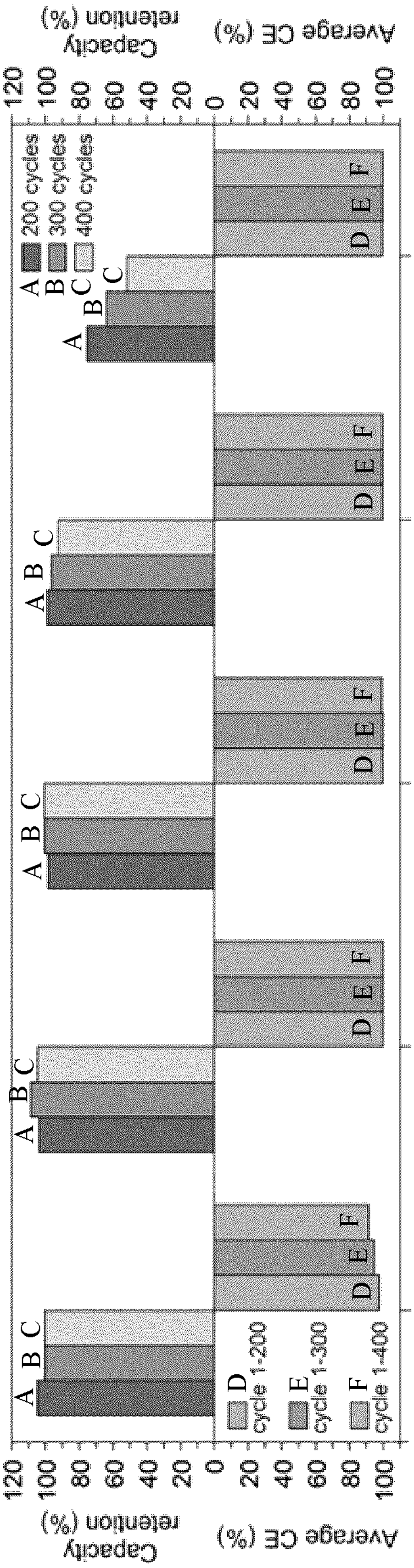
Capacity retention (%)
Average CE (%)
A 200 cycles
B 300 cycles
C 400 cycles
D cycle 1-200
E cycle 1-300
F cycle 1-400
−20 °C
0 °C
25 °C
50 °C
70 °C

*FIG. 25*

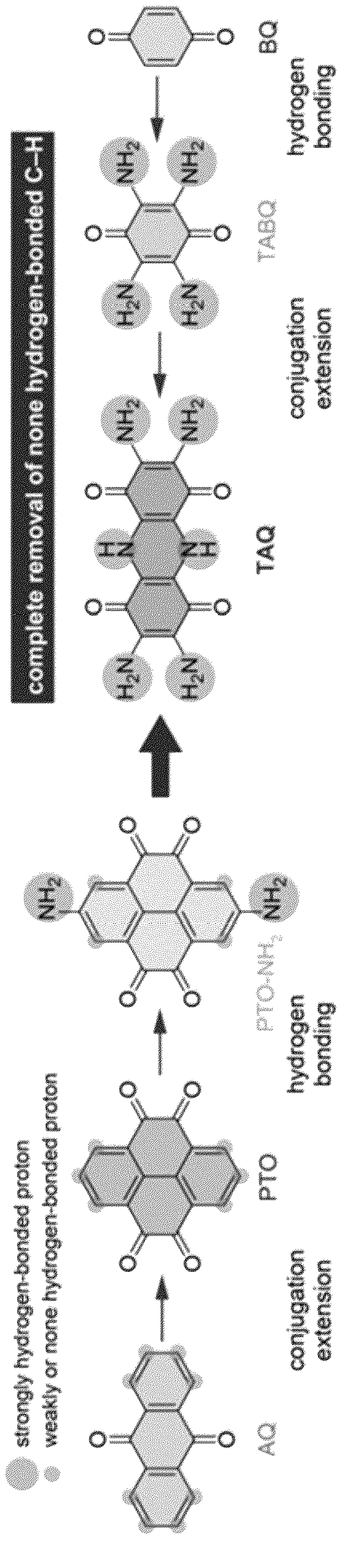
strongly hydrogen-bonded proton
weakly or none hydrogen-bonded proton
complete removal of none hydrogen-bonded C–H
AQ
conjugation extension
PTO
hydrogen bonding
PTO-$NH_2$
TAQ
conjugation extension
TABQ
hydrogen bonding
BQ

*FIG. 26A*

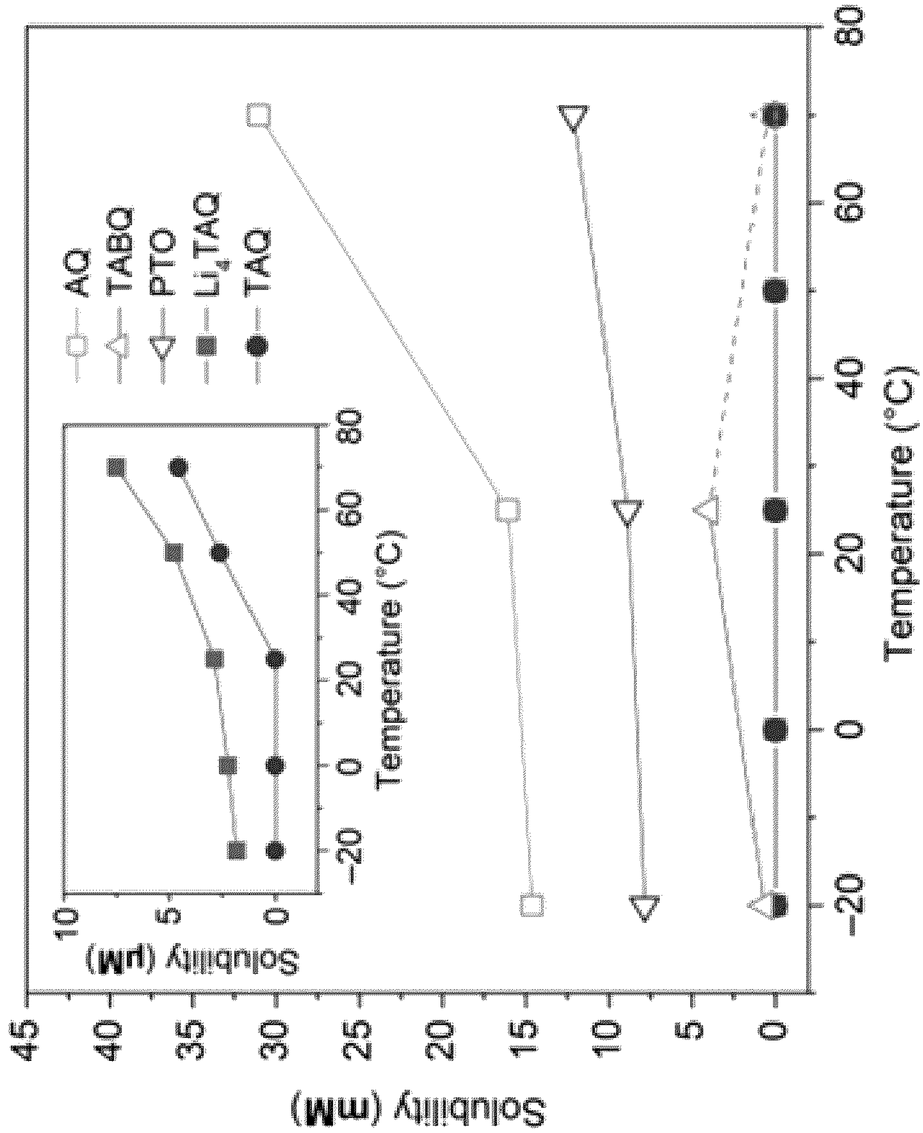
AQ
TABQ
PTO
Li4TAQ
TAQ
Temperature (°C)
Solubility (mM)
Solubility (μM)
Temperature (°C)

*FIG. 26B*

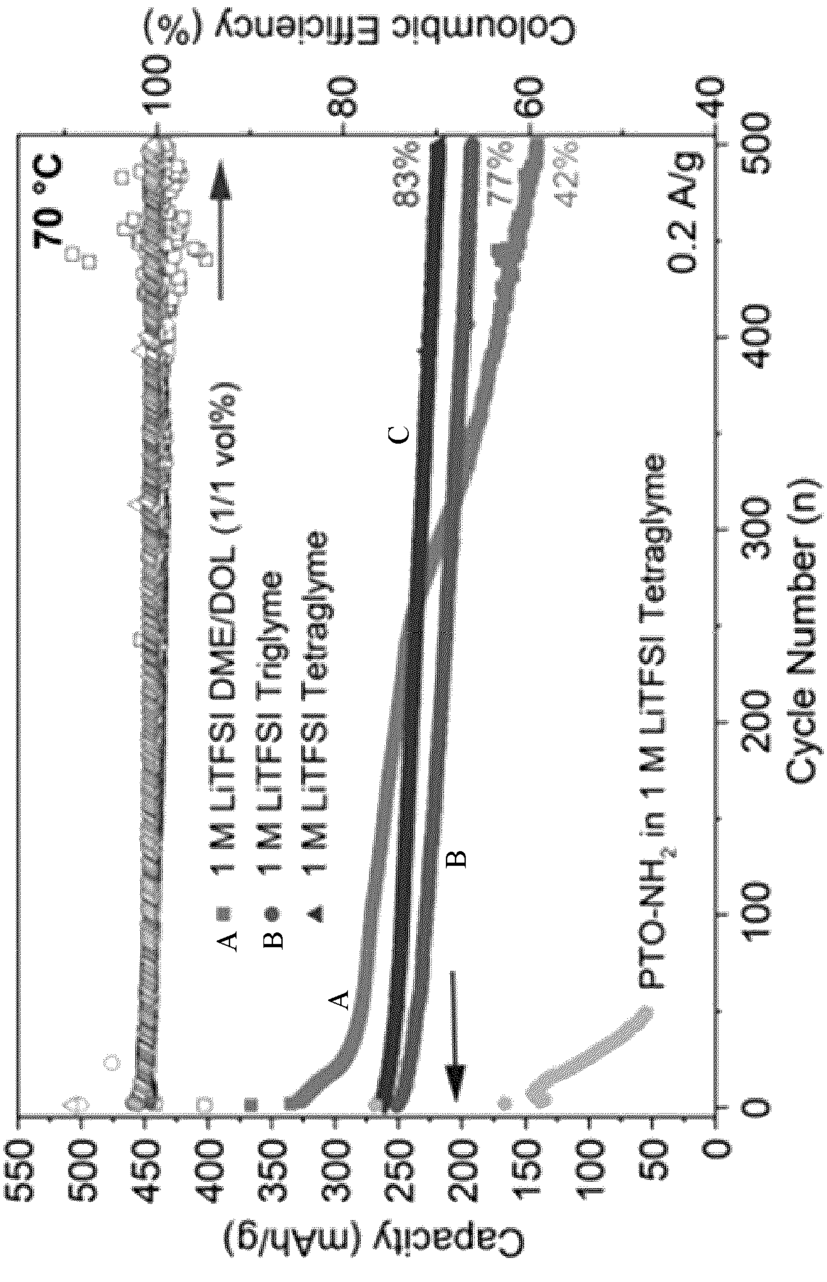

70 °C
0.2 A/g
A ■ 1 M LiTFSI DME/DOL (1/1 vol%)
B ● 1 M LiTFSI Triglyme
▲ 1 M LiTFSI Tetraglyme
A
B
C
83%
77%
42%
PTO-$NH_2$ in 1 M LiTFSI Tetraglyme
Capacity (mAh/g)
Coloumbic Efficiency (%)
Cycle Number (n)
0
100
200
300
400
500
50
150
250
350
450
550
40
60
80


FIG. 26C

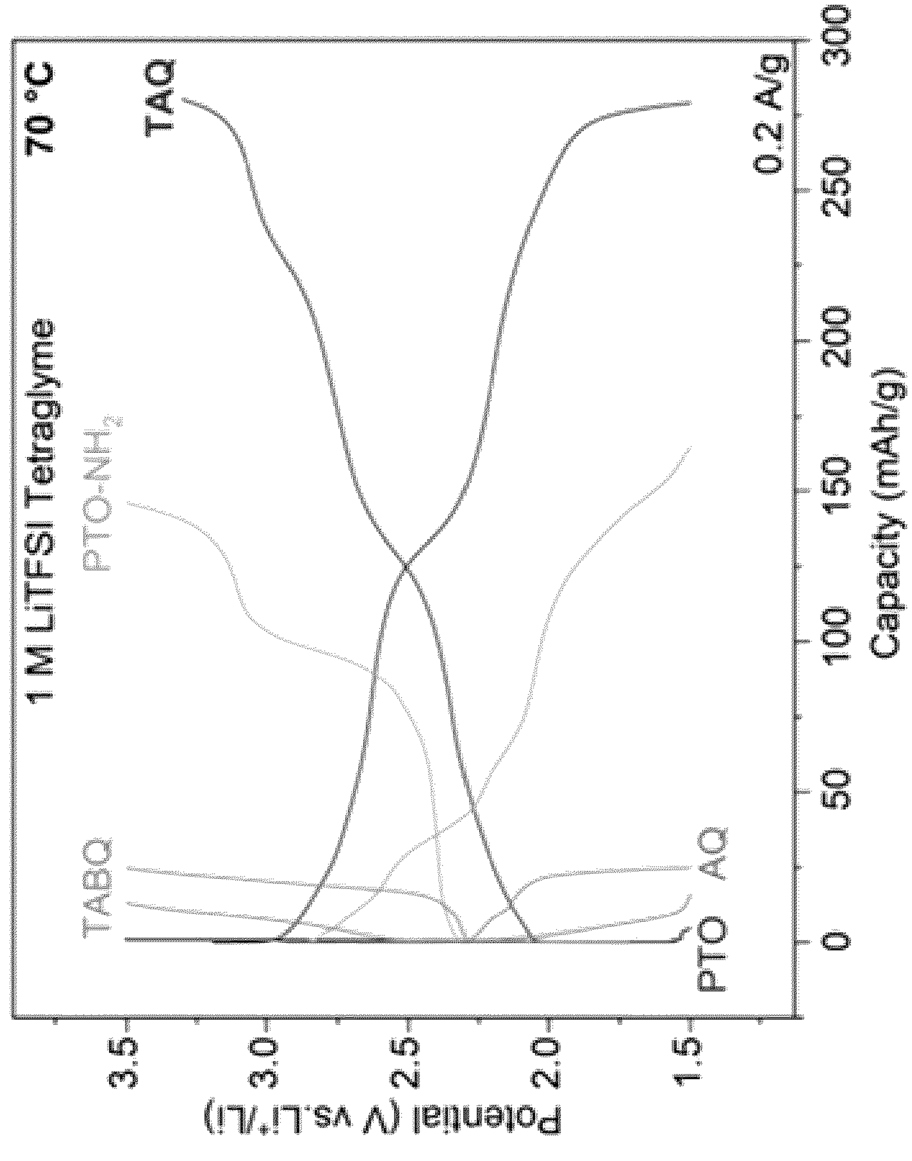
1 M LiTFSI Tetraglyme
70 °C
TAQ
0.2 A/g
PTO-NH$_2$
TABQ
AQ
PTO
Potential (V vs.Li$^+$/Li)
3.5
3.0
2.5
2.0
1.5
Capacity (mAh/g)
0
50
100
150
200
250
300

*FIG. 26D*

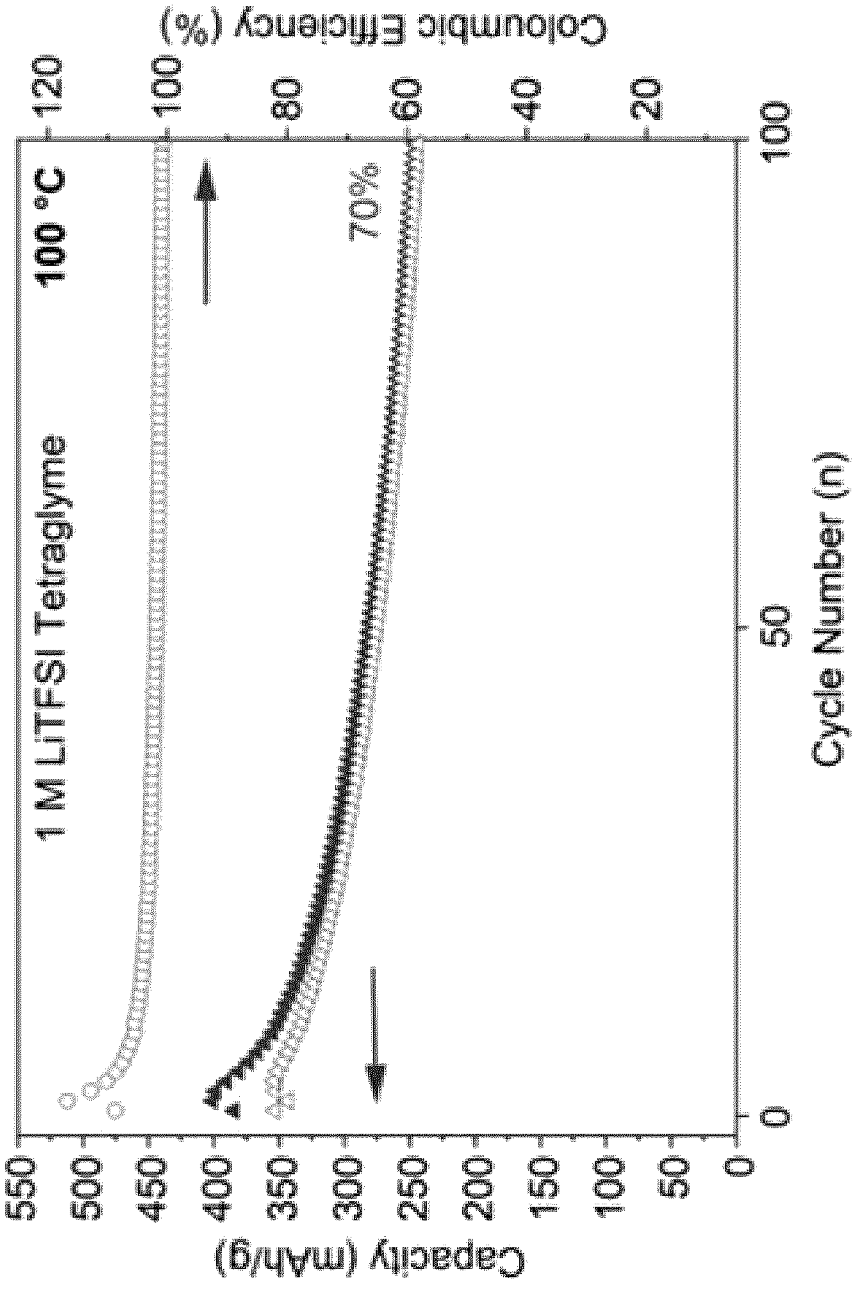
1 M LiTFSI Tetraglyme
100 °C
70%
Capacity (mAh/g)
Coloumbic Efficiency (%)
Cycle Number (n)
0
50
100
150
200
250
300
350
400
450
500
550
20
40
60
80
100
120

*FIG. 26E*

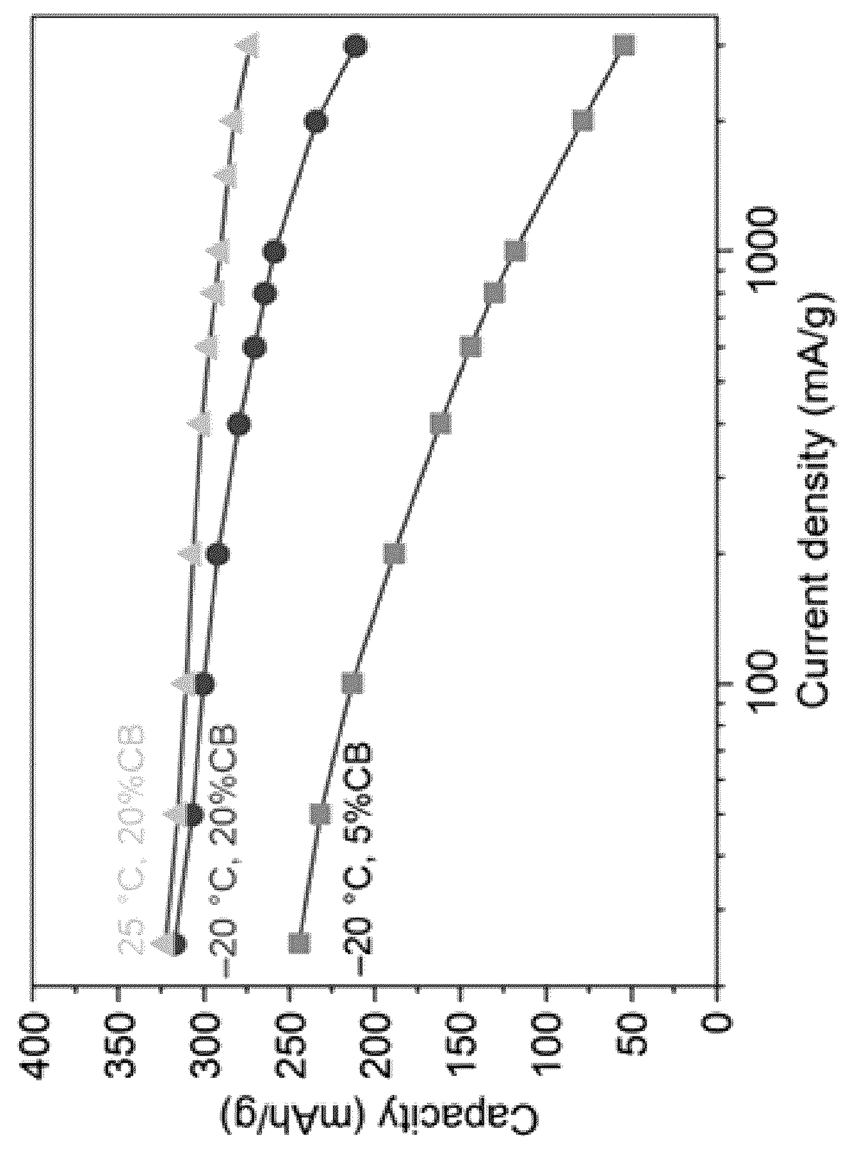

25 °C, 20%CB
−20 °C, 20%CB
−20 °C, 5%CB
Capacity (mAh/g)
0
50
100
150
200
250
300
350
400
Current density (mA/g)
100
1000


*FIG. 27A*

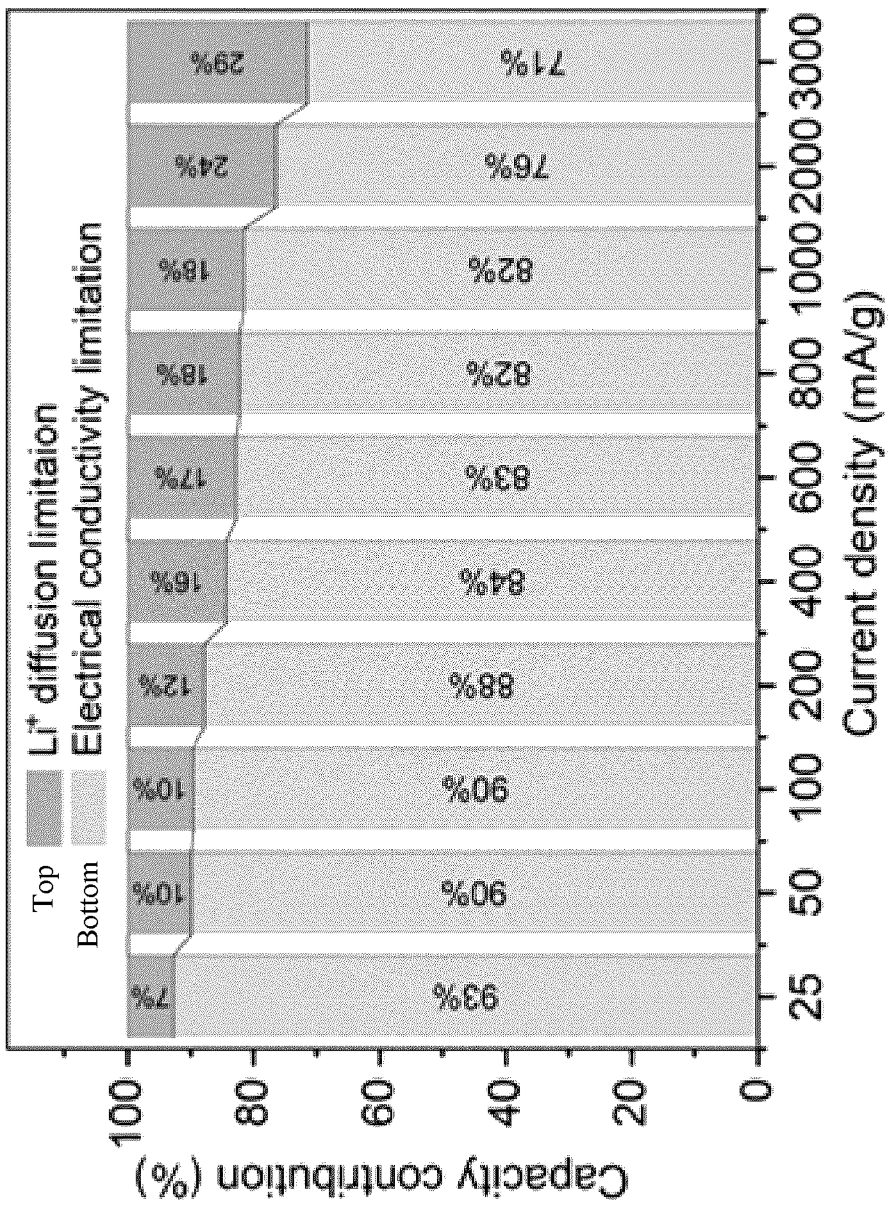
Top
Bottom
Li+ diffusion limitaion
Electrical conductivity limitation
Capacity contribution (%)
Current density (mA/g)
0
20
40
60
80
100
25
50
100
200
400
600
800
1000
2000
3000
7%
93%
10%
90%
10%
90%
12%
88%
16%
84%
17%
83%
18%
82%
18%
82%
24%
76%
29%
71%

*FIG. 27B*

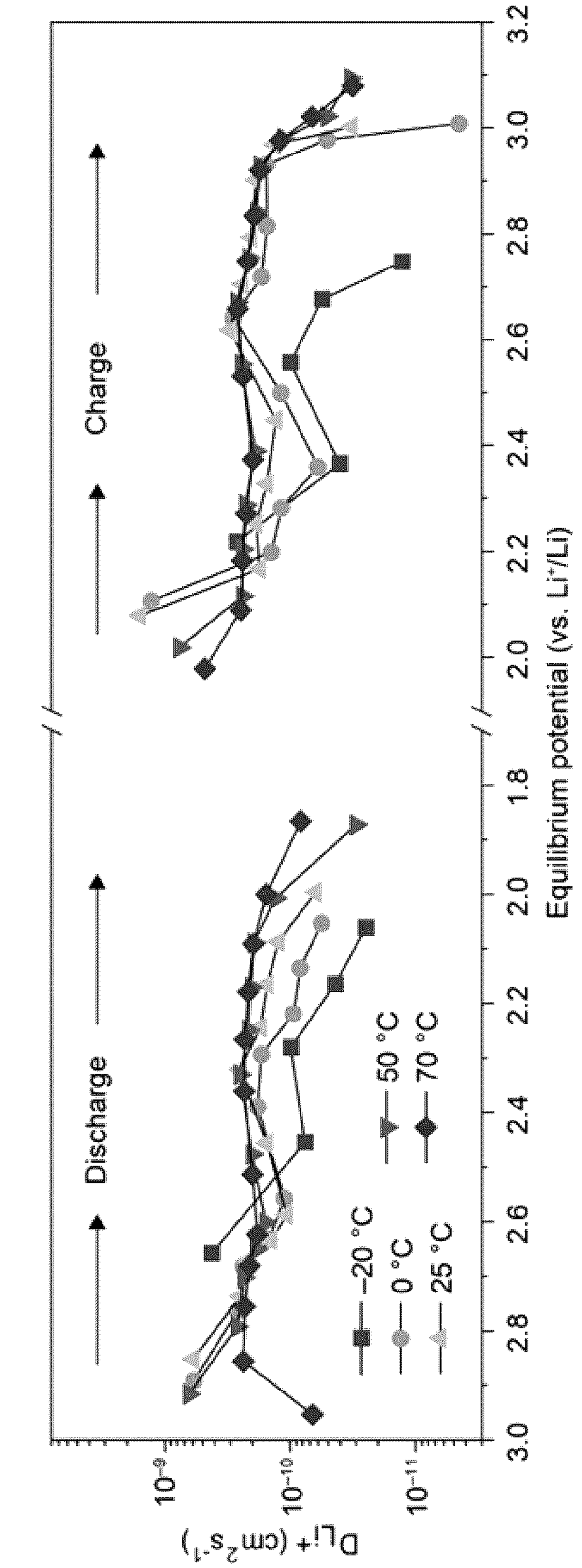
Discharge
Charge
−20 °C
0 °C
25 °C
50 °C
70 °C
$D_{Li^+}$ ($cm^2 s^{-1}$)
$10^{-9}$
$10^{-10}$
$10^{-11}$
3.0
2.8
2.6
2.4
2.2
2.0
1.8
2.0
2.2
2.4
2.6
2.8
3.0
3.2
Equilibrium potential (vs. $Li^+/Li$)

*FIG. 27C*

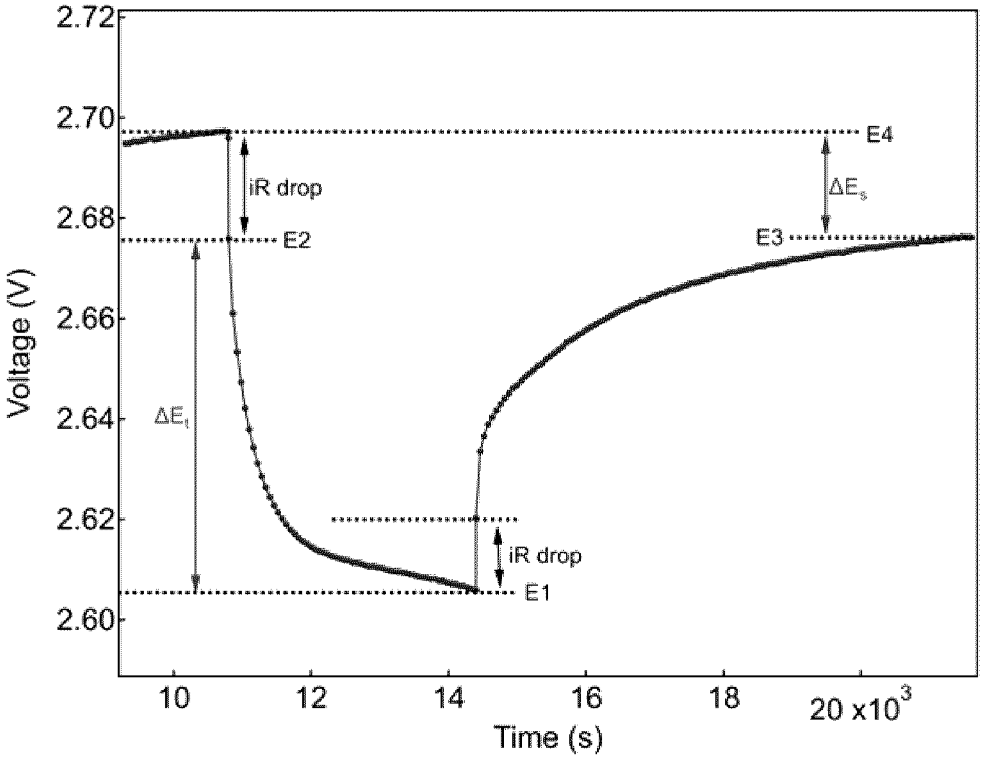


*FIG. 28A*

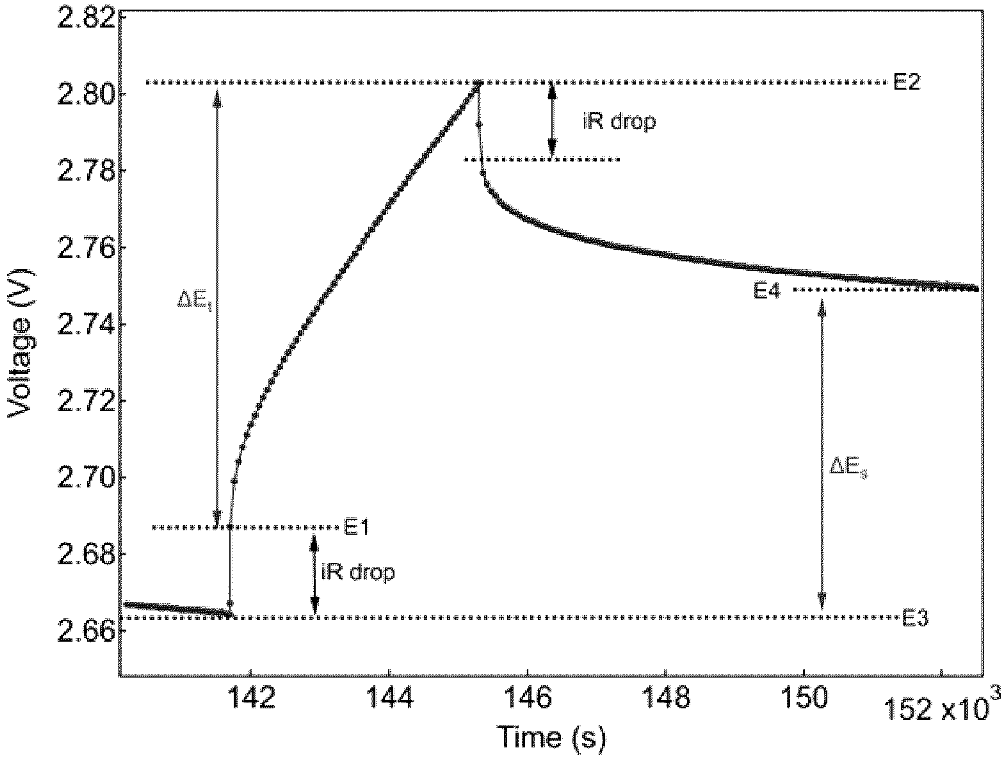


*FIG. 28B*

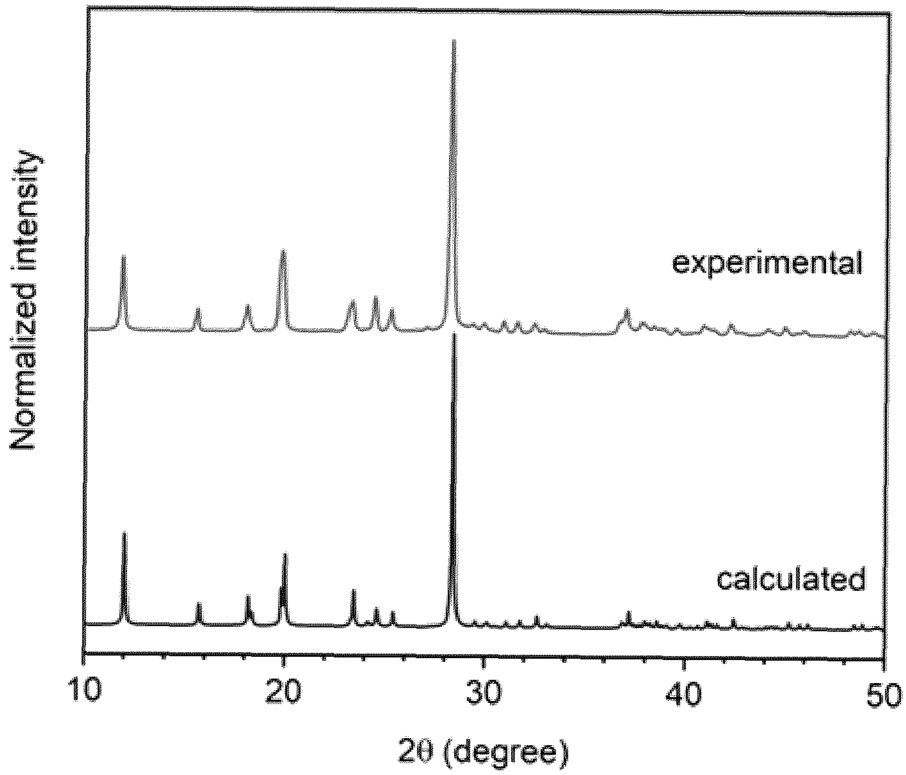


*FIG. 29A*

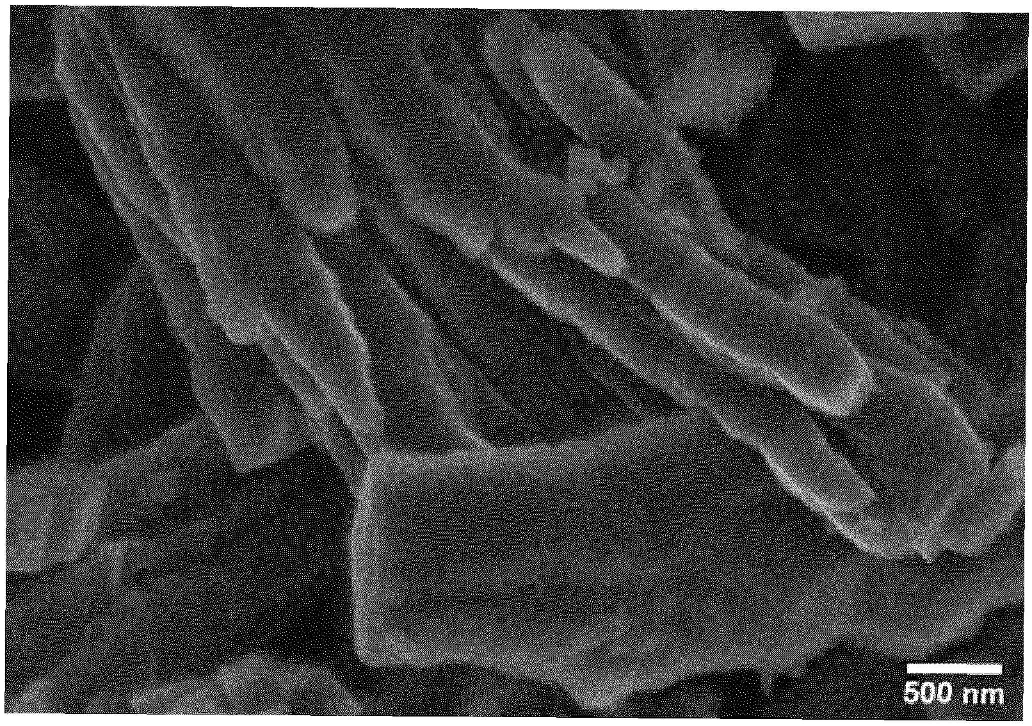


*FIG. 29B*

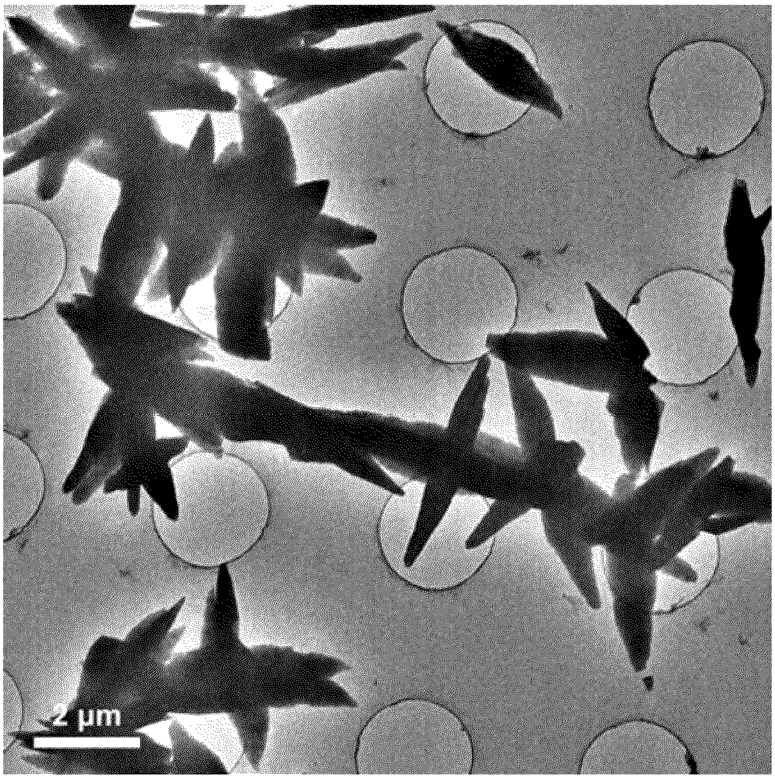


*FIG. 29C*

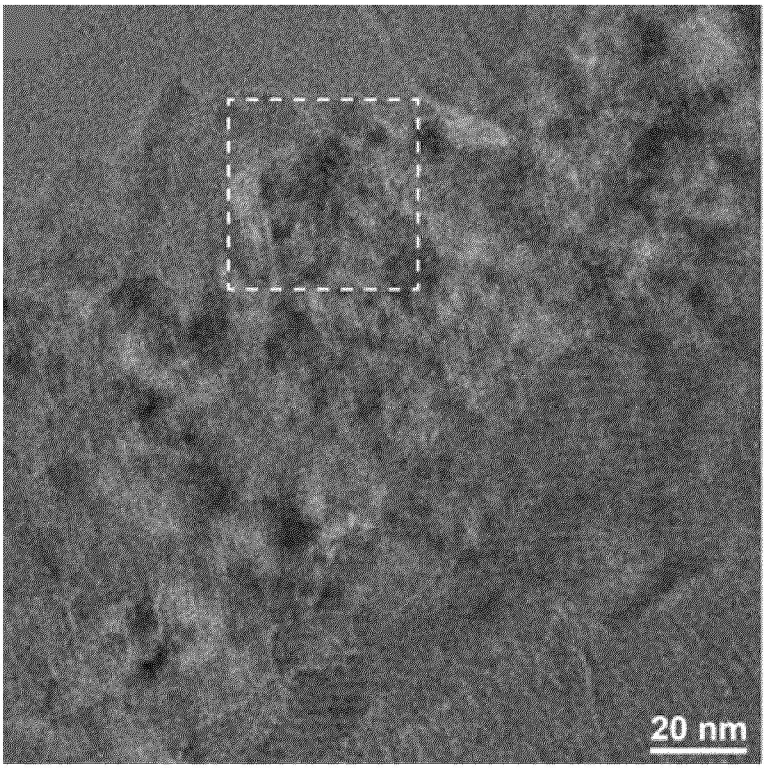


*FIG. 30A*

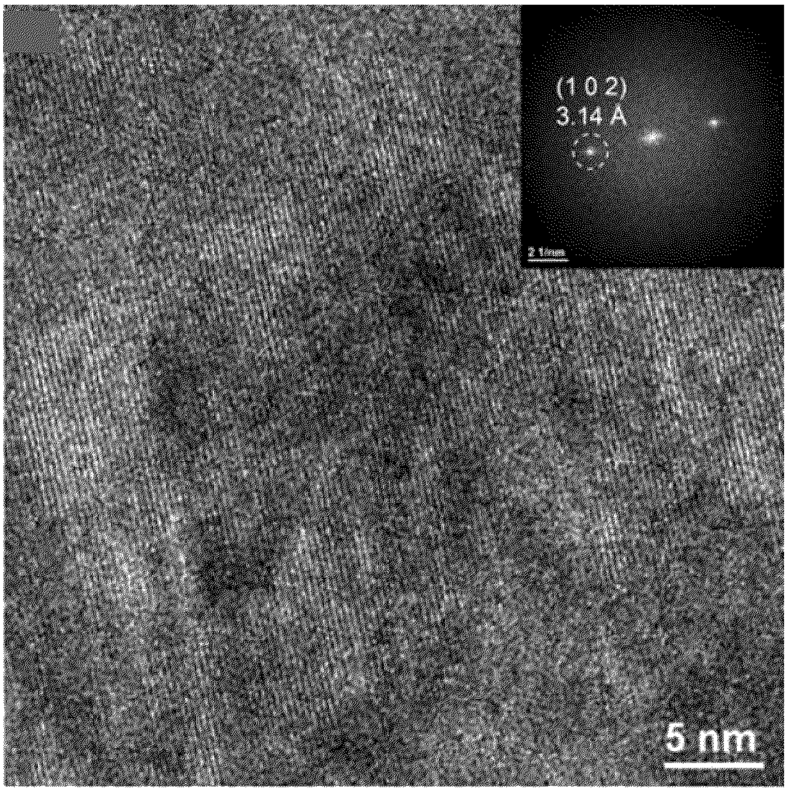


*FIG. 30B*

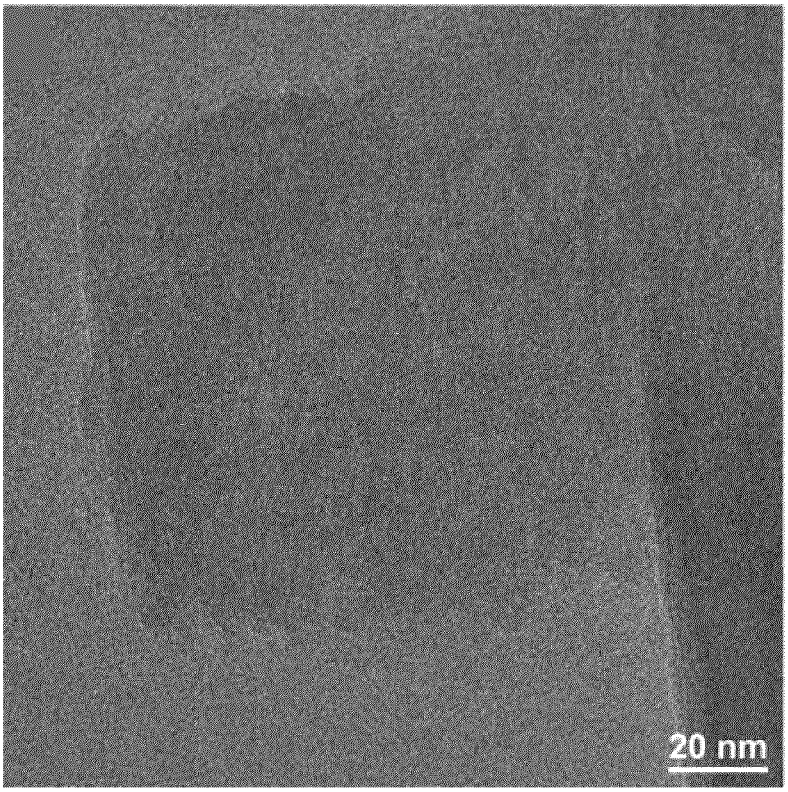


*FIG. 30C*

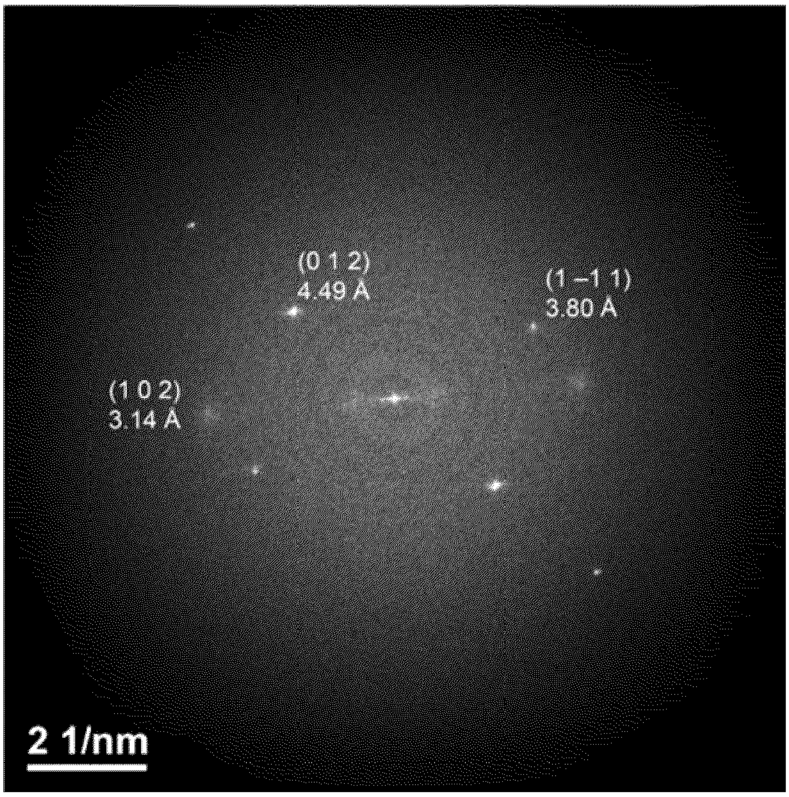


*FIG. 30D*

TAQ, 1 M LiTFSI DOL/DME (1:1 vol.%); soaking for 30 days

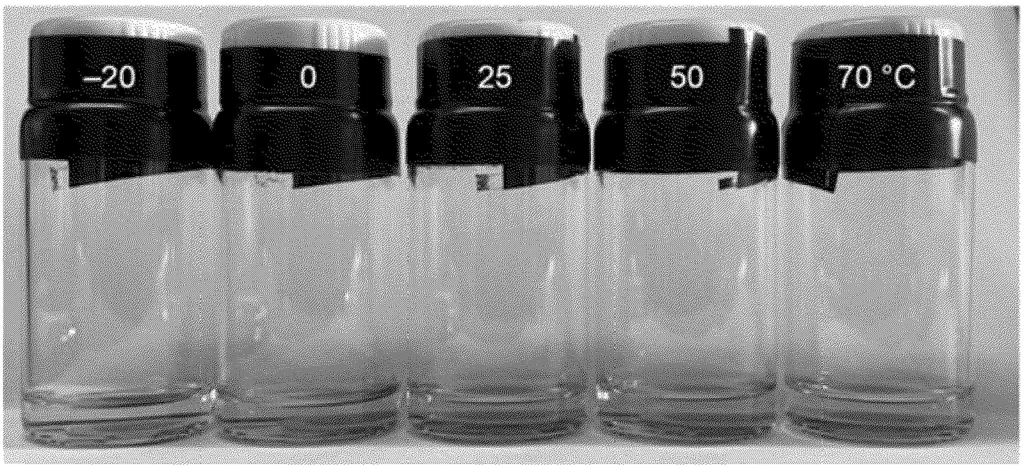


*FIG. 31*

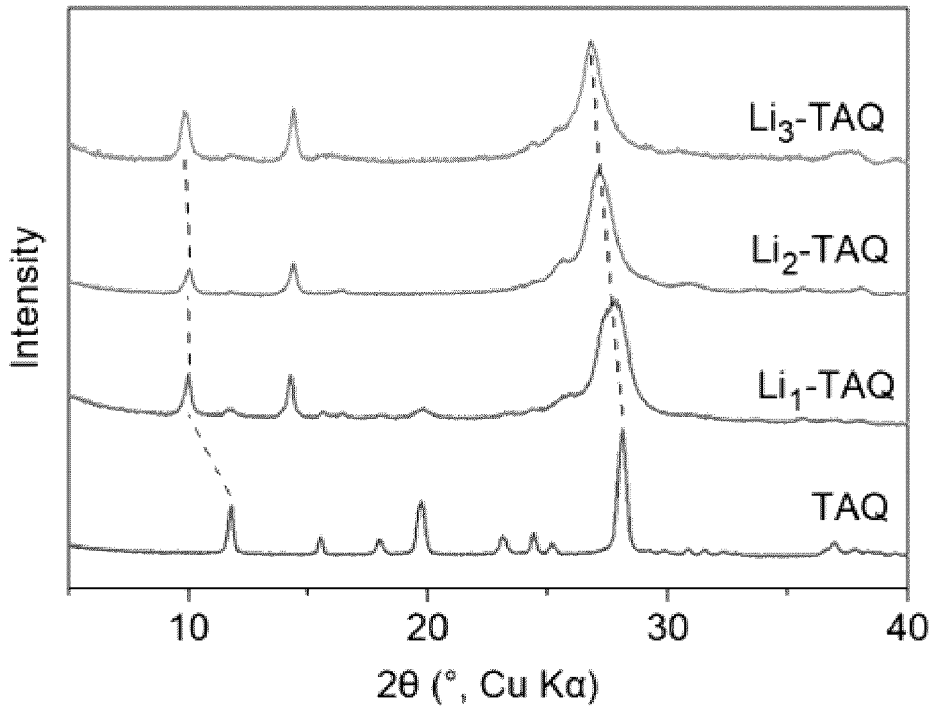


*FIG. 32*

| Temperature (°C) | Electrical conductivity (S cm$^{-1}$) | | | |
|---|---|---|---|---|
| | TAQ | $Li_1$-TAQ | $Li_2$-TAQ | $Li_3$-TAQ |
| **–20** | $3.7\times10^{-7}$ | $1.1\times10^{-4}$ | $9.7\times10^{-5}$ | $5.2\times10^{-5}$ |
| **0** | $8.3\times10^{-7}$ | $2.5\times10^{-4}$ | $2.5\times10^{-4}$ | $1.1\times10^{-4}$ |
| **25** | $2.0\times10^{-6}$ | $5.0\times10^{-4}$ | $7.3\times10^{-4}$ | $2.3\times10^{-4}$ |
| **50** | $4.5\times10^{-6}$ | $1.0\times10^{-3}$ | $1.4\times10^{-3}$ | $5.6\times10^{-4}$ |
| **70** | $8.3\times10^{-6}$ | $1.5\times10^{-3}$ | $2.2\times10^{-3}$ | $1.1\times10^{-3}$ |

*FIG. 33*

Europäisches Patentamt
European Patent Office
Office européen des brevets

# EUROPEAN SEARCH REPORT

Application Number
EP 25 16 7185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 4 345 968 A1 (MASSACHUSETTS INST TECHNOLOGY [US]) 3 April 2024 (2024-04-03)<br>* paragraph [0040] *<br>* claims 1,2,18 * | 1-8 | INV.<br>H01M4/137<br>H01M4/60<br>H01M4/62<br>H01M10/0525<br>H01M10/054 |
| X | QIANQIAN PENG ET AL: "Constructing Carbon Nanotube-Enhanced Ultra-Thin Organic Compounds with Multi-Redox Sites for "All-Temperature" Potassium-Ion Battery Anode and its Step-Wise K-Storage Mechanism",<br>SMALL, WILEY, HOBOKEN, USA,<br>vol. 20, no. 20,<br>10 December 2023 (2023-12-10), page n/a,<br>XP072637643,<br>ISSN: 1613-6810, DOI: 10.1002/SMLL.202308953<br>* the whole document * | 1-15 | |
| X | WO 2023/022750 A1 (MASSACHUSETTS INST TECHNOLOGY [US])<br>23 February 2023 (2023-02-23)<br>* claims 1,2,11 * | 1-15 | TECHNICAL FIELDS SEARCHED (IPC) |
| | | | H01M |
| X | Chen Tianyang ET AL: "High-rate, high-capacity electrochemical energy storage in hydrogen-bonded fused aromatics",<br>chemrxiv,<br>31 January 2022 (2022-01-31), XP093037650,<br>Retrieved from the Internet:<br>URL:https://chemrxiv.org/engage/api-gateway/chemrxiv/assets/orp/resource/item/61f301954b950018140c5d8e/original/high-rate-high-capacity-electrochemical-energy-storage-in-hydrogen-bonded-fused-aromatics.pdf<br>[retrieved on 2023-04-05]<br>* the whole document * | 1-15 | |

-/--

The present search report has been drawn up for all claims

1

| Place of search | Date of completion of the search | Examiner |
|---|---|---|
| The Hague | 15 August 2025 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 16 7185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHEN TIANYANG ET AL: "High-rate, high-capacity electrochemical energy storage in hydrogen-bonded fused aromatics", JOULE, vol. 7, no. 5, 17 April 2023 (2023-04-17), pages 986-1002, XP093078071, ISSN: 2542-4351, DOI: 10.1016/j.joule.2023.03.011 * the whole document * ----- | 1-15 | |
| | | | TECHNICAL FIELDS SEARCHED (IPC) |

The present search report has been drawn up for all claims

1

| Place of search | Date of completion of the search | Examiner |
|---|---|---|
| The Hague | 15 August 2025 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO.

EP 25 16 7185

This annex lists the patent family members relating to the patent documents cited in the above-mentioned European search report. The members are as contained in the European Patent Office EDP file on
The European Patent Office is in no way liable for these particulars which are merely given for the purpose of information.

15-08-2025

| Patent document cited in search report | Publication date | Patent family member(s) | Publication date |
|---|---|---|---|
| EP 4345968 A1 | 03-04-2024 | CN 119768923 A | 04-04-2025 |
| | | EP 4345968 A1 | 03-04-2024 |
| | | KR 20250073371 A | 27-05-2025 |
| | | WO 2024072426 A1 | 04-04-2024 |
| WO 2023022750 A1 | 23-02-2023 | CN 117769577 A | 26-03-2024 |
| | | EP 4157920 A1 | 05-04-2023 |
| | | JP 2024531355 A | 29-08-2024 |
| | | KR 20240046564 A | 09-04-2024 |
| | | US 2025140486 A1 | 01-05-2025 |
| | | WO 2023022750 A1 | 23-02-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2024022179 W
- EP 24167910
- US 2022013925 W
- US 2022047839 W